(19) 

**Europäisches Patentamt**

**European Patent Office**

**Office européen des brevets**

(11) **EP 4 668 609 A1**

(12) **EUROPEAN PATENT APPLICATION**
published in accordance with Art. 153(4) EPC

(43) Date of publication:
**24.12.2025 Bulletin 2025/52**

(21) Application number: **24757204.3**

(22) Date of filing: **14.02.2024**

(51) International Patent Classification (IPC):
$H04B\ 7/06$ (2006.01)     $H04W\ 52/02$ (2009.01)
$H04B\ 7/08$ (2006.01)     $H04W\ 72/04$ (2023.01)
$H04B\ 17/345$ (2015.01)     $H04W\ 24/08$ (2009.01)
$H04W\ 52/36$ (2009.01)     $H04W\ 72/23$ (2023.01)

(52) Cooperative Patent Classification (CPC):
H04B 7/06; H04B 7/08; H04B 17/345; H04W 24/08;
H04W 52/02; H04W 52/36; H04W 72/04;
H04W 72/23

(86) International application number:
**PCT/KR2024/002081**

(87) International publication number:
**WO 2024/172482 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.02.2023 KR 20230020866
06.04.2023 KR 20230045587
12.05.2023 KR 20230061920
04.08.2023 KR 20230102353
07.08.2023 KR 20230103162
26.09.2023 KR 20230129696**

(71) Applicant: **LG Electronics Inc.
Yeongdeungpo-gu
Seoul 07336 (KR)**

(72) Inventors:
• **KIM, Seonwook**
  Seoul 06772 (KR)
• **LEE, Youngdae**
  Seoul 06772 (KR)
• **KIM, Hyungtae**
  Seoul 06772 (KR)
• **YANG, Suckchel**
  Seoul 06772 (KR)
• **KANG, Jiwon**
  Seoul 06772 (KR)
• **PARK, Haewook**
  Seoul 06772 (KR)
• **MYUNG, Sechang**
  Seoul 06772 (KR)

(74) Representative: **Plasseraud IP
104 Rue de Richelieu
CS92104
75080 Paris Cedex 02 (FR)**

(54) **DEVICE AND METHOD FOR REPORTING CHANNEL STATE INFORMATION ON BASIS OF SUB-CONFIGURATIONS IN WIRELESS COMMUNICATION SYSTEM**

(57)     The purpose of the present disclosure is to report channel state information (CSI) on the basis of sub-configurations in a wireless communication system, and the method performed by a terminal comprises the steps of: receiving configuration information for a CSI report comprising a list of a plurality of sub-configurations; and transmitting, to a base station, CSI comprising a measurement result based on at least one CSI-RS related to the CSI report.

EP 4 668 609 A1

# FIG. 24

base station
(2420)

UE
(2410)

Configure CSI-ReportConfig with
X CSI-RS resource sets as CMR(S2401)

Indicate Y CSI-RS resource sets
out of X sets for which UE can
perform CSI measurement(S2403)

S2405 — Perform CSI measurement for
Y CSI-RS resource sets and
choose Z CSI-RS resource sets
out of Y sets for which
corresponds to best-Z CSI

Report CSI corresponding to
Z CSI-RS resource sets(S2407)

**Description**

**TECHNICAL FIELD**

The following description relates to a wireless communication system, and to a device and method for reporting channel state information (CSI) based on sub-configurations in a wireless communication system.

**BACKGROUND ART**

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

In particular, as a large number of communication devices require a large communication capacity, the enhanced mobile broadband (eMBB) communication technology, as compared to the conventional radio access technology (RAT), is being proposed. In addition, not only massive machine type communications (massive MTC), which provide a variety of services anytime and anywhere by connecting multiple devices and objects, but also a communication system considering a service/user equipment (UE) sensitive to reliability and latency is being proposed. Various technical configurations for this are being proposed.

**DISCLOSURE**

**TECHNICAL PROBLEM**

The present disclosure relates to a device and a method for effectively reporting channel state information (CSI) based on sub-configurations in a wireless communication system.

The present disclosure relates to a device and a method for signaling a configuration for CSI reporting including sub-configurations in a wireless communication system.

The present disclosure relates to a device and a method for configuring CSI reporting including sub-configurations distinguished by the number of antenna ports (AP) in a wireless communication system.

The present disclosure relates to a device and a method for indicating APs configured in a sub-configuration in a bitmap in a wireless communication system.

The present disclosure relates to a device and a method for configuring CSI reporting including sub-configurations distinguished by power offset values in a wireless communication system.

The present disclosure relates to a device and a method for configuring CSI reporting including sub-configurations distinguished by a combination of the number of APs and power offset values in a wireless communication system.

The present disclosure relates to a device and a method for transmitting CSI reporting based on sub-configurations and on/off states of APs in a wireless communication system.

The present disclosure relates to a device and a method for signaling on/off states of APs of a base station in a wireless communication system.

The present disclosure relates to a device and a method for performing beam management using CSI reporting including sub-configurations in a wireless communication system.

The present disclosure relates to a device and a method for transmitting CSIs corresponding to sub-configurations in a distributed manner in a wireless communication system.

The technical purposes to be achieved in the present disclosure are not limited to the matters mentioned above, and other technical problems not mentioned may be considered by those skilled in the art to which the technical configuration of the present disclosure is applied from the embodiments of the present disclosure to be described below.

**TECHNICAL SOLUTION**

In one example of the present disclosure, a method performed by a UE in a wireless communication system may comprise: receiving configuration information for a channel state information (CSI) report including a list of a plurality of sub-configurations; and transmitting, to a base station, CSI including measurement result based on at least one CSI-reference signal (RS) related to the CSI report. The sub-configurations are distinguished by at least one of a different power offset or a different port subset, and the at least one CSI-RS includes a none zero power (NZP) CSI-RS configured for interference measurement, when a port subset indicator is not configured in the sub-configurations.

In one example of the present disclosure, a method performed by a UE in a wireless communication system may comprise a transceiver and a processor connected to the transceiver, wherein the processor may be configured to: receive configuration information for a channel state information (CSI) report including a list of a plurality of sub-configurations; and transmit, to a base station, CSI including a measurement result based on at least one CSI-reference signal (RS) related to the CSI report. The sub-configurations are distinguished by at least one of a different power offset or a different port subset, and the at least one CSI-RS includes none zero power (NZP) CSI-RS configured for interference measurement, when a port subset indicator is not configured in the sub-configurations.

In one example of the present disclosure, a communication device may comprise at least one processor, and at least one computer memory connected to the at least one processor and storing instructions that direct operations when executed by the at least one processor, the operations comprising: receiving configuration information for a channel state information (CSI) report including a list of a plurality of sub-configurations; and transmitting, to a base station, CSI including a measurement result based on at least one CSI-reference signal (RS) related to the CSI report. The sub-configurations are distinguished by at least one of a different power offset or a different port subset, and the at least one CSI-RS includes none zero power (NZP) CSI-RS configured for interference measurement, when a port subset indicator is not configured in the sub-configurations.

In one example of the present disclosure, a non-transitory computer-readable medium storing at least one instruction may comprise the at least one instruction executable by a processor, wherein the at least one instruction causing a device, the processor, to: receive configuration information for a channel state information (CSI) report including a list of a plurality of sub-configurations; and transmit, to a base station, CSI including a measurement result based on at least one CSI-reference signal (RS) related to the CSI report. The sub-configurations are distinguished by at least one of a different power offset or a different port subset, and the at least one CSI-RS includes none zero power (NZP) CSI-RS configured for interference measurement, when a port subset indicator is not configured in the sub-configurations.

The aspects described above of the present disclosure are merely some of the preferred embodiments of the present disclosure, and various embodiments reflecting the technical features of the present disclosure may be derived and understood by those skilled in the art based on the detailed description of the present disclosure described below.

## ADVANTAGEOUS EFFECTS

The following effects may be achieved by embodiments based on the present disclosure.

According to the present disclosure, the energy consumption of a base station may be reduced.

The effects obtainable from the embodiments of the present disclosure are not limited to the effects mentioned above, and other effects not mentioned may be clearly derived and understood by those skilled in the art to which the technical configuration of the present disclosure is applied from the description of the embodiments of the present disclosure below. That is, unintended effects resulting from implementing the configuration described in the present disclosure may also be derived by those skilled in the art from the embodiments of the present disclosure.

## BRIEF DESCRIPTION OF THE DRAWINGS

FIG. 1 illustrates an example of a structure of a wireless communication system to which the present disclosure may be applied.

FIG. 2 illustrates an example of a wireless device applicable to the present disclosure.

FIG. 3 illustrates a frame structure in a wireless communication system to which the present disclosure may be applied.

FIG. 4 illustrates an example of a resource grid in a wireless communication system to which the present disclosure may be applied.

FIG. 5 illustrates an example of a physical resource block in a wireless communication system to which the present disclosure may be applied.

FIG. 6 illustrates an example of a slot structure in a wireless communication system to which the present disclosure may be applied.

FIG. 7 illustrates examples of physical channels used in a wireless communication system, to which the present disclosure may be applied, and an example of a general signal transmission and reception method using the physical channels.

FIG. 8 illustrates a diagram illustrating an example in which a physical channel is mapped in a slot to which various embodiments are applicable.

FIG. 9 illustrates an example of beams applicable to the present disclosure.

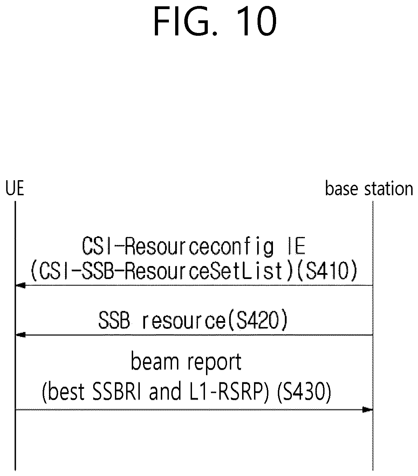

FIG. 10 illustrates an example of a downlink beam management (DL BM) procedure using an synchronization signal block (SSB) applicable to the present disclosure.

FIG. 11 illustrates an example of a DL BM procedure using a channel state information (CSI)-reference signal (RS) applicable to the present disclosure.

FIG. 12 illustrates an example of a procedure for determining a reception beam of a UE applicable to the present disclosure.

FIG. 13 illustrates an example of a procedure for determining a transmission beam of a base station applicable to the present disclosure.

FIG. 14 illustrates an example of resource allocation in time and frequency domains applicable to the present disclosure.

FIG. 15 illustrates an example of beam sweeping for uplink beam management (UL BM) using a sounding reference signal (SRS) applicable to the present disclosure.

FIG. 16 illustrates an example of a UL BM procedure using an SRS applicable to the present disclosure.

FIG. 17 illustrates an example of an operation procedure of a base station supporting a network energy saving (NES) technology applicable to the present disclosure.

FIG. 18 illustrates an example of a procedure for CSI measurement and reporting applicable to the present disclosure.

FIGS. 19a to 19c illustrate examples of states of antenna elements according to an embodiment of the present disclosure.

FIG. 20 illustrates an example of a procedure for performing CSI reporting based on sub-configurations according to an embodiment of the present disclosure.

FIGS. 21a to 21k illustrate examples of configuration information for CSI reporting according to various embodiments of the present disclosure.

FIG. 22 illustrates an example of a procedure for reporting CSI based on an indication for on/off of spatial elements according to an embodiment of the present disclosure.

FIG. 23 illustrates an example of a procedure for transmitting CSI reporting in a time division multiplexing (TDM) manner according to an embodiment of the present disclosure.

FIG. 24 illustrates an example of a CSI feedback procedure according to an embodiment of the present disclosure.

## MODE FOR INVENTION

The embodiments of the present disclosure described below are combinations of elements and features of the present disclosure in specific forms. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions or elements of any one embodiment may be included in another embodiment and may be replaced with corresponding constructions or features of another embodiment.

In the description of the drawings, procedures or steps which render the scope of the present disclosure unnecessarily ambiguous will be omitted and procedures or steps which can be understood by those skilled in the art will be omitted.

Throughout the specification, when a certain portion "includes" or "comprises" a certain component, this indicates that other components are not excluded and may be further included unless otherwise noted. The terms "unit", "-or/er" and "module" described in the specification indicate a unit for processes at least one function or operation, which may be implemented by hardware, software or a combination thereof. In addition, the terms "a or an", "one", "the" etc. may include a singular representation and a plural representation in the context of the present disclosure (more particularly, in the context of the following claims) unless indicated otherwise in the specification or unless context clearly indicates otherwise.

In the embodiments of the present disclosure, a description is mainly made of a data transmission and reception relationship between a base station (BS) and a mobile station. A BS refers to a terminal node of a network, which directly communicates with a mobile station. A specific operation described as being performed by the BS may be performed by an upper node of the BS.

Namely, it is apparent that, in a network comprised of a plurality of network nodes including a BS, various operations performed for communication with a mobile station may be performed by the BS, or network nodes other than the BS. The term "BS" may be replaced with a fixed station, a Node B, an evolved Node B (eNode B or eNB), an advanced base station (ABS), an access point, etc.

In the embodiments of the present disclosure, the term terminal may be replaced with a UE, a mobile station (MS), a subscriber station (SS), a mobile subscriber station (MSS), a mobile terminal, an advanced mobile station (AMS), etc.

A transmitter is a fixed and/or mobile node that provides a data service or a voice service and a receiver is a fixed and/or mobile node that receives a data service or a voice service. Therefore, a mobile station may serve as a transmitter and a BS may serve as a receiver, on an uplink (UL). Likewise, the mobile station may serve as a receiver and the BS may serve as a transmitter, on a downlink (DL).

The embodiments of the present disclosure may be supported by standard specifications disclosed for at least one of wireless access systems including an Institute of Electrical and Electronics Engineers (IEEE) 802.xx system, a 3rd Generation Partnership Project (3GPP) system, a 3GPP Long Term Evolution (LTE) system, 3GPP 5th generation (5G) new radio (NR) system, and a 3GPP2 system. In particular, the embodiments of the present disclosure may be supported by the standard specifications, 3GPP TS 36.211, 3GPP TS 36.212, 3GPP TS 36.213, 3GPP TS 36.321 and 3GPP TS 36.331.

In addition, the embodiments of the present disclosure are applicable to other radio access systems and are not limited to the above-described system. For example, the embodiments of the present disclosure are applicable to systems applied after a 3GPP 5G NR system and are not limited to a specific system.

That is, steps or parts that are not described to clarify the technical features of the present disclosure may be supported by those documents. Further, all terms as set forth herein may be explained by the standard documents.

Reference will now be made in detail to the embodiments of the present disclosure with reference to the accompanying drawings. The detailed description, which will be given below with reference to the accompanying drawings, is intended to explain exemplary embodiments of the present disclosure, rather than to show the only embodiments that can be implemented according to the disclosure.

The following detailed description includes specific terms in order to provide a thorough understanding of the present disclosure. However, it will be apparent to those skilled in the art that the specific terms may be replaced with other terms without departing the technical spirit and scope of the present disclosure.

The embodiments of the present disclosure can be applied to various radio access systems such as code division multiple access (CDMA), frequency division multiple access (FDMA), time division multiple access (TDMA), orthogonal frequency division multiple access (OFDMA), single carrier frequency division multiple access (SC-FDMA), etc.

Hereinafter, in order to clarify the following description, a description is made based on a 3GPP communication system (e.g., LTE, NR, etc.), but the technical spirit of the present disclosure is not limited thereto. LTE may refer to technology after 3GPP TS 36.xxx Release 8. In detail, LTE technology after 3GPP TS 36.xxx Release 10 may be referred to as LTE-A, and LTE technology after 3GPP TS 36.xxx Release 13 may be referred to as LTE-A pro. 3GPP NR may refer to technology after TS 38.xxx Release 15. 3GPP 6G may refer to technology TS Release 17 and/or Release 18. "xxx" may refer to a detailed number of a standard document. LTE/NR/6G may be collectively referred to as a 3GPP system.

3GPP 6G may mean a post-3GPP NR technology based on a 3GPP system. 3GPP 6G may not limited to a Release or a specific TS document, and its name may have a different form from 3GPP 6G. That is, 3GPP 6G may mean a technology introduced after 3GPP NR and is not limited to a specific form.

The description below will mainly focus on a 3GPP NR system but is not limited thereto and may be applied to 3GPP 6G. Furthermore, what is described below may be partially modified to be used in consideration of a 3GPP 6G system and is not limited to a specific form. However, hereinafter, for convenience of explanation, the 3GPP NR system will be mainly described. For background arts, terms, abbreviations, etc. used in the present disclosure, refer to matters described in the standard documents published prior to the present disclosure. For example, reference may be made to the standard documents 36.xxx and 38.xxx.

Overall System

As more communication devices require larger communication capacities, the need for mobile broadband communication more enhanced than the existing Radio Access Technology (RAT) is on the rise. In addition, massive machine type communication (MTC), which provides a variety of services anytime and anywhere by connecting a plurality of devices and things, is also one of main issues worthy of consideration in next-generation communication. Furthermore, a communication system design considering a service/a terminal sensitive to reliability and latency is also under discussion. Thus, introduction of a next-generation RAT considering enhanced mobile broadband communication (eMBB), massive MTC (mMTC), ultra-reliable and low latency communication (URLLC) and the like is under discussion, and for convenience, a corresponding technology is referred to as NR in the present disclosure. NR is an expression which represents an example of a 5G RAT.

A new RAT system including NR uses an OFDM transmission method or a similar transmission method. The new RAT system may follow OFDM parameters different from OFDM parameters of LTE. Alternatively, the new RAT system may follow a numerology of the existing LTE/LTE-A as it is but support a wider system bandwidth (e.g., 100 MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

In addition, a new RAT system including 6G may be considered as a next-generation RAT. The new RAT system including 6G may consider i) very high data speed per device, ii) a large number of connected devices, iii) global connectivity, iv) very low latency, v) reduction of energy consumption of battery-free IoT devices, vi) ultra-high reliability connection, and vii) a connected intelligence with machine learning ability, but is not limited thereto. The new RAT system including 6G may consider using a terahertz (THz) frequency band, that is, a frequency higher than an NR system, for a wider bandwidth and a higher transmission speed in consideration of what is described above. The RAT system including 6G may overcome an existing limitation by applying artificial.

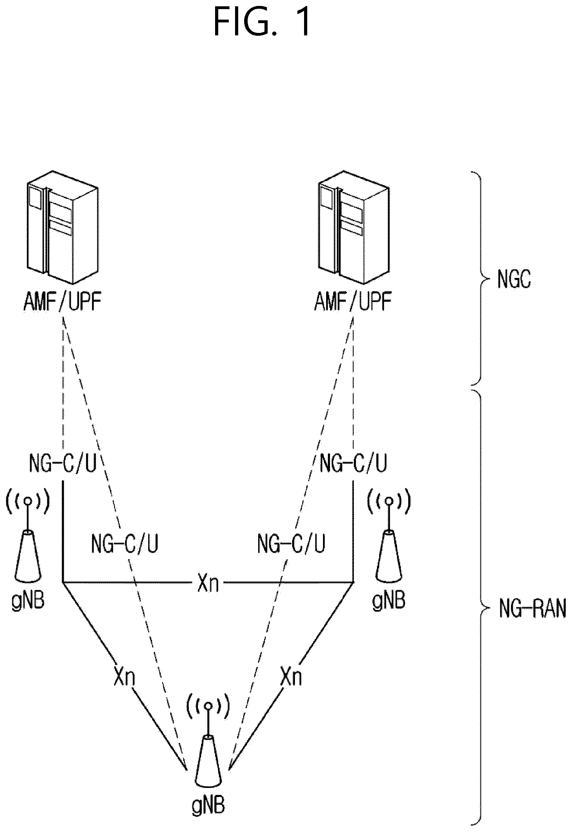

FIG. 1 exemplifies a structure of a wireless communication system to which the present disclosure may be applied. Referring to FIG. 1 , NG-RAN consists of gNBs that provide control plane (RRC) protocol terminations for a NG-Radio Access (NG-RA) user plane (that is, a new access stratum (AS) sublayer/packet data convergence protocol (PDCP)/radio link control (RLC)/MAC/PHY) and a UE. The gNBs are interconnected through a Xn interface. In addition, the gNBs are connected to a new generation core (NGC) through an N2 interface. More specifically, the gNBs are connected to a access and mobility management function (AMF) through an N2 interface and are connected to a user plane function (UPF) through an N3 interface. FIG. 1 may be a structure based on an NR system, the structure of FIG. 1 may be used in a 6G system either as it is or by being partially modified and is not limited to a specific form.

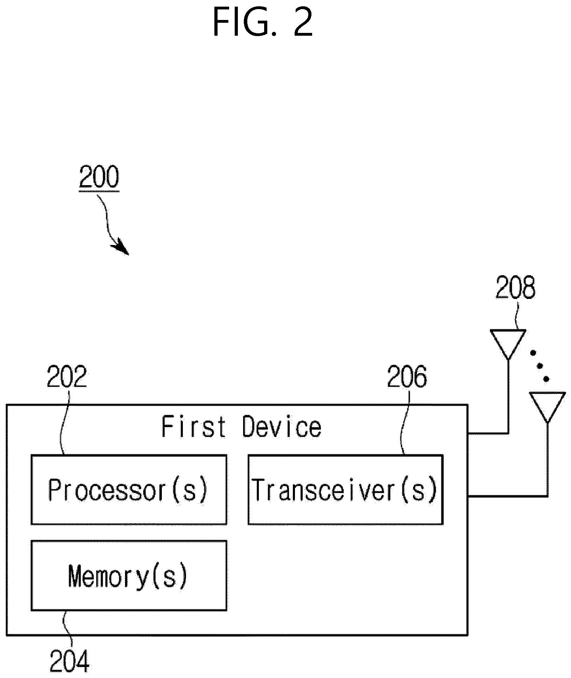

FIG. 2 illustrates an example of a wireless device applicable to the present disclosure.

Referring to FIG. 2, a wireless device 200 may transmit/receive a radio signal through various wireless access technologies (e.g., LTE, LTE-A, LTE-A pro, NR, 5G, 5G-A, 6G). The wireless device 200 may include at least one processor 202 and at least one memory 204 and additionally further include at least one transceiver 206 and/or at least one antenna 208.

The processor 202 may be configured to control the memory 204 and/or the transceiver 206 and to implement the descriptions, functions, procedures, proposals, methods, and/or operation flowcharts disclosed in this document. For example, the processor 202 may generate first information/signal by processing information in the memory 204 and then transmit a radio signal including the first information/signal through the transceiver 206. In addition, the processor 202 may receive a radio signal including second information/signal through the transceiver 206 and then store information obtained from signal processing of the second information/signal in the memory 204. The memory 204 may be connected to the processor 202 and store a variety of information associated with an operation of the processor 202. For example, the memory 204 may store a software code including instructions for implementing some or all of processes controlled by the processor 202 or for implementing the descriptions, functions, procedures, proposals, methods, and/or operation flowcharts disclosed in this document. Herein, the processor 202 and the memory 204 may be a part of a communication modem/circuit/chip designed for implementing a wireless communication technology. The transceiver 206 may be connected to the processor 202 and transmit and/or receive a radio signal through the at least one antenna 208. The transceiver 206 may be a transmitter and/or a receiver. The transceiver 206 may be used interchangeably with a radio frequency (RF) unit. In the present disclosure, a wireless device may mean a communication modem/circuit/chip.

Hereinafter, a hardware element of the wireless device 200 will be described in further detail. Although not being limited thereto, at least one protocol layer may be implemented by the at least one processor 202. For example, the at least one processor 202 may implement at least one layer (e.g., a functional layer such as physical (PHY), media access control (MAC), radio link control (RLC), packet data convergence protocol (PDCP), radio resource control (RRC), and service data adaptation protocol (SDAP)). The at least one processor 202 may generate at least one protocol data unit (PDU) and/or at least one service data unit (SDU) according to the descriptions, functions, procedures, proposals, methods, and/or operation flowcharts disclosed in this document. The at least one processor 202 may generate a message, control information, data, or information according to the descriptions, functions, procedures, proposals, methods, and/or operation flowcharts disclosed in this document. The at least one processor 202 may generate a signal (e.g., a baseband signal) including a PDU, an SDU, a message, control information, data, or information according to a function, a procedure, a suggestion and/or a method, which are disclosed in the present document, and provide the signal to the at least one transceiver 206. The at least one processor 202 may receive a signal (e.g., a baseband signal) from the at least one transceiver 206 and obtain a PDU, an SDU, a message, control information, data, or information according to the descriptions, functions, procedures, proposals, methods, and/or operation flowcharts disclosed in this document.

The at least one processor 202 may be referred to as a controller, a microcontroller, a microprocessor, or a microcomputer. The at least one processor 202 may be implemented by hardware, firmware, software, or a combination thereof. As an example, at least one application specific integrated circuit (ASIC), at least one digital signal processor (DSP), at least one digital signal processing devices (DSPD), at least one programmable logic device (PLD), or at least one field programmable gate array (FPGA) may be included in the at least one processor 202. The descriptions, functions, procedures, proposals, methods, and/or operation flowcharts disclosed in this document may be implemented using firmware or software, and the firmware or software may be implemented to include the modules, procedures, or functions. Firmware or software configured to perform the descriptions, functions, procedures, proposals, methods, and/or operation flowcharts disclosed in this document may be included in the at least one processor 202 or may be stored in the at least one memory 204 and executed by the at least one processor 202. The descriptions, functions, procedures, proposals, methods, and/or operation flowcharts disclosed in this document may be implemented using firmware or software in the form of code, an instruction, and/or a set of instructions.

The at least one memory 204 may be connected to the at least one processor 202 and store various forms of data, signals, messages, information, programs, codes, indications, and/or instructions. The at least one memory 204 may be configured as a read only memory (ROM), a random access memory (RAM), an erasable programmable read only memory (EPROM), a flash memory, a hard drive, a register, a cache memory, a computer-readable storage media, and/or a combination thereof. The at least one memory 204 may be located at the interior and/or exterior of the at least one processor 202. In addition, the at least one memory 204 may be connected to the at least one processor 202 through various technologies such as wired or wireless connection.

The at least one transceiver 206 may transmit user data, control information, and wireless signals/channels, mentioned in the methods and/or operation flowcharts of this document, to at least one other device. The at least one transceiver 206 may receive user data, control information, and wireless signals/channels, mentioned in the descriptions, functions, procedures, proposals, methods, and/or operation flowcharts disclosed in this document, from at least one other device. For example, the at least one transceiver 206 may be connected to the at least one processor 202 and transmit and receive radio signals. For example, the at least one processor 202 may control the at least one transceiver 206 to transmit user data, control information, or a radio signal to at least one other device. In addition, the at least one processor 202 may control the at least one transceiver 206 to receive user data, control information, or a radio signal from at least one other device. In addition, the at least one transceiver 206 may be connected to the at least one antenna 208, and the at least one transceiver 206 may be configured to transmit and receive user data, control information, radio signals/channels mentioned in the descriptions, functions, procedures, proposals, methods and/or operation flowcharts disclosed in this document through the at least one antenna 208. In this document, the at least one antenna may be a plurality of physical antennas or a plurality of logical antennas (e.g., antenna ports). The at least one transceiver 206 may convert received radio signals/channels from RF band signals into baseband signals in order to process received user data, control information, and radio signals/channels using the at least one processor 202. The at least one transceiver 206 may convert the user data, control information, and radio signals/channels processed using the at least one processor 202 from the baseband signals into the RF band signals. To this end, the at least one transceiver 206 may include an (analog) oscillator and/or a filter.

The constituents of the wireless device, which are described in reference to FIG. 2, may be referred to as other terms from functional aspects. For example, the processor 202 may be referred to as a control unit, the transceiver 206 may be referred to as a communication unit, and the memory 204 may be referred to as a storage unit. In some cases, the communication unit may be used for a meaning including at least a part of the processor 202 and the transceiver 206.

The structure of the wireless device, which is described in reference to FIG. 2, may be understood as a structure of at least a part of various devices. As an example, the structure may be at least a part of various devices (e.g., a robot, a vehicle, an XR device, a hand-held device, a home appliance, an IoT device, an AI device/a server, etc.). Furthermore, according to various embodiments, apart from the constituents exemplified in FIG. 2, a device may further other constituents.

For example, a device may be a hand-held device such as a smartphone, a smart pad, a wearable device (e.g., a smart watch, smart glasses), and a hand-held computer (e.g., a laptop, etc.). In this case, the device may further include at least one of a power supply unit that supplies power and includes a wired/wireless charging circuit, a battery and the like, an interface unit including at least one port (e.g., an audio input/output port, a video input/output port) for connection to another device, and an input/output unit for inputting and outputting video information/signals, audio information/signals, data and/or information input from a user.

For example, a device may be a mobile device such as a mobile robot, a vehicle, a train, a manned/unmanned aerial vehicle (AV), and a ship. In this case, the device may further include at least one of a drive unit including at least one of the engine, motor, powertrain, wheels, brake, and steering device of the device, a power supply unit that supplies power and includes a wired/wireless charging circuit, a battery and the like, a sensor unit that senses state information of the device or surrounding the device, environment information and user information, an autonomous driving unit that performs functions such as route maintenance, speed control and destination setting, and a location measurement unit that obtains moving object location information through a global positioning system (GPS) and various sensors.

For example, a device may be an XR device such as an HMD, a head-up display (HUD) provided in a vehicle, a television, a smartphone, a wearable device, a home appliance device, a digital signage, a vehicle, and a robot. In this case, the device may further include at least one of a power supply unit that supplies power and includes a wired/wireless charging circuit, a battery and the like, an input/output unit that obtains control information and data from outside and outputs a generated XR object, and a sensor unit that senses state information of the device or surrounding the device, environment information and user information.

For example, a device may be a robot that may be classified for industrial use, medical use, domestic use, military use and the like according to purposes of use or fields. In this case, the device may further include at least one of a sensor unit that senses state information of the device or surrounding the device, environment information and user information and a drive unit that moves robot joints and performs various other physical operations.

For example, a device may be an AI device such as a TV, a projector, a smartphone, a PC, a laptop, a terminal for digital broadcasting, a tablet PC, a wearable device, a set-top box (STB), a radio, a washing machine, a refrigerator, a digital signage, a robot, and a vehicle. In this case, the device may further include at least one of an input unit that obtains various types of data from outside, an output unit that generates outputs associated with sight, hearing, or touch, a sensor unit that senses state information of the device or surrounding the device, environment information and user information, and a training unit that uses learning data to learn a model consisting of artificial neural networks. The structure of the wireless device exemplified in FIG. 2 may be understood as a part of a RAN node (e.g., a base station, a DU, a RU, a RRH, etc.). That is, the device exemplified in FIG. 2 may be a RAN node. In this case, the device may further include a wired transceiver for front haul and/or back haul communication. However, in case the front haul and/or back haul communication is based on wireless communication, the at least one transceiver 206 exemplified in FIG. 2 may be used for the front haul and/or back haul communication, and no wired transceiver may be included.

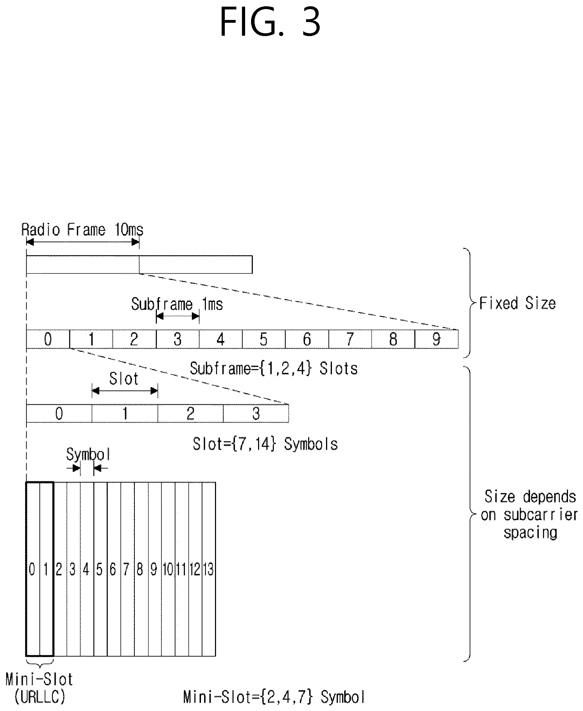

FIG. 3 exemplifies a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a default (reference) subcarrier spacing by an integer N (or $\mu$). In addition, although it is assumed that a very low subcarrier spacing is not used in a very high carrier frequency, a numerology used herein may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f = 2^\mu \cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15 kHz, a wide area in traditional cellular bands is supported, and when a SCS is 30 kHz/60 kHz, a dense-urban area, lower latency and a wider carrier bandwidth are supported, and when a SCS is 60 kHz or higher, a bandwidth wider than 24.25 GHz is supported to overcome a phase noise. An NR frequency band is defined as a frequency range in two types (FR1, FR2). FR1 and FR2 may be configured as in the following Table 2. In addition, FR2 may mean a millimeter wave (mmW).

[Table 2]

| Frequency Range designation | Corresponding frequency range | Subcarrier spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, sizes of various fields in a time domain are expressed as multiples of a time unit of $T_c = 1/(\Delta f_{max} \cdot N_f)$. Here, $\Delta f_{max}$ is $480 \cdot 10^3$ Hz and $N_f$ is 4096. Downlink and uplink transmission is configured (organized) with a radio frame having a duration of $T_f = 1/(\Delta f_{max} \cdot N_f/100)T_c = 10$ ms. Here, the radio frame is configured with 10 subframes having a duration of $T_{sf} = (\Delta f_{max} \cdot N_f/1000)T_c = 1$ ms, respectively. In this case, there may be one set of frames for an uplink and one set of frames for a downlink. In addition, transmission in an uplink frame No. i from a terminal should start earlier by $T_{TA} = (N_{TA} + N_{TA,offset})T_c$ than a corresponding downlink frame in a corresponding terminal starts. For a subcarrier spacing configuration $\mu$, slots are numbered in an increasing order of $n_s^\mu \in \{0, ..., N_{slot}^{subframe,\mu}-1\}$ in a subframe and are numbered in an increasing order of $n_{s,f}^\mu \in \{0, \cdots, N_{slot}^{subframe,\mu}-1\}$ in a radio frame. One slot is configured with $N_{symb}^{slot}$ consecutive OFDM symbols and $N_{symb}^{slot}$ is determined according to CP. A start of a slot $n_s^\mu$ in a subframe is temporally arranged with a start of an OFDM symbol $n_s^\mu N_{symb}^{stot}$ in the same subframe. All terminals may not perform transmission and reception at the same time, which means that not all OFDM symbols of a downlink slot or an uplink slot are available.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 3 is an example on $\mu$=2 (SCS is 60 kHz), and referring to Table 3, 1 subframe may include 4 slots. 1 subframe={ 1,2,4} slot shown in FIG. 3 is an example, and the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part and the like may be considered. Hereinafter, the physical resources which may be considered in an NR system will be described in detail.

First, in relation to an antenna port, an antenna port is defined so that a channel where a symbol in an antenna port is carried can be inferred from a channel where another symbol in the same antenna port is carried. When a large-scale property of a channel where a symbol in one antenna port is carried may be inferred from a channel where a symbol in another antenna port is carried, it may be said that the two antenna ports are in a quasi co-located or quasi co-location (QC/QCL) relationship. In this case, the large-scale property includes one or more of delay spread, doppler spread, frequency shift, average received power, and received timing.

In a 6G system, communication may be performed at the above-described THz band that is higher than millimeter wave (mmW) frequency, and the same frame structure as shown in FIG. 3 may be used or a separate frame structure for the 6G system may be used but is not limited to a specific form.

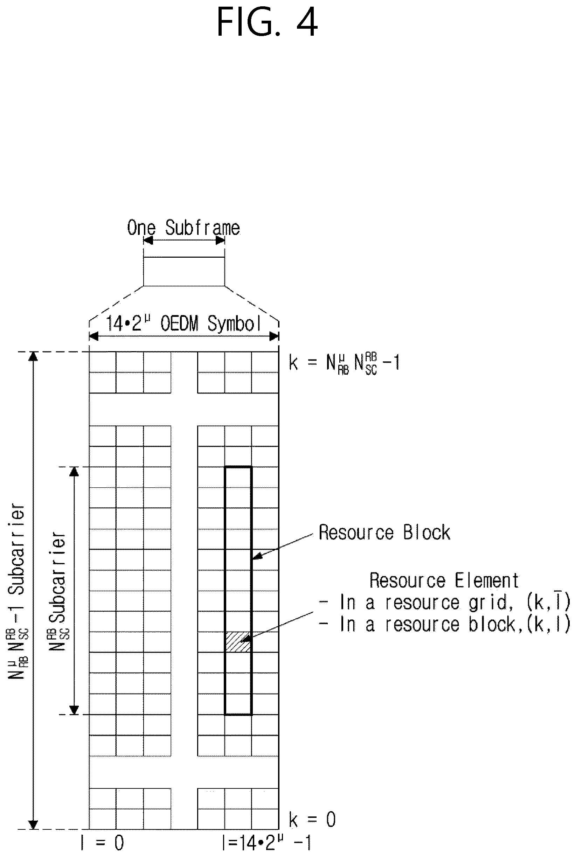

FIG. 4 exemplifies a resource grid in a wireless communication system to which the present disclosure may be applied.

Referring to FIG. 4, as an illustrative description, a resource grid is configured with $N_{RB}^{\mu} N_{SC}^{RB}$ subcarriers in a frequency domain, and one subframe is configured with $14 \cdot 2^{\mu}$ OFDM symbols, but the resource grid and the subframe are not limited thereto. In an NR system, a transmitted signal is described by one or more resource grids configured with $2^{\mu} N_{symb}^{(\mu)}$ OFDM symbols and $N_{RB}^{\mu} N_{SC}^{RB}$ subcarriers. Here, $N_{RB}^{\mu} \leq N_{RB}^{max,u}$. The $N_{RB}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k, l'). Here, k=0, ..., $N_{RS}^{\mu} N_{SC}^{RB}$-1 is an index in a frequency domain and l'=0, ..., $2^{\mu} N_{symb}^{(\mu)}$-1 refers to a position of a symbol in a subframe. When referring to a resource element in a slot, an index pair (k, 1) is used. Here, l=0, ..., $2^{\mu} N_{symb}^{(\mu)}$-1. A resource element (k, l') for $\mu$ and an antenna port p corresponds to a complex value, $a_{k,f}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}$=12 consecutive subcarriers in a frequency domain.

Point A plays a role as a common reference point of a resource block grid and is obtained as follows.

- offsetToPointA for a primary cell (PCell) downlink represents a frequency offset between point A and a lowest subcarrier of a lowest resource block overlapping with a SS/PBCH block which is used by a terminal for initial cell selection. It is expressed in resource block units assuming a 15 kHz subcarrier spacing for FR1 and a 60 kHz subcarrier spacing for FR2.
- absoluteFrequencyPointA represents a frequency-position of point A expressed as in an absolute radio-frequency channel number (ARFCN).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k, 1) for a subcarrier spacing configuration $\mu$ in a frequency domain is given as in the following Equation 1.

[Equation 1]

$$n_{CRB}^{\mu}=k/N_{sc}^{RB}$$

In Equation 1, k is defined relatively to point A so that k=0 corresponds to a subcarrier centering around point A. Physical resource blocks are numbered from 0 to $N_{BWP,i}^{size,\mu}-1$ in a bandwidth part (BWP) and i is the number of a BWP. A relationship between a physical resource block $n_{PRB}$ and a common resource block $n_{CRB}$ in BWP i is given by the following Equation 2.

[Equation 2]

$$n_{CRB}^{\mu}=n_{PRB}^{\mu}+N_{BWP,i}^{start,\mu}$$

$N_{BWP,i}^{start,\mu}$ is a common resource block that a BWP starts relatively to common resource block 0.

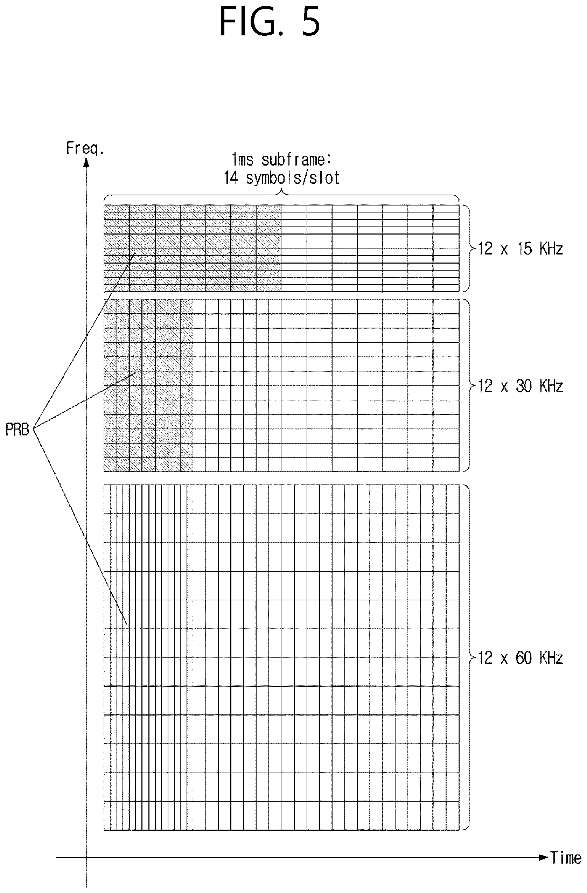

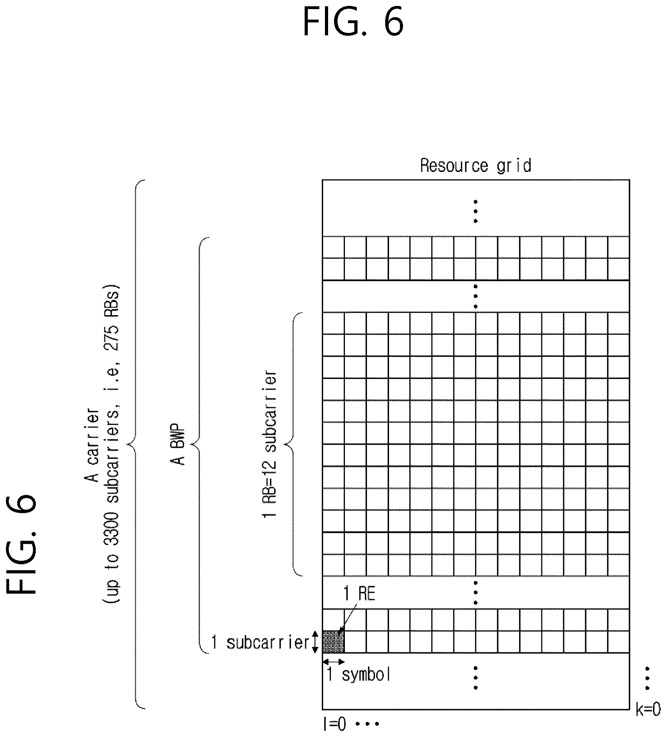

FIG. 5 exemplifies a physical resource block in a wireless communication system to which the present disclosure may be applied. In addition, FIG. 6 exemplifies a slot structure in a wireless communication system to which the present disclosure may be applied.

Referring to FIG. 5 and FIG. 6, a slot includes a plurality of symbols in a time domain. For example, for a normal CP, one slot includes 7 symbols, but for an extended CP, one slot includes 6 symbols.

A carrier includes a plurality of subcarriers in a frequency domain. A resource block (RB) is defined as a plurality of (e.g., 12) consecutive subcarriers in a frequency domain. A bandwidth part (BWP) is defined as a plurality of consecutive (physical) resource blocks in a frequency domain and may correspond to one numerology (e.g., an SCS, a CP length, etc.). A carrier may include a maximum of N (e.g., 5) BWPs. Data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). In case a terminal operating in such a wideband CC always operates with a radio frequency (FR) chip for the whole CC being turned on, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. In this regard, a base station may instruct a terminal to operate only in a partial bandwidth, not in an overall bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured for a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with another BWP for load balancing. Alternatively, considering frequency domain inter-cell interference cancellation between neighboring cells and the like, some middle spectrums of a whole bandwidth may be excluded and BWPs on both edges may be configured in the same slot. In other words, a base station may configure at least one DL/UL BWP for a terminal associated with a wideband CC. A base station may activate at least one DL/UL BWP of configured DL/UL BWP(s) at a specific time (by L1 signaling or MAC control element (CE) or RRC signaling, etc.). In addition, a base station may indicate switching to another configured DL/UL BWP (by L1 signaling or MAC CE or RRC signaling, etc.). Alternatively, based on a timer, when a timer value is expired, it may be switched to a determined DL/UL BWP. Herein, an activated DL/UL BWP is defined as an active DL/UL BWP. However, a configuration on a DL/UL BWP may not be received when a terminal performs an initial access procedure or a RRC connection has not been set up yet, so a DL/UL BWP which is assumed by the terminal in such a situation is defined as an initial active DL/UL BWP.

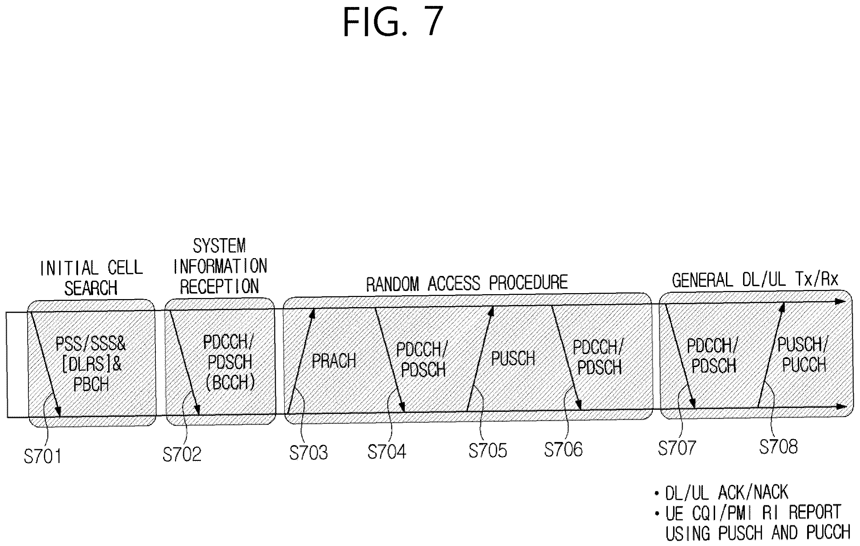

FIG. 7 exemplifies physical channels used in a wireless communication system, to which the present disclosure may be applied, and a general signal transmission and reception method using the physical channels.

In a wireless communication system, a terminal receives information from a base station through a downlink, and the terminal transmits information to the base station through an uplink. Information transmitted and received by the base station and the terminal includes data and a variety of control information, and a variety of physical channels exist according to a type/a usage of information transmitted and received by them.

When a terminal is turned on or newly enters a cell, the terminal performs an initial cell search including synchronization with a base station (S701). To this end, the terminal may synchronize with the base station by receiving a primary synchronization signal (PSS) and a secondary synchronization signal (SSS) from the base station and obtain information such as a cell identifier (ID) and the like. Next, the terminal may obtain broadcasting information in a cell by receiving a physical broadcast channel (PBCH) from the base station. Meanwhile, the terminal may check out a downlink channel state by receiving a downlink reference signal (DL RS) at the initial cell search step.

The terminal, which has completed initial cell search, may obtain more detailed system information by receiving a physical downlink control channel (PDCCH) and a physical downlink shared channel (PDSCH) according to information carried in the PDCCH (S702).

Meanwhile, in case the terminal accesses to the base station for the first time or does not have a radio resource for signal transmission, the terminal may perform a random access procedure (RACH) for the base station (S703 to S706). To this end, the terminal may transmit a specific sequence as a preamble through a physical random access channel (PRACH) (S703 and S705) and receive a response message for the preamble through a PDCCH and a corresponding PDSCH (S704 and S706). In the case of a contention-based RACH, a contention resolution procedure may be additionally performed.

The terminal, which has performed the above-described procedure, may subsequentially perform PDCCH/PDSCH reception (S707) and physical uplink shared channel (PUSCH)/physical uplink control channel (PUCCH) transmission (S708) as a general uplink/downlink signal transmission procedure. In particular, the terminal receives downlink control information (DCI) through a PDCCH. Herein, the DCI includes control information such as resource allocation information for the terminal and has a different format depending on its purpose of use.

Meanwhile, control information, which is transmitted by the terminal to the base station through an uplink or is received by the terminal from the base station, includes a downlink/uplink acknowledgement/non-acknowledgement (ACK/NACK) signal, a channel quality indicator (CQI), a precoding matrix indicator (PMI), a rank indicator (RI), and the like. For a 3GPP LTE system, the terminal may transmit control information of the above-described CQI/PMI/RI and the like through a PUSCH and/or a PUCCH.

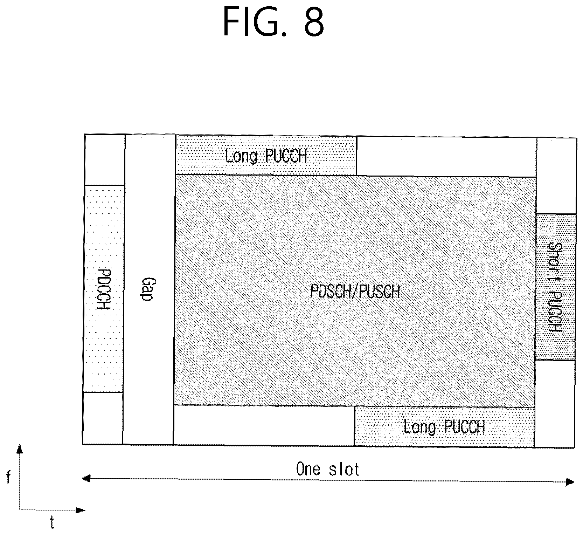

FIG. 8 is a diagram illustrating an example in which a physical channel is mapped in a slot to which various embodiments are applicable.

Referring to FIG. 8, a DL control channel, DL or UL data, UL control channel, etc. may all be included in one slot. For example, the first N symbols in a slot may be used to transmit a DL control channel (hereinafter, DL control region), and the last M symbols in a slot may be used to transmit a UL control channel (hereinafter, UL control region). N and M are each an integer greater than or equal to 0. A resource region (hereinafter, referred to as a data region) between the DL control region and the UL control region may be used for DL data transmission or for UL data transmission. A time gap for DL-to-UL or UL-to-DL switching may exist between the control region and the data region. The PDCCH may be transmitted in the DL control region, and the PDSCH may be transmitted in the DL data region. Some symbols at the time of switching from DL to UL in a slot may be used as a time gap.

<u>DL Physical Channel/Signal</u>

(1) PDSCH

A PDSCH carries DL data (e.g., DL-shared channel transport block (DL-SCH TB)). The TB is coded into a codeword (CW) and then transmitted after scrambling and modulation processes. The CW includes one or more code blocks (CBs). One or more CBs may be grouped into one code block group (CBG). Depending on the configuration of a cell, the PDSCH may carry up to two CWs. Scrambling and modulation may be performed for each CW, and modulation symbols generated from each CW may be mapped to one or more layers. Each layer may be mapped to resources together with a DMRS after precoding and transmitted on a corresponding antenna port. The PDSCH may be dynamically scheduled by a PDCCH (dynamic scheduling). Alternatively, the PDSCH may be semi-statically scheduled based on higher layer (e.g., RRC) signaling (and/or Layer 1 (L1) signaling (e.g., PDCCH)) (configured scheduling (CS)). Therefore, in the dynamic scheduling, PDSCH transmission is accompanied by the PDCCH, whereas in the CS, PDSCH transmission may not be accompanied by the PDCCH. The CS may include semi-persistent scheduling (SPS).

(2) PDCCH

A PDCCH carries Downlink Control Information (DCI). For example, the PDCCH (i.e., DCI) may carry: transmission formats and resource allocation of a DL-SCH; frequency/time resource allocation information on an uplink shared channel (UL-SCH); paging information on a paging channel (PCH); system information on a DL-SCH; time-/frequency resource allocation information on a higher layer control message such as a random access response (RAR) transmitted over a PDSCH; transmit power control commands; and information on activation/deactivation of SPS/CS. Various DCI formats may be provided depending on information in DCI.

Table 5 shows DCI formats transmitted over the PDCCH.

[Table 5]

| DCI format | Usage |
|---|---|
| 0_0 | Scheduling of PUSCH in one cell |
| 0_1 | Scheduling of one or multiple PUSCH in one cell, or indicating downlink feedback information for configured grant PUSCH (CG-DFI) |
| 1_0 | Scheduling of PDSCH in one cell |
| 1_1 | Scheduling of PDSCH in one cell, and/or triggering one shot HARQ-ACK codebook feedback |
| 2_0 | Notifying a group of UEs of the slot format, available RB sets, COT duration and search space set group switching |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a CBG-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or UL scheduling information. DCI format 2_0 may be used to provide dynamic slot format information (e.g., dynamic SFI) to the UE, and DCI format 2_1 may be used to provide downlink pre-emption information to the UE. UEs defined as one group may be provided with DCI format 2_0 and/or DCI format 2_1 over a group common PDCCH, which is a PDCCH defined for a group of UEs.

The PDCCH/DCI may include a cyclic redundancy check (CRC), and the CRC may be masked/scrambled with various identifiers (e.g., radio network temporary identifier (RNTI)) according to the owner or purpose of the PDCCH. For example, if the PDCCH is for a specific UE, the CRC may be masked with a cell-RNTI (C-RNTI). If the PDCCH relates to paging, the CRC may be masked with a paging-RNTI (P-RNTI). If the PDCCH relates to system information (e.g., system information block (SIB)), the CRC may be masked with a system information RNTI (SI-RNTI). If the PDCCH relates to a random access response, the CRC may be masked with a random access-RNTI (RA-RNTI).

Table 6 shows the usage of the PDCCH and transport channels according to the type of RNTI. Here, the transport channel means a transport channel related to data carried by a PDSCH/PUSCH scheduled by the PDCCH.

[Table 6]

| RNTI | Usage | Transport Channel |
|---|---|---|
| P-RNTI | Paging and System Information change notification | PCH (Paging Channel) |
| SI-RNTI | Broadcast of System Information | DL-SCH |
| RA-RNTI | Random Access Response | DL-SCH |
| SI-RNTI | Broadcast of System Information | DL-SCH |
| RA-RNTI | Random Access Response | DL-SCH |
| Temporary C-RNTI | Contention Resolution (when no valid C-RNTI is available) | DL-SCH |
| Temporary C-RNTI | Msg3 transmission | UL-SCH |
| C-RNTI, MCS (Modulation and Coding Scheme)-C-RNTI | Dynamically scheduled unicast transmission | UL-SCH |
| C-RNTI | Dynamically scheduled unicast transmission | DL-SCH |

(continued)

| RNTI | Usage | Transport Channel |
|---|---|---|
| MCS-C-RNTI | Dynamically scheduled unicast transmission | DL-SCH |
| C-RNTI | Triggering of PDCCH ordered random access | N/A |
| CS (Configured | Configured scheduled unicast transmission | DL-SCH, UL-SCH |
| Scheduling)-RNTI | (activation, reactivation and retransmission) | |
| CS-RNTI | Configured scheduled unicast transmission(deactivation) | N/A |
| TPC (Transmit Power Control)-PUCCH-RNTI | PUCCH power control | N/A |
| TPC-PUSCH-RNTI | PUSCH power control | N/A |
| TPC-SRS-RNTI | SRS trigger and power control | N/A |
| INT(Interruption)-RNTI | Indication pre-emption in DL | N/A |
| SFI (Slot Format Indication)-RNTI | Slot Format Indication on the given cell | N/A |
| SP (Semi-persistent)-CSI (Channel State Information)-RNTI | Activation of Semi-persistent CSI reporting on PUSCH | N/A |

For the PDCCH, a fixed modulation scheme may be used (e.g., quadrature phase shift keying (QPSK)). One PDCCH may include 1, 2, 4, 8, or 16 control channel elements (CCEs) depending on the aggregation level (AL). One CCE may include 6 resource element groups (REGs), and one REG may be defined by one OFDMA symbol and one (P)RB.

The PDCCH may be transmitted in a control resource set (CORESET). The CORESET corresponds to a set of physical resources/parameters used to carry the PDCCH/DCI within a BWP. For example, the CORESET may include a set of REGs with a given numerology (e.g., SCS, CP length, etc.). The CORESET may be configured by system information (e.g., MIB) or UE-specific higher layer (e.g., RRC) signaling. For example, the following parameters/information may be used to configure the CORESET. One UE may be configured with one or more CORESETs, and a plurality of CORESETs may overlap in the time/frequency domain.

- controlResourceSetId: this parameter/information indicates the identifier (ID) of the CORESET.
- frequencyDomainResources: this parameter/information indicates frequency-domain resources of the CORESET. The frequency-domain resources may be indicated by a bitmap, and each bit corresponds to an RB group (=6 consecutive RBs). For example, the most significant bit (MSB) of the bitmap corresponds to the first RB group in the BWP. An RB group corresponding to a bit with a value of 1 may be allocated as a frequency-domain resource of the CORESET.
- duration: this parameter/information indicates time-domain resources of the CORESET. The parameter/information duration may indicate the number of consecutive OFDMA symbols included in the CORESET. For example, duration has a value of 1-3.
- cce-REG-MappingType: this parameter/information indicates a CCE-to-REG mapping type. An interleaved type and a non-interleaved type may be supported.
- precoderGranularity: this parameter/information indicates a precoder granularity in the frequency domain.
- tci-StatesPDCCH: this parameter/information indicates information (e.g., TCI-StateID) on a transmission configuration indication (TCI) state for the PDCCH. The TCI state may be used to provide a quasi-co-location (QCL) relationship between DL RS(s) in an RS set (TCI-state) and a PDCCH DMRS port.
- tci-PresentInDCI: this parameter/information indicates whether a TCI field is included in DCI.
- pdcch-DMRS-ScramblingID: this parameter/information indicates information used for initialization of a PDCCH DMRS scrambling sequence.

For PDCCH reception, the UE may monitor (e.g., blind decoding) a set of PDCCH candidates in the CORESET. The PDCCH candidate may mean CCE(s) monitored by the UE for PDCCH reception/detection. PDCCH monitoring may be performed in one or more CORESETs in an active DL BWP on each active cell in which the PDCCH monitoring is configured. The set of PDCCH candidates monitored by the UE may be defined as a PDCCH search space (SS) set. The SS set may be classified into a common search space (CSS) set or a UE-specific search space (USS) set.

Table 7 shows PDCCH search spaces.

[Table 7]

| Search Space | Type | RNTI | Use Case |
|---|---|---|---|
| Type0-PDCCH | Common | SI-RNTI on a primary cell | Broadcast of System Information |
| Type0A-PDCCH | Common | SI-RNTI on a primary cell | Broadcast of System Information |
| Type1-PDCCH | Common | RA-RNTI or TC-RNTI on a primary cell | Msg2, Msg4 in RACH |
| Type2-PDCCH | Common | P-RNTI on a primary cell | PagingSystem Information change notification |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI or CS-RNTI | Group signaling |
| UE Specific | UE Specific | C-RNTI, MCS-C-RNTI or CS-RNTI | UE signaling (e.g., PDSCH/PUSCH) |

The SS set may be configured by system information (e.g., MIB) or UE-specific higher layer (e.g., RRC) signaling. S (e.g., 10) SS sets or less may be configured in each DL BWP of a serving cell. For example, the following parameters/information may be provided for each SS set. Each SS set may be associated with one CORESET, and each CORESET configuration may be associated with one or more SS sets.

- searchSpaceId: this parameter/information indicates the ID of the SS set.
- controlResourceSetId: this parameter/information indicates the CORESET associated with the SS set.
- monitoringSlotPeriodicityAndOffset: this parameter/information indicates a PDCCH monitoring periodicity (in a unit of slot) and a PDCCH monitoring offset (in a unit of slot)
- monitoringSymbolsWithinSlot: this parameter/information indicates first OFDMA symbol(s) for PDCCH monitoring in a slot in which the PDCCH monitoring is configured. The first OFDMA symbol(s) are indicated by a bitmap, and each bit corresponds to each OFDMA symbol in the slot. The MSB of the bitmap corresponds to the first OFDM symbol in the slot. OFDMA symbol(s) corresponding to bit(s) with a value of 1 corresponds to the first symbol(s) in the CORESET in the slot.
- nrofCandidates: this parameter/information indicates the number of PDCCH candidates (e.g., one of 0, 1, 2, 3, 4, 5, 6, and 8) for each AL (where AL={1, 2, 4, 8, 16}).
- searchSpaceType: this parameter/information indicates whether the SS type is the CSS or USS.
- DCI format: this parameter/information indicates the DCI format of a PDCCH candidate.

The UE may monitor PDCCH candidates in one or more SS sets in a slot according to the configuration of the CORESET/SS set. An occasion (e.g., time/frequency resource) to monitor PDCCH candidates is defined as a PDCCH (monitoring) occasion. One or more PDCCH (monitoring) occasions may be configured within a slot.

<u>UL Physical Channels/Signals</u>

(1) PUSCH

A PUSCH may carry UL data (e.g., uplink shared channel (UL-SCH) transport block (TB)) and/or uplink control information (UCI). The PUSCH may be transmitted based on a cyclic prefix orthogonal frequency division multiplexing (CP-OFDM) waveform or a discrete Fourier transform spread OFDM (DFT-s-OFDM) waveform. When the PUSCH is transmitted based on the DFT-s-OFDM waveform, the UE may transmit the PUSCH by applying transform precoding. For example, when the transform precoding is not allowed (e.g., when the transform precoding is disabled), the UE may transmit the PUSCH based on the CP-OFDM waveform. When the transform precoding is allowed (e.g., when the transform precoding is enabled), the UE may transmit the PUSCH based on the CP-OFDM waveform or DFT-s-OFDM waveform. PUSCH transmission may be dynamically scheduled by a PDCCH (dynamic scheduling) or semi-statically scheduled by higher layer signaling (e.g., RRC signaling) (and/or Layer 1 (L1) signaling (e.g., PDCCH)) (configured scheduling (CS)). Therefore, in the dynamic scheduling, the PUSCH transmission may be associated with the PDCCH, whereas in the CS, the PUSCH transmission may not be associated with the PDCCH. The CS may include PUSCH transmission based on a Type-1 configured grant (CG) and PUSCH transmission based on a Type-2 CG. For the Type-1 CG, all parameters for PUSCH transmission may be signaled by the higher layer. For the Type-2 CG, some parameters for PUSCH transmission may be signaled by higher layers, and the rest may be signaled by the PDCCH. Basically, in the CS, the PUSCH transmission may not be associated with the PDCCH.

(2) PUCCH

A PUCCH may carry UCI. The UCI includes the following information.

Scheduling request (SR): The SR is information used to request a UL-SCH resource.

Hybrid automatic repeat and request acknowledgement) (HARQ-ACK): The HARQ-ACK is a signal in response to reception of a DL signal (e.g., PDSCH, SPS release PDCCH, etc.). The HARQ-ACK response may include positive ACK (ACK), negative ACK (NACK), DTX (Discontinuous Transmission), or NACK/DTX. The HARQ-ACK may be interchangeably used with A/N, ACK/NACK, HARQ-ACK/NACK, and the like. The HARQ-ACK may be generated on a TB/CBG basis.

Channel Status Information (CSI): The CSI is feedback information on a DL channel. The CSI includes a channel quality indicator (CQI), a rank indicator (RI), a precoding matrix indicator (PMI), a precoding type indicator (PTI), and so on.

Table 8 shows PUCCH formats. The PUCCH formats may be classified according to UCI payload sizes/transmission lengths (e.g., the number of symbols included in a PUCCH resource) and/or transmission structures. The PUCCH formats may be classified into short PUCCH formats (PUCCH formats 0 and 2) and long PUCCH formats (PUCCH formats 1, 3, and 4) according to the transmission lengths.

[Table 8]

| PUCCH format | Length in OFDM symbols $N_{symb}^{PUCCH}$ | Number of bits | Usage | Etc |
|---|---|---|---|---|
| 0 | 1-2 | $\leq 2$ | HARQ, SR | Sequence selection |
| 1 | 4-14 | $\leq 2$ | HARQ, [SR] | Sequence modulation |
| 2 | 1-2 | >2 | HARQ, CSI, [SR] | CP-OFDM |
| 3 | 4-14 | >2 | HARQ, CSI, [SR] | DFT-s-OFDM (no UE multiplexing) |
| 4 | 4-14 | >2 | HARQ, CSI, [SR] | DFT-s-OFDM (Pre DFT OCC) |

(0) PUCCH Format 0 (PF0)

- Supportable UCI payload size: up to K bits (e.g., K=2)
- Number of OFDM symbols included in one PUCCH: 1 to X symbols (e.g., X=2)
- Transmission structure: only a UCI signal is configured with no DM-RS, and a UCI state is transmitted by selecting and transmitting one of a plurality of sequences.

(1) PUCCH Format 1 (PF1)

- Supportable UCI payload size: up to K bits (e.g., K=2)
- Number of OFDM symbols included in one PUCCH: Y to Z symbols (e.g., Y=4 and Z=14)
- Transmission structure: UCI and a DM-RS are configured in different OFDM symbols based on time division multiplexing (TDM). For the UCI, a specific sequence is multiplied by a modulation symbol (e.g., QPSK symbol). A cyclic shift/orthogonal cover code (CS/OCC) is applied to both the UCI and DM-RS to support code division multiplexing (CDM) between multiple PUCCH resources (complying with PUCCH format 1) (in the same RB).

(2) PUCCH Format 2 (PF2)

- Supportable UCI payload size: more than K bits (e.g., K=2)
- Number of OFDM symbols included in one PUCCH: 1 to X symbols (e.g., X=2)

- Transmission structure: UCI and a DMRS (DM-RS) are configured/mapped in/to the same symbol based on frequency division multiplexing (FDM), and encoded UCI bits are transmitted by applying only an inverse fast Fourier transform (IFFT) thereto with no DFT.

(3) PUCCH Format 3 (PF3)

- Supportable UCI payload size: more than K bits (e.g., K=2)
- Number of OFDM symbols included in one PUCCH: Y to Z symbols (e.g., Y=4 and Z=14)
- Transmission structure: UCI and a DMRS are configured/mapped in/to different symbols based on TDM. Encoded UCI bits are transmitted by applying a DFT thereto. To support multiplexing between multiple UEs, an OCC is applied to the UCI, and a CS (or interleaved frequency division multiplexing (IFDM) mapping) is applied to the DM-RS before the DFT.

(4) PUCCH Format 4 (PF4 or F4)

- Supportable UCI payload size: more than K bits (e.g., K=2)
- Number of OFDM symbols included in one PUCCH: Y to Z symbols (e.g., Y=4 and Z=14)
- Transmission structure: UCI and a DMRS are configured/mapped in/to different symbols based on TDM. The DFT is applied to encoded UCI bits with no multiplexing between UEs.

Beam Management (BM)

The BM procedure is an L1 (layer 1) / L2 (layer 2) procedure for obtaining and maintaining a set of base station (e.g., gNB, TRP, etc.) and/or terminal (e.g., UE) beams that may be used for downlink (DL) and uplink (UL) transmission/reception, and may include the following procedures and terms.

- Beam measurement: The operation in which a base station or a UE measures characteristics of a received beam forming signal.
- Beam determination: The operation in which a base station or a UE selects its transmit beam (Tx beam) / receive beam (Rx beam).
- Beam sweeping: The operation in which a transmit and/or receive beam is used to cover a spatial domain for a certain time interval in a predetermined manner.
- Beam report: The operation in which a UE reports information of a beamformed signal based on beam measurement.

The BM procedure may be classified into (1) a DL BM procedure using a synchronization signal (SS) / physical broadcast channel (PBCH) block or a CSI-RS, and (2) a UL BM procedure using a sounding reference signal (SRS).
In addition, each BM procedure may include Tx beam sweeping for determining a Tx beam and Rx beam sweeping for determining an Rx beam.

<DL BM>

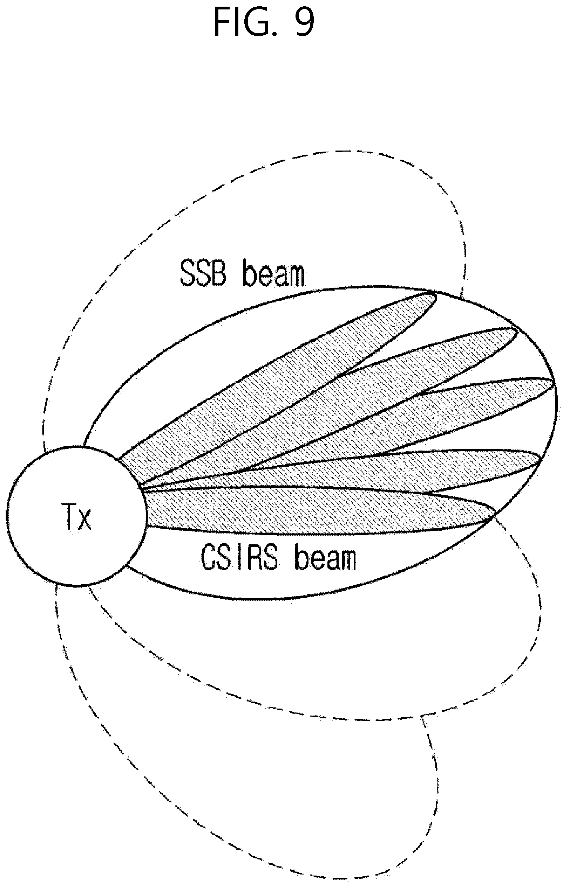

The DL BM procedure may include (1) transmission of beamformed DL reference signals (RSs) (e.g., CSI-RS or SS block (SSB)) of a base station, and (2) beam reporting of a UE.
Here, the beam reporting may include a preferred DL RS identifier (ID)(s) and a corresponding L1-reference signal received power (L1-RSRP).
The DL RS ID may be an SSB resource indicator (SSBRI) or a CSI-RS resource indicator (CRI).
As shown in FIG. 9, an SSB beam and a CSI-RS beam may be used for beam measurement. The measurement metric is L1-RSRP per resource/block. The SSB may be used for coarse beam measurement, and a CSI-RS may be used for fine beam measurement. The SSB may be used for both Tx beam sweeping and Rx beam sweeping.
The Rx beam sweeping using an SSB may be performed across a plurality of SSB bursts while the UE changes an Rx beam for the same SSBRI. Here, one SS burst includes one or more SSBs, and one SS burst set includes one or more SS bursts.

<DL BM using SSB>

FIG. 9 is a flowchart illustrating an example of the DL BM procedure using SSB.

Configuration of a beam report using an SSB is performed upon

- The UE receives, from the base station, CSI-ResourceConfig IE including CSI-SSB-ResourceSetList which includes SSB resources used for BM (S410).

Table 9 shows an example of CSI-ResourceConfig IE, and like CSI-ResourceConfig IE in Table 9, BM configuration using an SSB is not defined additionally, and the SSB is set as a CSI-RS resource.

[Table 9]

```
-- ASN1START
-- TAG-CSI-RESOURCECONFIG-START
CSI-ResourceConfig ::=                              SEQUENCE {
csi-ResourceConfigId             CSI-ResourceConfigId,
        csi-RS-ResourceSetList            CHOICE {
            nzp-CSI-RS-SSB                     SEQUENCE {
                nzp-CSI-RS-ResourceSetList       SEQUENCE (SIZE (1..maxNrofNZP-CSI-RS-Res
ourceSetsPerConfig)) OF NZP-CSI-RS-ResourceSetId OPTIONAL,
                csi-SSB-ResourceSetList          SEQUENCE (SIZE (1..maxNrofCSI-SSB-Resour
ceSetsPerConfig)) OF CSI-SSB-ResourceSetId       OPTIONAL
            },
            csi-IM-ResourceSetList                 SEQUENCE (SIZE (1..maxNrofCSI-IM-ResourceSets
PerConfig)) OF CSI-IM-ResourceSetId
            },

        bwp-Id                          BWP-Id,
        resourceType                    ENUMERATED { aperiodic, semiPersistent, periodic },
        ...
    }

-- TAG-CSI-RESOURCECONFIGTOADDMOD-STOP
-- ASN1STOP
```

In Table 9, the parameter csi-SSB-ResourceSetList indicates a list of SSB resources used for beam management and reports in a single resource set. Herein, the SSB resource set may be configured as {SSBx1, SSBx2, SSBx3, SSBx4, ...}. An SSB index may be defined from 0 to 63.

- The UE receives the SSB resources from the base station based on the CSI-SSB-ResourceSetList (S420).
- When CSI-RS reportConfig for SSBRI and L1-RSRP reporting is configured, the UE (beam) reports the best SSBRI and L1-RSRP corresponding thereto to the base station (S430).

That is, when reportQuantity in the CSI-RS reportConfig IE is configured as ssb-Index-RSRP, the UE reports the best SSBRI and L1-RSRP corresponding thereto to the base station.

Then, when a CSI-RS resource is configured in an OFDM symbol(s) identical to an SSB (SS/PBCH Block) and QCL-TypeD is applicable, the UE may assume that the CSI-RS and the SSB are quasi co-located with each other in terms of "QCL-TypeD".

Herein, the QCL Type D may mean that antenna ports are QCL with each other in terms of the spatial Rx parameter. When the UE receives a plurality of DL antenna ports which are in a QCL Type D relationship with each other, it is possible to apply the same Rx beam. In addition, the UE does not expect that a CSI-RS is configured in an RE overlapping with a RE of the SSB.

<DL BM using CSI-RS>

Regarding the use of a CSI-RS, i) when a repetition parameter is configured for a specific CSI-RS resource set and TRS_info is not configured, the CSI-RS is used for beam management. ii) when the repetition parameter is not configured and TRS_info is configured, the CSI-RS is used for a tracking reference signal (TRS). iii) when the repetition parameter is not configured and TRS_info is not configured, the CSI-RS is used for CSI acquisition.

This repetition parameter may be set only for CSI-RS resource sets that are associated with CSI-ReportConfig having a report of L1 RSRP or 'No Report or None'.

If the UE receives CSI-ReportConfig in which reportQuantity is set to 'cri-RSRP' or 'none' and, CSI-Resource-Config for channel measurement (higher layer parameter 'resourcesForChannelMeasurement') does not include higher layer parameter 'trs-Info' but includes NZP-CSI-RS-ResourceSet which is set to higher layer parameter 'repetition' (repetition=ON), the UE may be composed of a port of the same number (1-port or 2-port), which includes higher layer parameter 'nrofPorts' for all CSI-RS resources in the NZP-CSI-RS-ResourceSet.

When (higher layer parameter) repetition is set to "ON," it is related to an Rx beam sweeping procedure of a UE. In this case, when the UE is configured with an NZP-CSI-RS-ResourceSet, the UE may assume that at least one CSI-RS resource in the NZP-CSI-RS-ResourceSet is transmitted through the same downlink spatial domain transmission filter. That is, at least one CSI-RS resource in the NZP-CSI-RS-ResourceSet is transmitted through the same Tx beam. Here, at least one CSI-RS resource in the NZP-CSI-RS-ResourceSet may be transmitted in different OFDM symbols. In addition, the UE is not expected to receive different periodicities in periodicityAndOffset among all CSI-RS resources in the NZP-CSI-RS-ResourceSet.

In contrast, when repetition is set to "OFF," it is related to a Tx beam sweeping procedure of a base station. In this case, when repetition is set to "OFF," the UE does not assume that at least one CSI-RS resource in the NZP-CSI-RS-ResourceSet is transmitted through the same downlink spatial domain transmission filter. That is, at least one CSI-RS resource in the NZP-CSI-RS-ResourceSet is transmitted through different Tx beams.

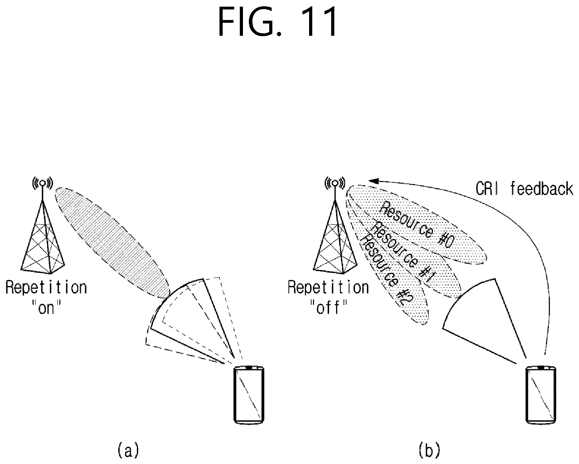

FIG. 11 is a diagram illustrating an example of a DL BM procedure using a CSI-RS. FIG. 11(a) shows an Rx beam determination (or refinement) procedure of a UE, and FIG. 11(b) shows a Tx beam determination procedure of a base station. In addition, FIG. 11(a) shows the case where the parameter repetition is set to "ON", and FIG. 11(b) shows the case where the parameter "repetition" is set as "OFF".

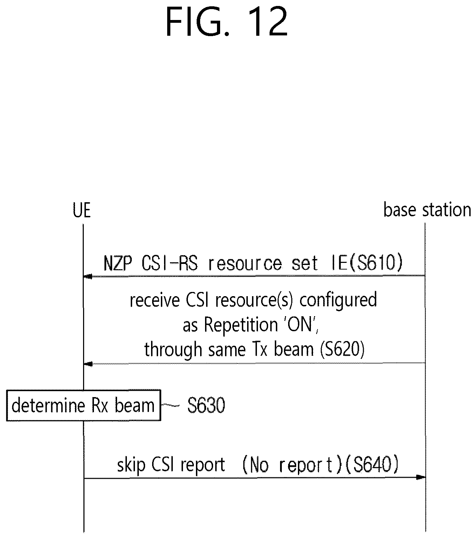

With reference to FIG. 11(a) and FIG. 12, the Rx beam determination procedure of the UE will be described.

FIG. 12 is a flowchart illustrating an example of the Rx beam determination procedure of the UE.

- The UE receives, from the base station, NZP CSI-RS resource set IE including higher layer parameter repetition through RRC signaling (S610). The parameter repetition is set to "ON".
- The UE repeatedly receives a resource(s) in a CSI-RS resource set, in which repetition is set to "ON", from a different OFDM symbol through the same Tx beam (or a DL spatial domain transmission filter) (S620).
- In doing so, the UE determines its own Rx beam (S630).
- The UE may omit a CSI report or may transmit a CSI report including CRI/L1-RSRP to the base station (S640).

That is, when the repetition is set to "ON", the UE may omit a CSI report or may report ID information (CRI) of a beam pair-related preferred beam and a quality value thereof (L1-RSRP).

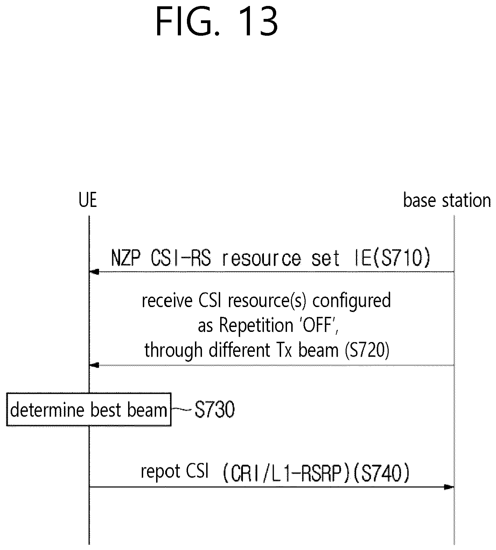

With reference to FIG. 11(b) and FIG. 13, the Tx beam determination procedure of the base station will be described.

FIG. 13 is a flowchart illustrating an example of the Tx beam determination procedure of the base station.

- A UE receives, from the base station, NZP CSI-RS resource set IE including higher layer parameter repetition through RRC signaling (S710). Here, the repetition parameter is set to "OFF" and relates to a Tx beam sweeping procedure of the base station.
- the UE receives resources in a CSI-RS resource set, in which repetition is set to "OFF", via a different Tx beam (a DL spatial domain transmission filter) (S720).
- the UE selects (or determines) the best beam (S730), and
- the UE reports ID and quality information (e.g., L1-RSRP) of the selected beam to the base station (S740). In this case, reportQuantity of CSI report Config may be configured as "CRI+L1-RSRP".

That is, when the CSI-RS is transmitted for BM, the UE reports CSI and L1-RSRP corresponding thereto to the base station.

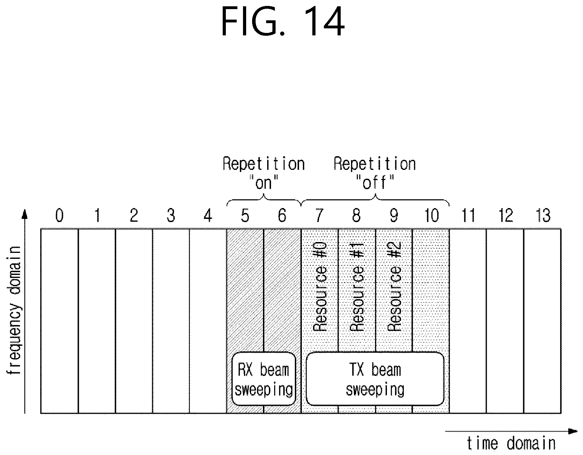

FIG. 14 is a diagram illustrating an example of resource allocation in time and frequency domains, which is related to operation of FIG. 11.

That is, when repetition is set to "ON" for a CSI-RS resource set, a plurality of CSI-RS resources is repeatedly used via the same Tx beam, and, when repetition is set to "OFF" for the CSI-RS resource set, different CSI-RS resources are transmitted via different Tx beams.

<DL BM-Related Beam Indication>

A UE may receive RRC configuration of a list of a maximum M number of candidate Transmission Configuration Indication (TCI) states at least for the purpose of Quasi Co-location (CQL) indication. Herein, M may be 64.

Each TCI state may be configured as one RS set. ID of each DL RS for a spatial QCL at least in an RS set (QCL Type D) may refer to at least one of DL RS types such as an SSB, a P-CSI RS, a SP-CSI RS, or a A-CSI RS.

Initialization/update of ID of DL RS(s) in an RS set used at least for a spatial QCL purpose may be performed at least via explicit signaling.

Table 10 shows an example of TCI-State IE. The TCI-State IE is associated with a quasi co-location (QCL) type corresponding to one or two DL reference signals (RSs).

[Table 10]

```
-- ASN1START
-- TAG-TCI-STATE-START


TCI-State ::=                    SEQUENCE {
        tci-StateId                  TCI-StateId,
        qcl-Type1                    QCL-Info,
        qcl-Type2                    QCL-Info
                            OPTIONAL,    -- Need R

        ...
}


QCL-Info ::=                     SEQUENCE {
        cell                         ServCellIndex
                            OPTIONAL,    -- Need R
        bwp-Id                           BWP-Id
                            OPTIONAL, -- Cond CSI-RS-Indicated
```

```
        referenceSignal             CHOICE {
            csi-rs                      NZP-CSI-RS-ResourceId,
            ssb                         SSB-Index
        },
        qcl-Type                    ENUMERATED {typeA, typeB, typeC, typeD},
        ...
}


-- TAG-TCI-STATE-STOP
-- ASN1STOP
```

In Table 10, the parameter "bwp-id" indicates a BL BWP where a RS is located, and the parameter "cell" indicates a carrier where an RS is located, and the parameter "reference signal" indicates a reference antenna port(s) which is a quasi colocation source for a corresponding target antenna port(s). The target antenna port(s) may be an example of a CSI-RS, a PDCCH DMRS, or a PDSCH DMRS. For example, in order to indicate QCL reference information for a NZP CSI-RS, TCI state ID may be indicated in each CORESET configuration. In another example, in order to indicate QCL reference information for a PDSCH DMRS antenna port(s), DCI state ID may be indicated via DCI.

<QCL (Quasi-Co Location)>

An antenna port is defined such that a channel over which a symbol on one antenna port is carried can be inferred from another channel over which a symbol on another antenna port is carried. When properties of the channel over which a symbol on one antenna port is carried can be inferred from a channel over which a symbol on another antenna port is carried, the two antenna ports may be in a quasi co-located or quasi co-location (QC/QCL) relationship.

Herein, the channel properties may include at least one of delay spread, Doppler spread, Doppler shift, average gain, and average delay. Herein, the spatial Rx parameter indicates a spatial (reception) channel property parameter such as an angle of arrival.

In order to decode a PDSCH according to a PDCCH which is detected and has DCI intended for a corresponding UE and a given serving cell, a list of M number of TCI-state configurations in higher layer parameter PDSCH-Config may be set. The number M depends on UE capability.

Each TCI-State includes a parameter for setting a quasi co-location relationship between one or two DL reference signals and a DMRS port of the PDSCH.

The quasi co-location relationship may be configured as higher layer parameter qcl-Type 1 for the first DL RS and qcl-Type 2 (when set) for the second DL RS. If there are the two DL RSs, a QCL type is not the same, regardless of whether the two DL RSs have the same reference or different references.

A quasi co-location type corresponding to each DL RS is given by higher layer parameter "qcl-Type" in QCL-Info, and may take one of the following forms.

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

For example, in the case where a target antenna port is a specific NZP CSI-RS, corresponding NZP CSI-RS antenna ports may be indicated/configured to be QCL with a specific TRS in terms of QCL-Type A or with a specific SSB in terms of QCL-Type D. The UE indicated/configured as above may receive a corresponding NZP CSI-RS using a measured Doppler and a delay value, and may apply a Rx beam, which is used in receiving the QCL-TypeD SSB, to receive the corresponding NZP CSI-RS.

The UE receives an activation command used to map eight TCI states to codepoints of a DCI field "Transmission Configuration Indication".

<UL BM>

In the UL BM, beam reciprocity (or beam correspondence) between a Tx beam and an Rx beam may or may not be established according to terminal implementation. If reciprocity between a Tx beam and an Rx beam is established in both a base station and a terminal, a UL beam pair may be aligned through a DL beam pair. However, when reciprocity between a Tx beam and an Rx beam is not established in either of a base station and a terminal, a UL beam pair determination process is required separately from a DL beam pair determination.

In addition, even when both the base station and the UE maintain beam correspondence, the base station may use the UL BM procedure for DL Tx beam determination without the UE requesting reporting of a preferred beam.

UL BM may be performed through beamformed UL SRS transmission, and whether UL BM of an SRS resource set is applied is configured by (higher layer parameter) usage. When usage is configured to 'BeamManagement (BM)', only one SRS resource may be transmitted in each of a plurality of SRS resource sets at a given time instant.

A terminal may be configured with one or more Sounding Reference Symbol (SRS) resource sets configured by the (higher layer parameter) SRS-ResourceSet (through higher layer signaling, RRC signaling, etc.). For each SRS resource set, a UE may be configured with $K \geq 1$ SRS resources (higher layer parameter SRS-resource). Here, K is a natural number, and a maximum value of K is indicated by SRS_capability.

Like DL BM, a UL BM procedure may also be divided into Tx beam sweeping of a terminal and Rx beam sweeping of a base station.

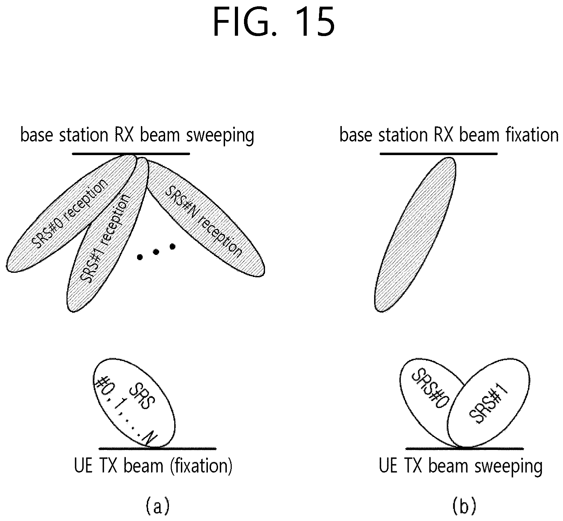

FIG. 15 is a diagram illustrating an example of the UL BM procedure using an SRS. FIG. 15(a) shows an RX beam determination procedure by a base station, and FIG. 15(b) shows a Tx beam determination procedure by a UE.

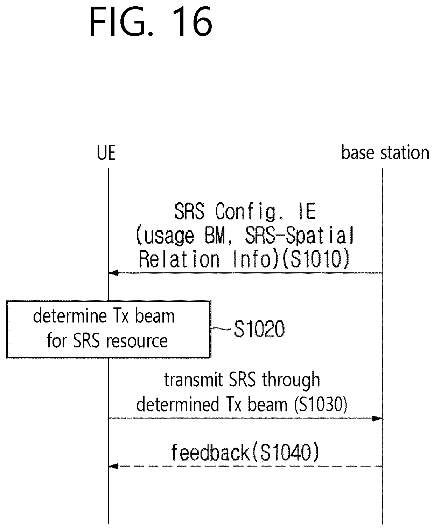

FIG. 16 is a flowchart illustrating a UL BM procedure using an SRS.

- A terminal receives RRC signaling (e.g., SRS-Config **1**E) including a usage parameter (higher layer parameter) configured with 'beam management' from a base station (S1010).

Table 11 shows an example of an SRS-Config IE (Information Element), and the SRS-Config IE is used for SRS transmission configuration. The SRS-Config IE includes a list of SRS-Resources and a list of SRS-ResourceSets. Each SRS resource set means a set of SRS-resources.

A network may trigger transmission of an SRS resource set using configured aperiodicSRS-ResourceTrigger (L1 DCI).

[Table 11]

```
-- ASN1START
-- TAG-MAC-CELL-GROUP-CONFIG-START


SRS-Config ::=                          SEQUENCE {
       srs-ResourceSetToReleaseList         SEQUENCE (SIZE(1..maxNrofSRS-ResourceSets)) OF SR
S-ResourceSetId              OPTIONAL,    -- Need N
       srs-ResourceSetToAddModList          SEQUENCE (SIZE(1..maxNrofSRS-ResourceSets)) O
F  SRS-ResourceSet           OPTIONAL,    -- Need N


       srs-ResourceToReleaseList            SEQUENCE (SIZE(1..maxNrofSRS-Resources)) OF S
RS-ResourceId                OPTIONAL,    -- Need N
       srs-ResourceToAddModList             SEQUENCE (SIZE(1..maxNrofSRS-Resources)) OF S
RS-Resource                  OPTIONAL,    -- Need N
```

```
            tpc-Accumulation                          ENUMERATED  {disabled}
                                                     OPTIONAL,    -- Need S

            ...
        }


    SRS-ResourceSet ::=                        SEQUENCE {
            srs-ResourceSetId                          SRS-ResourceSetId,
            srs-ResourceIdList                         SEQUENCE (SIZE(1..maxNrofSRS-ResourcesPerSet))
    OF  SRS-ResourceId            OPTIONAL,    -- Cond  Setup


            resourceType                       CHOICE {
                aperiodic                              SEQUENCE {
                    aperiodicSRS-ResourceTrigger       INTEGER  (1..maxNrofSRS-TriggerStates-1),
                    csi-RS                                     NZP-CSI-RS-ResourceId
                                     OPTIONAL,   -- Cond  NonCodebook
                    slotOffset                             INTEGER  (1..32)
                                     OPTIONAL,   -- Need  S

                    ...
                },
                semi-persistent                        SEQUENCE {
                    associatedCSI-RS                       NZP-CSI-RS-ResourceId
                                  OPTIONAL, -- Cond  NonCodebook

                    ...
                },
                periodic                               SEQUENCE {
                    associatedCSI-RS                       NZP-CSI-RS-ResourceId
                                  OPTIONAL, -- Cond  NonCodebook

                    ...
                }
            },
            usage                                      ENUMERATED  {beamManagement, codebook,
    nonCodebook,  antennaSwitching},
            alpha                                      Alpha
                                     OPTIONAL, -- Need  S
            p0                                         INTEGER  (-202..24)
                                     OPTIONAL, -- Cond  Setup
            pathlossReferenceRS                        CHOICE {
                ssb-Index                              SSB-Index,
                csi-RS-Index                           NZP-CSI-RS-ResourceId



    SRS-SpatialRelationInfo ::=         SEQUENCE {
```

```
             servingCellId                        ServCellIndex
             OPTIONAL,    -- Need S
             referenceSignal                      CHOICE {
                 ssb-Index                             SSB-Index,
                 csi-RS-Index                          NZP-CSI-RS-ResourceId,
                 srs                                   SEQUENCE {
                     resourceId                            SRS-ResourceId,
                     uplinkBWP                             BWP-Id
                 }
             }
         }



         SRS-ResourceId ::=                       INTEGER  (0..maxNrofSRS-Resources-1)
```

In Table 11, usage represents a higher layer parameter indicating whether an SRS resource set is used for beam management, codebook-based or non-codebook-based transmission. The usage parameter corresponds to an L1 parameter 'SRS-SetUse'. 'spatialRelationInfo' is a parameter indicating a configuration of a spatial relation between a reference RS and a target SRS. Here, a reference RS may be an SSB, a CSI-RS, or an SRS corresponding to the L1 parameter 'SRS-SpatialRelationInfo'. The usage configured for each SRS resource set.

- the terminal determines a Tx beam for an SRS resource to be transmitted based on the SRS-SpatialRelation Info included in the SRS-Config IE (S1020). Here, SRS-SpatialRelation Info is configured for each SRS resource, and indicates whether to apply the same beam as a beam used in an SSB, a CSI-RS, or an SRS for each SRS resource. In addition, SRS-SpatialRelationInfo may or may not be configured in each SRS resource.
- If the SRS-SpatialRelationInfo is configured in an SRS resource, the same beam as a beam used in an SSB, a CSI-RS or an SRS is applied and transmitted. However, if the SRS-SpatialRelationInfo is not configured in an SRS resource, the terminal arbitrarily determines a Tx beam and transmits an SRS through the determined Tx beam (S1030).

More specifically, for P-SRS in which 'SRS-ResourceConfigType' is configured to 'periodic':

i) When SRS-SpatialRelationInfo is configured with 'SSB/PBCH', a UE transmits a corresponding SRS resource by applying the same spatial domain transmission filter (or generated from a corresponding filter) as a spatial domain reception (Rx) filter used for reception of an SSB/PBCH; or
ii) When SRS-SpatialRelationInfo is configured with 'CSI-RS', a UE transmits an SRS resource by applying the same spatial domain transmission filter used for reception of a periodic CSI-RS or an SP (semi-persistent) CSI-RS; or
iii) When SRS-SpatialRelationInfo is configured with 'SRS', a UE transmits a corresponding SRS resource by applying the same spatial domain transmission filter used for transmission of a periodic SRS.

Similar to the above, even when 'SRS-ResourceConfigType' is configured with 'SP (semi-persistent)-SRS' or 'AP (aperiodic)-SRS', beam determination and transmission operation may be applied.

- Additionally, a terminal may or may not receive feedback on an SRS from a base station as in the following three cases (S1040).

i) When Spatial Relation Info is configured for all SRS resources in an SRS resource set, a terminal transmits an SRS in a beam indicated by a base station. For example, when Spatial Relation Info all indicate the same an SSB, a CRI, or an SRI, a terminal repeatedly transmits an SRS in the same beam. This case corresponds to FIG. G(a), for the purpose of a base station selecting an Rx beam.
ii) Spatial Relation Info may not be configured for all SRS resources in an SRS resource set. In this case, a terminal may freely transmit while changing an SRS beam. That is, this case corresponds to FIG. G(b), for the purpose of a terminal sweeping a Tx beam.

iii) Spatial Relation Info may be configured only for some SRS resources in an SRS resource set. In this case, for the configured SRS resource, an SRS is transmitted with the indicated beam, and for the SRS resource for which Spatial Relation Info is not configured, a terminal may arbitrarily apply a Tx beam and transmit it.

Network Energy Saving (NES)

Energy saving of a base station is being importantly considered in wireless communication systems, including 3GPP, because it may contribute to building an eco-friendly network by reducing carbon emissions and to reducing the operational expenditure (OPEX) of operators in the telecommunications industry. In particular, due to the introduction of 5G communication, higher transmission rates are required, and therefore, base stations need to be equipped with a greater number of antennas and provide services through wider bandwidths and frequency bands. As a result, according to recent studies, the energy cost of base stations has reached a level of about 20% of the total OPEX. Accordingly, the 5G system has adopted various technologies for reducing energy consumption under the name of network energy savings (NES), and the standardization of related technologies is expected to continue. Specifically, Rel-18, which has been recently conducted, discussed techniques such as the following.

[Table 12]

| |
|---|
| 1. Specify SSB-less SCell operation for inter-band CA for FR1 and co-located cells, if found feasible by RAN4 study, where a UE measures SSB transmitted on PCell or another SCell for an SCell's time/frequency synchronization (including downlink AGC), and L1/L3 measurements, including potential enhancement on SCell activation procedures if necessary [RAN4, RAN2] <br> 2. Specify enhancement on cell DTX/DRX mechanism including the alignment of cell DTX/DRX and UE DRX in RRC_CONNECTED mode, and inter-node information exchange on cell DTX/DRX [RAN2, RAN1, RAN3] <br>   • Note: No change for SSB transmission due to cell DTX/DRX. <br>   • Note: The impact to IDLE/INACTIVE UEs due to the above enhancement should be avoided. <br> 3. Specify the following techniques in spatial and power domains <br>   • Specify necessary enhancements on CSI and beam management related procedures including measurement and report, and signaling to enable efficient adaptation of spatial elements (e.g. antenna ports, active transceiver chains) [RAN1, RAN2] <br>   • Specify necessary enhancements on CSI related procedures including measurement and report, and signaling to enable efficient adaptation of power offset values between PDSCH and CSI-RS [RAN1, RAN2] <br>   • Note: Above objectives are only for UE specific channels/signals <br>   • Note: Legacy UE CSI/CSI-RS capabilities applies when considering total number of CSI reports and requirements <br> 4. Specify mechanism(s) to prevent legacy UEs camping on cells adopting the Rel-18 NES techniques, if necessary [RAN2] <br> 5. Specify CHO procedure enhancement(s) in case source/target cell is in NES mode [RAN2] <br> 6. Specify inter-node beam activation and enhancements on restricting paging in a limited area [RAN3]. <br> Specify the corresponding RRM/RF core requirements, if necessary, for the above features [RAN4] |

According to the application of the NES technology, a base station may perform operations such as controlling on/off in a time axis for a certain time duration, adjusting transmission/reception resources for UE-common or UE-specific signals/channels, changing an amount of frequency-domain resources, adjusting transmission power, or turning on/off antenna ports, transmission-reception points (TRPs), etc. in a spatial domain.

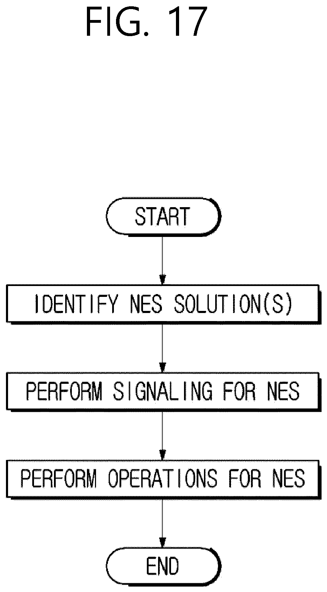

FIG. 17 illustrates an example of an operation procedure of a base station supporting an NES technology. Referring to FIG. 17, the base station identifies NES solution(s) to be applied. The NES solution(s) may be related to control of signal transmission/reception (e.g., on/off), beam operation, handover procedure, channel measurement and reporting, and the like. Which NES solution(s) to apply may be adaptively selected according to a current situation (e.g., cell load level, characteristics of connected UEs, etc.) or may be predefined. The base station having identified the NES solution(s) performs signaling for NES. The specific signaling procedure may vary depending on the identified NES solution(s). For example, the base station may transmit common information regarding the NES solution(s), may transmit configuration information necessary for NES operation to at least one UE. In addition, the base station may receive capability information related to NES from at least one UE. Thereafter, the base station performs operations for NES. In this case, the base station may perform the operations for NES based on the signaling performed earlier. That is, according to system information, configuration information, and control information transferred through the signaling, the base station may turn on/off transmission/reception of a specific signal, turn on/off elements of a spatial domain, or adjust resources for transmission/reception of a measurement signal.

Through a procedure such as that of FIG. 17, the NES technology may be performed. Examples of NES solutions that may be performed through a procedure such as that of FIG. 17 are as follows.

- Intra-system energy saving solution: the RAN node may request a neighboring RAN node to switch at least one SSB beam into its deactivated cell, or may perform paging to a UE in an inactive state (e.g., a stationary UE) using a limited beam set.
- Inter-system energy saving solution: the NG-RAN node having a capacity booster cell may autonomously switch the cell to an inactive state.
- SSB-less SCell solution: when an SSB or an SSB-based RRM measurement timing configuration (SMTC) configuration for an SCell is not provided, the UE may obtain a timing reference and an AGC source from another serving cell. In FR1 or FR2, the base station may configure intra-band CA or inter-band CA including an SCell without SSB transmission, and in this case, SSB/SIB transmission may be triggered by a wake up signal (WUS) of the UE. Accordingly, since the period of a common channel/signal such as an SSB is increased, the base station may remain in a sleep state for a longer time.
- Cell DTX/DRX solution: To reduce downlink transmission/uplink reception activity time of a base station, a periodic cell DTX/DRX pattern (e.g., active and inactive periods) may be commonly configured for UEs in a cell having such a feature. Here, the cell DTX pattern and the cell DRX pattern may be separately configured and activated, and up to two cell DTX/DRX patterns may be configured per MAC entity. When cell DTX is configured and activated, at least one of monitoring for SPS opportunities or monitoring a PDCCH may be suspended during a cell DTX inactive period. When cell DRX is configured and activated, at least one of transmission on a CG resource or SR transmission may be suspended during a cell DRX inactive period. The cell DTX/DRX may be activated/deactivated through RRC signaling or L1 group common signaling.
- For cell DTX/DRX, parameters such as an active duration and a cycle may be configured. The active duration is a period in which the UE waits to receive a PDCCH or an SPS opportunity and to transmit an SR or a CG, and the cycle specifies periodic repetition of the active duration and an inactive duration. When both cell DTX and cell DRX are configured, parameters such as the active duration and the cycle are common. If the base station recognizes an emergency call or a public safety-related service (e.g., MPS or MCS), the network may release or deactivate the cell DTX/DRX configuration so as not to affect the corresponding service. In addition, at least partial overlap is required between the active duration of connected mode DRX of the UE and the active duration of cell DTX/DRX. For example, the connected mode DRX cycle of the UE may be a multiple of the cell DTX/DRX cycle or vice versa.
- Conditional handover (CHO) solution: the CHO procedure, in which execution of handover is determined by the UE, is used while an NES technology is applied (e.g., when a cell activates or deactivates cell DTX/DRX). In this case, the UE may use an NES-specific CHO event to execute CHO to a candidate cell, and as an additional triggering condition for this, reception of DCI that activates CHO condition(s) set as an NES event indication may be applied.
- Spatial and power domain adaptation solution: to support a gNB in transceiver muting and/or transmission power adaptation, a UE may be configured to report multiple CSI entries in CSI reporting based on a plurality of sub-configurations. Each sub-configuration corresponds to a spatial domain adaptation pattern (e.g., a subset of available spatial elements) and/or a power offset between a data channel (e.g., PDSCH) and CSI-RS. With the application of the spatial and power domain adaptation solution, CSI configuration, measurement, and/or reporting operations may be affected.

CSI Measurement and Reporting

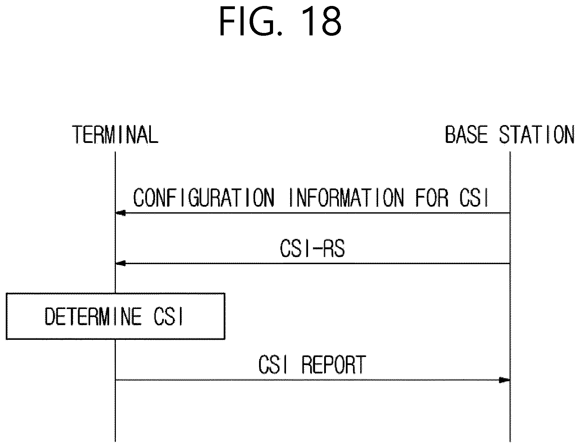

FIG. 18 illustrates an example of a procedure for CSI measurement and reporting.

Referring to FIG. 18, the base station transmits configuration information for CSI to the UE. The configuration information for CSI may include information related to a CSI-RS resource or resource set (e.g., time-frequency resource information, sequence information, power information, etc.), information related to CSI reporting (e.g., quantity information, report type information, report resource information, codebook information, etc.), and information related to CSI measurement. Here, to assist the base station in transceiver muting and/or transmission power adaptation, the UE may be configured to report multiple CSI entries in CSI reporting based on a plurality of sub-configurations. Here, each sub-configuration corresponds to a spatial domain adaptation pattern (e.g., a subset of available spatial elements) and/or a power offset. In addition, with respect to CSI reporting, a higher layer parameter (e.g., CSI-ReportConfig) included in the configuration information may include a list of sub-configurations, each sub-configuration being identified by an identifier (e.g., csi-ReportSubConfigID) and corresponding to a list of at least one CSI-RS resource, or to a CSI-RS antenna port subset, and/or, in addition to a power control offset parameter (e.g., powerControlOffset) for the CSI-RS resource(s), corresponding to a power offset for a PDSCH related to the CSI-RS.

In this case, the configuration related to CSI may include a plurality of sub-configurations. Accordingly, in interpreting the configuration information for CSI, the UE may determine a CSI-RS resource, CSI-RS port mapping, power offset, codebook type, reporting quantity, etc., by considering the sub-configurations. When the UE is configured with configuration information related to CSI reporting (e.g., CSI-ReportConfig) including sub-configurations, the UE is not expected that a higher layer parameter related to the reporting quantity (e.g., reportQuantity) is configured to 'cri-RSRP', 'cri-SINR', 'cri-SINR-Index', 'cri-RSRP-Index', 'none', 'ssb-Index-RSRP', 'ssb-Index-SINR', 'ssb-Index-RSRP-Index', 'ssb-Index-SINR-Index', or 'tdcp'. In addition, when the type of CSI reporting is configured as semi-persistent CSI reporting or aperiodic CSI reporting, the base station may activate/trigger only some of the sub-configurations configured for the UE through a MAC CE or DCI. That is, a trigger state for aperiodic CSI reporting may be configured as needed, and activation of semi-persistent CSI reporting may be controlled by an activation command.

For example, regarding the configuration for a reporting quantity, the UE may determine CSI-RS port index(es) for each CSI-RS resource based on information related to a port subset for each sub-configuration (hereinafter referred to as 'port subset indicator'). The port subset indicator may include a bitmap for specifying a portion of antenna ports for the corresponding CSI-RS resource. Accordingly, the UE may identify at least one antenna port for the corresponding sub-configuration based on positions of bits set to a positive value (e.g., 1) in the port subset indicator.

For example, regarding the configuration for a reporting quantity, the UE may determine a codebook type based on whether sub-configurations are present. Specifically, when sub-configurations are configured for CSI reporting, the UE may exclude the configuration of at least one codebook type. However, depending on the capability of the UE, it may be possible to configure the at least one codebook type.

For example, regarding the configuration for a reporting quantity, a power offset value and an NZP CSI-RS resource set may be configured for each sub-configuration. In this case, depending on whether a power offset value is configured for each sub-configuration and whether an NZP CSI-RS resource set is configured, interpretation of the NZP CSI-RS resource set for each sub-configuration may vary.

In determining a CQI, a higher layer parameter related to a time restriction for channel measurements (e.g., timeRestrictionForChannelMeasurements) may be configured. In this case, the UE should derive a channel estimation for determining CSI based on the most recent CSI reference resource. In this case, when cell DTX for the base station is activated, the cell DTX active time may be considered.

The CSI is derived based on a CSI reference resource. The CSI reference resource is defined, in the frequency domain, as a group of downlink physical resource blocks corresponding to a band related to the CSI derived in the frequency domain, and is defined, in the time domain, as one downlink slot determined based on a higher layer parameter and a subcarrier spacing. The UE should transmit CSI reporting no later than the CSI reference resource after receiving a CSI-RS. In this case, when sub-configurations are configured for CSI reporting, the CSI reference resource is considered for each sub-configuration.

When configured to report at least one of a CQI index, PMI, or RI, in the CSI reference resource, the UE may assume specific values for symbol positions and the number of symbols occupied by control signaling, the number of PDSCH and DMRS symbols, the subcarrier spacing of the BWP, the bandwidth for CQI reporting, the CP length and subcarrier spacing of the reference resource, the redundancy version (RV), etc., for the purpose of deriving at least one of the CQI index, PMI, or RI. In this case, when sub-configurations are configured for CSI reporting, assumptions regarding antenna ports, EPRE, etc., may be determined based on the sub-configurations.

Subsequently, the base station transmits at least one CSI-RS. Accordingly, the UE may receive the at least one CSI-RS and perform measurement. The at least one CSI-RS may be transmitted through a CSI-RS resource or resource set configured by the configuration information.

In this case, in a situation where the UE is configured to monitor power saving related control information (e.g. DCI format 2_6) and the DRX related timer (e.g. drx-onDurationTimer) is not started by a higher layer parameter (e.g. ps-TransmitOtherPeriodicCSI), when the UE is configured to report CSI using a reporting configuration type configured to periodic reporting and a reporting quantity configured to an item other than cri-RSRP and ssb-index-RSRP, the most recent CSI measurement opportunity occurs during a time indicated by the drx-onDurationTimer in DRX-related configuration information (e.g., DRX-Config), in addition to a DRX active time or a DRX active time for the CSI to be reported. As another example, in a situation where the UE is configured to monitor power saving-related control information (e.g., DCI format 2_6) and, according to a higher layer parameter (e.g., ps-TransmitPeriodicL1-RSRP), the drx-onDurationTimer has not been started, when the UE is configured to report L1-RSRP using a reporting configuration type configured to periodic reporting and a reporting quantity configured to cri-RSRP, the most recent CSI measurement opportunity occurs during a time indicated by the drx-onDurationTimer in DRX-related configuration information (e.g., DRX-Config), in addition to a DRX active time or a DRX active time for the CSI to be reported. In other cases, the most recent CSI measurement opportunity occurs within the DRX active time for the CSI to be reported.

Meanwhile, the base station may perform cell DTX/DRX operation. In this case, during a cell DTX inactive period, a UE configured with cell DTX is not expected to receive periodic CSI-RS and semi-persistent CSI-RS configured in a CSI reporting configuration associated with a reporting quantity including at least a rank indicator (RI). When cell DTX is activated for a serving cell, the most recent CSI measurement opportunity for a semi-persistent CSI-RS resource or a periodic CSI-RS resource occurs within cell DTX active periods for CSI reporting, which are configured by configuration information (e.g., CSI-ReportConfig) related to CSI reporting related to a reporting quantity including at least the RI.

The UE that has received at least one CSI-RS determines CSI. In other words, the UE performs CSI calculation. In this case, the UE may perform CSI calculation based on CSI processing criteria. The UE may indicate the number of supported simultaneous CSI calculations, that is, the number NCPU of CSI processing units (CPUs) that can be operated simultaneously. The UE may determine the number of CPUs for the corresponding CSI reporting based on at least one of the NCPU, the number of CPUs for each CSI reporting, the number of CPUs currently occupied, and the configuration of the reporting quantity. For example, for configuration information (e.g., CSI-ReportConfig) related to CSI reporting including a reporting quantity parameter (e.g., reportQuantity) not set to 'none', the CPU(s) may be occupied for at least one OFDM symbol, where the number of the at least one symbol may be determined based on CSI-RS resources or CSI-IM resources related to sub-configurations.

When configuration information (e.g., CSI-ReportConfig) related to CSI reporting includes a plurality of sub-configurations, the number of CPUs occupied by the CSI reporting is determined based on the number of CSI-RS resources corresponding to the sub-configuration. In this case, the number of CSI-RS resources may be determined based on the number of times referenced in the configuration information (e.g., CSI-ReportConfig) related to the CSI reporting, or based on the number of sub-configurations referring to the corresponding CSI-RS resource.

The UE that has determined CSI transmits CSI reporting to the base station. The UE may transmit CSI for at least one sub-configuration according to a reporting quantity parameter (e.g., reportQuantity) configured in configuration information (e.g., CSI-ReportConfig) related to CSI reporting. For example, the CSI reporting may include at least one of a PMI, CQI, RI, CRI, SSBRI, LI, or RSRP. In this case, the CSI reporting may include Part 1 CSI reporting and Part 2 CSI reporting. In addition, the CSI reporting may be transmitted through at least one of a PUCCH or a PUSCH.

When the UE multiplexes CSI reporting including Part 2 CSI reporting onto a PUCCH resource, the UE determines the PUCCH resource and the number of PRBs for the PUCCH resource, or the number of Part 2 CSI reports, on the assumption that each CSI report or each CSI sub-report included in the CSI reporting indicates rank 1 or a rank combination {1, 1}. When a higher layer parameter related to a CSI reporting mode (e.g., csi-ReportMode) is set to 'Mode2', the UE determines the PUCCH resource and the number of PRBs for the PUCCH resource, or the number of Part 2 CSI reports, on the assumption that each CRI of the CSI reporting is related to a resource pair.

When CSI reporting on a PUSCH includes two parts, the UE may omit a portion of Part 2 CSI. The omission of Part 2 CSI follows a priority order. Except when the corresponding CSI reporting includes at least one CSI sub-report including Part 2 corresponding to a sub-configuration from the list of sub-configurations provided by a higher layer parameter (e.g., csi-ReportSubConfigList) included in information (e.g., CSI-ReportConfig) related to the CSI reporting, when omitting Part 2 CSI information for a specific priority level, the UE should omit all information at that priority level.

For a reporting configuration related to information (e.g., CSI-ReportConfig) related to CSI reporting including a list of sub-configurations, the following processing may be possible. For a corresponding CSI reporting including at least one CSI sub-report, omission of Part 2 CSI is performed at a sub-configuration level within the same priority level. Here, a sub-configuration having a lower index value has a higher priority.

When a CSI reporting consists of two parts, the UE may omit a portion of Part 2 CSI. The omission of Part 2 CSI follows a priority order. For a reporting configuration related to information (e.g., CSI-ReportConfig) related to CSI reporting including a list of sub-configurations, for a given CSI reporting including at least one CSI sub-report, omission of Part 2 CSI is defined in section 5.2.3. Part 2 CSI is omitted starting from the lowest priority level up to a Part 2 CSI code rate less than or equal to a code rate configured by a higher layer parameter (e.g., maxCodeRate).

In addition, when a CQI request field in a DCI triggers CSI reporting(s) on a PUSCH, the first uplink symbol carrying the CSI reporting(s) shall not precede a symbol specified as a certain interval after the last symbol of the PDCCH carrying the corresponding DCI. This may be understood as ensuring CSI calculation time. In this case, when a plurality of sub-configurations are configured for CSI reporting, the start position of the certain interval described above may be determined based on all triggered sub-configurations.

Specific embodiments of the present disclosure

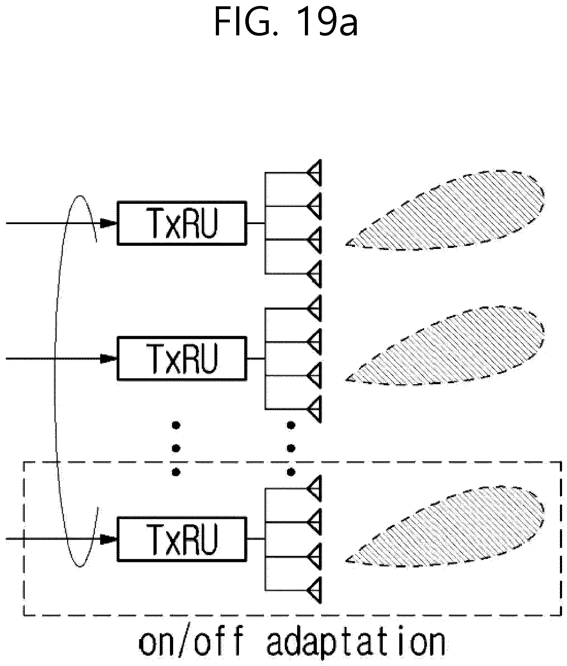

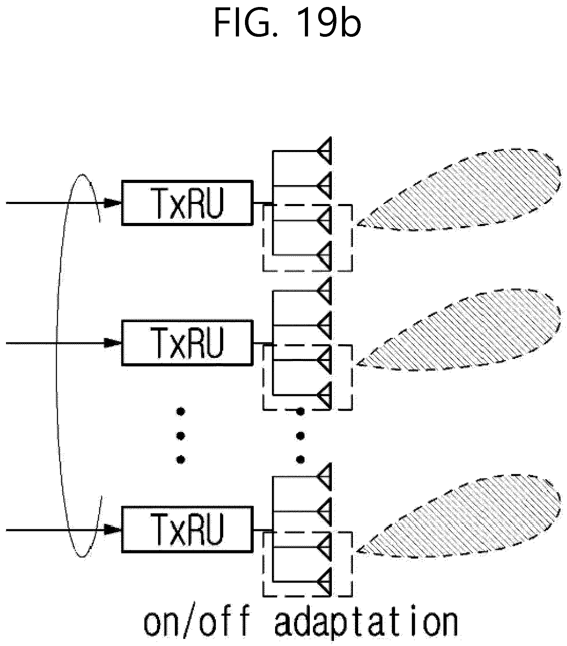

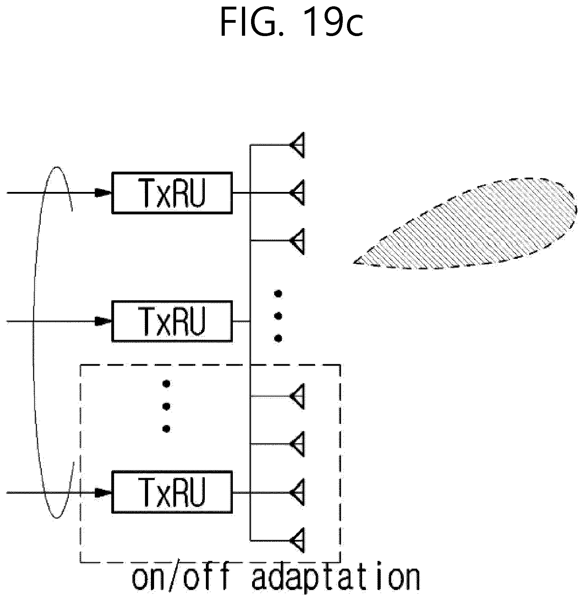

The base station may operate technologies for NES purposes such as controlling the on/off of the UE over a certain duration on a time axis, controlling transmission/reception resources for UE-common or UE-specific signals/channels, changing the amount of resources in a frequency axis, controlling transmission power, or turning on/off antenna ports, TRPs, etc. in a spatial domain. In the present disclosure, the listed technologies are referred to as 'NES technology' or 'NES_tech', and a state in which at least one of the NES_techs is applied is referred to as 'NES mode' or 'NES state'. For example, examples of state control of antenna elements according to the NES mode are as shown in FIG. 19a to FIG. 19c. Referring to FIG. 19a to FIG. 19c, it is possible to save energy by adaptively turning on/off some antenna elements among a plurality of antenna elements connected to a plurality of transmit radio units (TxRUs). The base station may inform the UE which NES_tech(s) are applied for each NES_tech or NES_tech group [Approach 1], or may pre-configure the NES_tech or NES_tech group(s) corresponding to each code-point of a specific indicator [Approach 2]. Here, the specific indicator may be indicated through DCI or MAC CE, or may be configured through higher layer signaling.

In the case of Approach 1, when at least one NES_tech is applied to the UE, the state may be defined as an NES mode or NES state, and furthermore, may be treated as a different NES mode or a different NES state depending on which NES_tech is applied. The NES mode or NES state may be used as a concept indicating whether at least one NES technology is applied, or, in addition thereto, further indicating which NES technology(ies) is applied. When the NES mode or NES state further indicates which NES technology(ies) is applied, different NES modes or different NES states may include different combinations of NES_techs. In the case of Approach 2, for example, when a 1-bit indicator is used, '0' may indicate that the corresponding NES_tech is not applied, and '1' may indicate that at least one NES_tech is applied. In this case, when '1' is indicated through the corresponding indicator, the state may be defined as an NES mode or NES state. In another example, when a 2-bit indicator is used, '00' may indicate that there is no corresponding NES_tech, '01' may indicate that at least one NES_tech_A is applied, '10' may indicate that at least one NES_tech_B is applied, and '11' may indicate that at least one NES_tech_C is applied. In this case, when a code-point other than '00' is indicated through the corresponding indicator, the state may be defined as an NES mode or NES state. Furthermore, the UE may determine NES state #1 when '01' is detected, NES state #2 when '10' is detected, and NES state #3 when '11' is detected. Accordingly, whether the state is an NES state and/or which NES state it is may be distinguished for each code-point.

For NES purposes, the base station may turn on/off certain spatial elements (e.g., antenna ports, active transmit/receive chains, panels, or TRPs) or adjust power values for downlink signals/channels. To dynamically apply various NES technologies in the spatial domain and power domain, the base station may associate, for one CSI report configuration (e.g., CSI-ReportConfig), CSI-RS resources or resource sets having different antenna ports, or may associate a plurality of power offsets (e.g., a powerControlOffset parameter representing a power offset value between PDSCH and CSI-RS, a powerControlOffsetSS parameter representing a power offset value between SSS and CSI-RS, etc.).

The following [Table 13] is an excerpt from R1-2308743, the 38.214 CR for NES in Rel-18, and is the final approval and inclusion in the 38.214 specification document.

[Table 13]

5.2.1.1 Reporting settings

Each Reporting Setting *CSI-ReportConfig* is associated with a single downlink BWP (indicated by higher layer parameter *BWP-Id)* given in the associated *CSI-ResourceConfig* for channel measurement and contains the param eter(s) for one CSI reporting band: codebook configuration including codebook subset restriction, time-domain b ehavior, frequency granularity for CQI and PMI, measurement restriction configurations, and the CSI-related qua ntities to be reported by the UE such as the layer indicator (LI), L1-RSRP, L1-SINR, CRI, and SSBRI (SSB R esource Indicator) and CapabilityIndex.

The time domain behavior of the *CSI-ReportConfig* is indicated by the higher layer parameter *reportConfig-Type* and can be set to 'aperiodic', 'semiPersistentOnPUCCH', 'semiPersistentOnPUSCH', or 'periodic'. For 'periodic' an d 'semiPersistentOnPUCCH'/'semiPersistentOnPUSCH' CSI reporting, the configured periodicity and slot offset ap plies in the numerology of the UL BWP in which the CSI report is configured to be transmitted on. The highe r layer parameter *reportQuantity* indicates the CSI-related, L1-RSRP-related, L1-SINR-related or CapabilityIndex-r elated quantities to report. The *reportFreqConfiguration* indicates the reporting granularity in the frequency doma in, including the CSI reporting band and if PMI/CQI reporting is wideband or sub-band. The *timeRestrictionFor ChannelMeasurements* parameter in *CSI-ReportConfig* can be configured to enable time domain restriction for ch annel measurements and *timeRestrictionForInterferenceMeasurements* can be configured to enable time domain re striction for interference measurements. The *CSI-ReportConfig* can also contain *CodebookConfig,* which contains configuration parameters for Type-I, Type II, Enhanced Type II CSI, or Further Enhanced Type II Port Selectio n including codebook subset restriction when applicable, and configurations of group-based reporting. A UE is n ot expected to be configured with a CSI report setting associated with a dormant DL BWP if the *reportConfigT ype* is set to 'aperiodic'. A *CSI-ReportConfig* can contain a list of sub-configurations, provided by the higher la yer parameter *[csi-ReportSubConfigList],* where each sub-configuration is identified by *[csi-ReportSubConfigID]* a nd corresponds to a list of one or more CSI-RS resources or corresponds to a CSI-RS antenna port subset, and /or corresponds to a power offset for PDSCH relative to CSI-RS. A UE is not expected to be configured with a *CSI-ReportConfig* that contains a mix of sub-configuration(s) each corresponding to a list of one or more CSI-RS resources and some other sub-configuration(s) each corresponding to CSI-RS antenna port subset

<omitted text>

5.2.1.4.1 Resource Setting configuration

<omitted text>

A subset of resources, where a subset contains one or more resources, of a NZP CSI-RS Resource Set for cha nnel measurement corresponds to a sub-configuration contained in a *CSI-ReportConfig* if each of the sub-configu ration(s) contains a list of one or more NZP CSI-RS resources, or all the resources of a NZP CSI-RS Resource Set for channel measurement correspond to each of the sub-configuration(s) contained in a *CSI-ReportConfig* if each of the sub-configurations does not contain a list of NZP CSI-RS resources, as described in Clause 5.2.1.4 .2.

Except for L1-SINR, if interference measurement is performed on NZP CSI-RS, a UE does not expect to be co nfigured with more than one NZP CSI-RS resource in the associated resource set within the resource setting for channel measurement. Except for L1-SINR, the UE configured with the higher layer parameter *nzp-CSI-RS-ResourcesForInterference* may expect no more than 18 NZP CSI-RS ports configured in a NZP CSI-RS resource se t.

For CSI measurement(s) other than L1-SINR, a UE assumes:

- each NZP CSI-RS port configured for interference measurement corresponds to an interference transmissi on layer.

- all interference transmission layers on NZP CSI-RS ports for interference measurement take into account the associated EPRE ratios configured in 5.2.2.3.1;

- other interference signal on REs of NZP CSI-RS resource for channel measurement, NZP CSI-RS resour ce for interference measurement, or CSI-IM resource for interference measurement.

For L1-SINR measurement with dedicated interference measurement resources, a UE assumes:

- the total received power on dedicated NZP CSI-RS resource for interference measurement or dedicate d CSI-IM resource for interference measurement corresponds to interference and noise.

5.2.1.4.2 Report Quantity Configurations

<omitted text>

If the UE is configured with a *CSI-ReportConfig* that contains a list of sub-configurations, provided by the high er layer parameter [*csi-ReportSubConfigList*]:

- the UE expects to be configured with the higher layer parameter *codebookType* set to 'type1-SinglePanel' or 'type1-MultiPanel'. If the UE indicates a capability for supporting mixed codebook combination in a sl ot with [ABC], each sub-configuration can be configured with the higher layer para-meter *codebookType* set to 'type1-SinglePanel' or 'type1-MultiPanel'. - Each sub-configuration can be configured with an antenna port subset using the higher layer bitmap parameter [*port-subsetIndicator*] which contains the bit sequence $p_0, p_1, \ldots, p_{Pm\_1}$, where $p_0$ is the MSB and $p_{Pm-1}$ is the LSB, bit $p_i$ corresponds to antenna port 3000 + i, and Pm is the number of ports *nrofPorts* configured for the CSI-RS resources(s) within t he *NZP-CSI-RS-ResourceSet* contained in the *CSI-ResourceConfig* for channel measurement that correspon ds to the *CSI-ReportConfig*. A bit value 0 in [*port-subsetIndicator*] indicates that the corresponding anten na port is disabled for the sub-configuration, whereas bit value 1 indicates that the antenna port is enabl ed and belongs to the antenna port subset for the sub-configuration.

- If a sub-configuration is configured with an antenna port subset, then the sub-configuration can be confi gured with a [RI restriction parameter] and, if the number of antenna ports of the subset greater than 2, with [*n1-n2* parameter] if the higher layer parameter *codebookType* is set to 'type1-Sin-glePanel' or with [*ng-n1-n2* parameter] if the higher layer parameter *codebookType* is set to 'type1-MultiPanel', and, if the corresponding number of antenna ports of the subset is 2, with *twoTX-CodebookSubsetRestriction*, where the parameters [RI restriction], [*n1-n2], [ng-n1-n2], twoTX-CodebookSubsetRestriction* are as described in Clauses 5.2.2.2.1 and 5.2.2.2.2.

- A sub-configuration can be configured with a list of NZP CSI-RS resources, provided by [*nzp-CSI-RS-re sourceList*], which indicates one or more NZP CSI-RS resources, within the *NZP-CSI-RS-ResourceSet* con tained in the *CSI-ResourceConfig* for channel measurement which corresponds to the *CSI-ReportConfig*.

EP 4 668 609 A1

32

[The list of NZP CSI-RS resources is identical to or has no intersection with a list of NZP CSI-RS res ources configured for any other sub-configuration(s) within the *CSI-Report-Config*.]

- A sub-configuration can be configured with a power offset provided by [*powerOffset*].

- If a sub-configurations is not configured with [*nzp-CSI-RS-resourceList*] then the sub-configuration shall b e associated with all the NZP CSI-RS resources within the *NZP-CSI-RS-ResourceSet* contained in the *CS I-ResourceConfig* for channel measurement which corresponds to the *CSI-ReportConfig*.

- the UE reports CSI(s) for one or more sub-configurations according to Clauses 5.2.1.5.1, 5.2.1.5.2, 5.2.3 and 5.2.4, and according to the higher layer parameter *reportQuantity* configured for that *CSI-ReportConf ig*·

If the UE is configured with a *CSI-ReportConfig* with the higher layer parameter *reportQuantity* set to 'ssb-Inde x-RSRP' or 'ssb-Index-RSRP- Index', the UE shall report SSBRI, where SSBRI $k$ $(k \geq 0)$ corresponds to the co nfigured $(k+1)$-th entry of the associated *csi-SSB-ResourceList* in the corresponding *CSI-SSB-ResourceSet*.

<omitted text>

5.2.1.5 Triggering/activation of CSI Reports and CSI-RS

5.2.1.5.1 Aperiodic CSI Reporting/Aperiodic CSI-RS when the triggering PDCCH and the CSI-RS h ave the same numerology

For CSI-RS resource sets associated with Resource Settings configured with the higher layer parameter *resource Type* set to 'aperiodic', 'periodic', or 'semi-persistent', trigger states for Reporting Setting(s) (configured with the higher layer parameter *reportConfigType* set to 'aperiodic') and/or Resource Setting for channel and/or interferenc e measurement on one or more component carriers are configured using the higher layer parameter *CSI-Aperiodi cTriggerStateList*. For a reporting setting for which the *CSI-ReportConfig* contains a list of sub-configurations pr ovided by the higher layer parameter *[csi-ReportSubConfigList]*, one or more trigger states can be configured wi th each indicating one or more of the sub-configurations. For aperiodic CSI report triggering, a single set of C SI triggering states are higher layer configured, wherein the CSI triggering states can be associated with any ca ndidate DL BWP. A UE is not expected to receive more than one DCI with non-zero *CSI request* field per slo t per cell. A UE is not expected to receive DCI with non-zero *CSI request* field within a cell group in a slot overlapping with any slot receiving DCI with non-zero *CSI request* field in the same cell group. A UE is not expected to be configured with different *TCI-StateId*'s for the same aperiodic CSI-RS resource ID configured in multiple aperiodic CSI-RS resource sets with the same triggering offset in the same aperiodic trigger state. A U E is not expected to receive more than one aperiodic CSI report request for transmission in a given slot per ce ll. A UE is not expected to receive an aperiodic CSI report request for transmission in a slot overlapping with any slot having an aperiodic CSI report transmission in the same cell group. If a UE does not indicate its capa bility of *CSItriggerStateContainingNonactiveBWP* the UE is not expected to be triggered with a CSI report for a non-active DL BWP. Otherwise, when a UE is triggered with a CSI report for a DL BWP that is non-active when expecting to receive the most recent occasion, no later than the CSI reference resource, of the associated NZP CSI-RS, the UE is not expected to report the CSI for the non-active DL BWP and the CSI report associa ted with that BWP is omitted. When a UE is triggered with aperiodic NZP CSI-RS in a DL BWP that is non-active when expecting to receive the NZP CSI-RS, the UE is not expected to measure the aperiodic CSI-RS. In the carrier of the serving cell expecting to receive that associated NZP CSI-RS, if the active DL BWP when r eceiving the NZP CSI-RS is different from the active DL BWP when receiving the triggering DCI,

EP 4 668 609 A1

- the last symbol of the PDCCH span of the DCI carrying the BWP switching shall be no later than the last symbol of the PDCCH span of the DCI carrying the CSI trigger, irrespective of whether they are i n the same carrier of a serving cell or not and irrespective of whether they are in the same SCS or not

- the UE is not expected to have any other BWP switching in that carrier after the last symbol of the P DCCH span covering the DCI carrying the CSI trigger and before the first symbol of the triggered NZP CSI-RS or CSI-IM.

- when the PDCCH reception includes two PDCCH candidates from two respective search space sets, as d escribed in clause 10.1 of [6, TS 38.213], the span that involves the PDCCH candidate that ends later i n time is used.

<omitted text>

5.2.1.5.2 Semi-persistent CSI/Semi-persistent CSI-RS

For semi-persistent reporting on PUSCH, a set of trigger states are higher layer configured by *CSI-SemiPersiste ntOnPUSCH-TriggerStateList,* where the CSI request field in DCI scrambled with SP-CSI-RNTI activates one of the trigger states. For a reporting setting for which the *CSI-ReportConfig* contains a list of sub-configurations, p rovided by the higher layer parameter [*csi-ReportSubConfigList*], one or more trigger states can be configured w ith each indicating one or more of the sub-configurations. A UE is not expected to receive a DCI scrambled w ith SP-CSI-RNTI activating one semi-persistent CSI report with the same *CSI-ReportConfigId* as in a semi-persis tent CSI report which is activated by a previously received DCI scrambled with SP-CSI-RNTI.

For semi-persistent reporting on PUCCH, the PUCCH resource used for transmitting the CSI report are configured by *reportConfigType.* Semi-persistent reporting on PUCCH is activated by an activation command as described in clause 6.1.3.16 of [10, TS 38.321], which selects one of the semi-persistent Reporting Settings for use by the UE on the PUCCH. For a selected reporting setting for which the *CSI-ReportConfig* contains a list of sub-configurations provided by the higher layer parameter [*csi-ReportSubConfigList*], [an/the] activation command can [also] select one or more sub-configurations to use by the UE as described in clause 6.1.3.X of [10, TS 38.321]. When the UE would transmit a PUCCH with HARQ-ACK information in slot *n* corresponding to the PDSCH carrying the activation command, the indicated semi-persistent Reporting Setting should be applied starting from the first slot that is after slot $n + 3N_{slot}^{subframe,\mu}$ where ] is the SCS configuration for the PUCCH.

EP 4 668 609 A1

As shown in [Table 13], one CSI report configuration may include at least one sub-configuration, and within each sub-configuration, a combination of at least one of the following configurations may be configured.

- A list of identifiers (IDs) of at least one CSI-RS resource(s)
- An antenna port (AP) subset indication composed of a bitmap
- An additional power offset delta from the energy per resource element (EPRE) offset between PDSCH and CSI-RS configured in the CSI resource configuration

The combination of at least one of the above configurations may be referred to as follows.

\* Type 2 spatial domain (SD) adaptation: a CSI report configuration including a sub-configuration in which a list of IDs of at least one CSI-RS resource is configured

\* Type 1 spatial domain (SD) adaptation: a CSI report configuration including a sub-configuration in which an AP subset indication composed of a bitmap is configured

\* Power domain (PD) adaptation: a CSI report configuration including a sub-configuration in which an additional power offset delta value is configured

\* Type 2 SD + PD adaptation: when, for at least one sub-configuration belonging to one CSI report configuration, a list of IDs of at least one CSI-RS resource and/or a power offset delta value is configured

\* Type 1 SD + PD adaptation: when an AP subset indication composed of a bitmap and/or a power offset delta value is configured for at least one sub-configuration belonging to one CSI report configuration

Among the combinations described above, in the case of Type 1 SD adaptation, Type 1 PD adaptation, or Type 1 SD + PD adaptation, each CSI-RS resource may be related to each of all sub-configurations configured within one CSI report configuration. In the case of Type 2 SD adaptation, each CSI-RS resource may be related to only a single sub-configuration among a plurality of sub-configurations within one CSI report configuration. In the case of Type 2 SD + PD adaptation, a list #1 of at least one CSI-RS resource configured in a first sub-configuration within the same CSI report configuration and a list #2 of at least one CSI-RS resource configured in a second sub-configuration may be identical to each other or disjoint from each other.

Meanwhile, when L sub-configurations are configured within one CSI report configuration, the UE may report, to the base station, CSIs corresponding to each of the L sub-configurations through one PUSCH or PUCCH. Among the L sub-configurations, N sub-configurations, where N is less than or equal to L, may be activated or triggered through a MAC-CE or DCI, and in this case, the UE may report, to the base station, CSIs corresponding to each of the N sub-configurations through one PUSCH or PUCCH. Specifically, for a CSI report configuration in which semi-persistent CSI reporting on PUCCH is configured, N sub-configurations among the L sub-configurations configured through a MAC-CE may be activated, and for a CSI report configuration in which semi-persistent CSI reporting or aperiodic CSI reporting on PUCCH is configured, N sub-configurations among the L sub-configurations configured through a DCI may be triggered.

Accordingly, the present disclosure proposes a configuration technique and a CSI reporting technique in which the number of a plurality of APs or a plurality of power control values are related to one CSI report configuration. That is, the present disclosure proposes various embodiments of specific configurations and CSI reporting for supporting the CSI framework. In the present disclosure, '/' means 'and', 'or', or 'and/or' depending on the context.

[Embodiment #1] in the configuration (e.g., CSI-ReportConfig) for a one CSI report, when CSI-RS resources or CSI-RS resource sets are related to the number of a plurality of APs or related to a plurality of power offsets, the CSI framework configuration and CSI report for that CSI report configuration

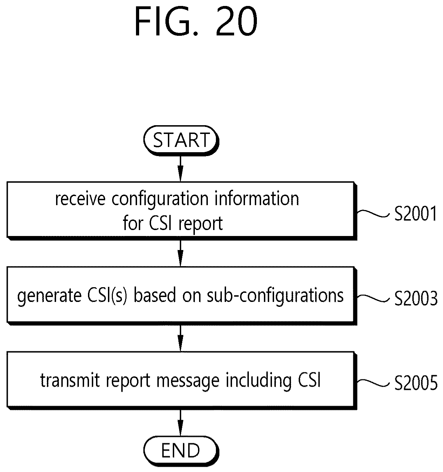

FIG. 20 illustrates an example of a procedure for performing CSI reporting based on sub-configurations according to an embodiment of the present disclosure. FIG. 20 exemplifies a method performed by the UE.

Referring to FIG. 20, in step S2001, the UE receives configuration information for CSI reporting. The configuration information may include information related to CSI-RS resources or resource sets, AP numbers, and power offsets related to CSI reporting. In addition, the configuration information may include a plurality of sub-configurations, and the sub-configurations may be related to subsets of different number of APs or power offset values.

In step S2003, the UE generates at least one CSI based on the sub-configurations included in the CSI report configuration. That is, the UE may receive at least one CSI-RS through CSI-RS resources related to the configuration information for CSI reporting, and may measure a channel or interference by using the received at least one CSI-RS. Then, the UE may generate at least one CSI including at least one item indicated by the configuration information. In this case, a CSI(s) per sub-configuration may be generated.

In step S2005, the UE transmits a report message including the at least one CSI. In other words, the UE may generate a report message including the at least one CSI and may transmit the report message to the base station through resources indicated by the configuration information.

As described with reference to FIG. 20, the configuration for CSI reporting may include a plurality of sub-configurations. In this case, the specific signaling of the sub-configurations may be implemented in various ways. The sub-configurations may be configured and signaled according to various embodiments described below.

One CSI report configuration may include various combinations of the number of sub-configurations, CSI resources, power offsets, etc. When CSI-RS resources or CSI-RS resource sets having different APs are related to one CSI report configuration or when a plurality of power offsets are related to one CSI report configuration,

Specifically, at least one CSI framework among the following methods may be introduced.

- Framework #1: A plurality of CSI-RS resource sets are linked to one channel measurement resource (CMR) or one interference measurement resource (IMR) in the CSI-ReportConfig. Here, the CMR may be configured by the resourcesForChannelMeasurement parameter, and the IMR may be configured by the csi-IM-ResourcesForInterference or nzp-CSI-RS-ResourcesForInterference parameter. For example, for the CMR, CSI-RS resource set #1 and CSI-RS resource set #2 may be linked, the CSI-RS resources belonging to CSI-RS resource set #1 may be configured with 16 antenna ports (APs), and the CSI-RS resources belonging to CSI-RS resource set #2 may be configured with 8 APs. Specifically, a plurality of CSI-RS resource set indexes may be related to one CSI-ResourceConfig ID, or a plurality of CSI-ResourceConfig IDs may be related to at least one of the CMR or the IMR.
- Framework #2: When one CSI-RS resource set linked to one CMR or one IMR in the CSI-ReportConfig is configured, one or more CSI-RS resource(s) having different attributes such as the number of APs and/or power offset within the CSI-RS resource set are configured. For example, for CSI-RS resource set #1 configured as the CMR, CSI-RS resource #1 belonging to CSI-RS resource set #1 may be configured with 16 APs, and CSI-RS resource #2 belonging to the same set may be configured with 8 APs. For example, for CSI-RS resource set #1 configured as the CMR, CSI-RS resource #1 belonging to CSI-RS resource set #1 may be configured with a power offset value #1, and CSI-RS resource #2 belonging to the same set may be configured with a power offset value #2.
- Framework #3: When one CSI-RS resource set linked to one CMR or one IMR in the CSI-ReportConfig is configured, some or all of the CSI-RS resource(s) within the set may be configured with the number of a plurality of APs and/or power offset values. For example, for CSI-RS resource set #1 configured as the CMR, CSI-RS resource #1 belonging to CSI-RS resource set #1 may be configured with up to 16 APs, and CSI reporting using at least one AP among them may be configured. Alternatively, CSI-RS resource #2 belonging to the same CSI-RS resource set #1 may be configured with a plurality of power offset values, and CSI reporting using all or part of the power offsets may be configured. Specifically, when the number of a plurality of APs may be configured for one CSI-RS resource, a CSI-RS-ResourceMapping IE may be configured for each number of APs.

In the configuration for CSI reporting (e.g., CSI-ReportConfig), L sub-configurations, where L is 2 or more, may be configured, and each sub-configuration may correspond to one of a spatial domain adaptation pattern or a power domain adaptation pattern. Here, the spatial domain adaptation pattern may correspond to a specific number of APs or an AP on/off pattern, or may correspond to a specific CSI-RS power value (e.g., a CSI-RS power value determined by the powerControlOffsetSS parameter, which is a power offset value between an SSS and a CSI-RS). In addition, the power domain adaptation pattern may mean a case where a power offset value (e.g., a power offset value determined by the powerControlOffset parameter, which is a power offset value between a PDSCH and a CSI-RS, or by the powerControlOffsetSS parameter, which is a power offset value between an SSS and a CSI-RS) is changed. According to one of options #1/#2/#3 described below, the UE may feedback to the base station a CSI report including CSIs corresponding to N sub-configurations among the L sub-configurations, where N is greater than or equal to 1 and less than or equal to L.

The present disclosure proposes a scheme for configuring a plurality of CSI-RS resources related to different numbers of APs within one CSI-RS resource set in framework #2. Once the CSI-RS resources corresponding to each sub-configuration are determined through the proposed technique described below, when a CSI report including the corresponding sub-configuration is configured/indicated, the CSI report may be generated by using the CSI-RS resources belonging to the corresponding sub-configuration.

- The CSI-RS resources belonging to the CSI-RS resource set are grouped, and for each CSI-RS resource, a group/subset index may be configured through the CSI-RS resource or CSI-RS resource set configuration. Here, the group/subset index may be referred to as an index, a group index, a subset index, or another term having an equivalent technical meaning. The index may be determined in various ways and is not limited to a specific method. For example, the index may be configured according to one of Alt#1-1/2-1/3-1 described below.

    * Alt#1-1: Through the configuration for each sub-configuration in the configuration for CSI reporting (e.g., CSI-ReportConfig), which index is related may be individually configured.
    * Alt#2-1: The sub-configuration index and the group/subset index may be related without individual configuration. For example, the same indexes may be related to each other, or the sub-configuration indexes may be related sequentially starting from the highest or lowest group/subset index.

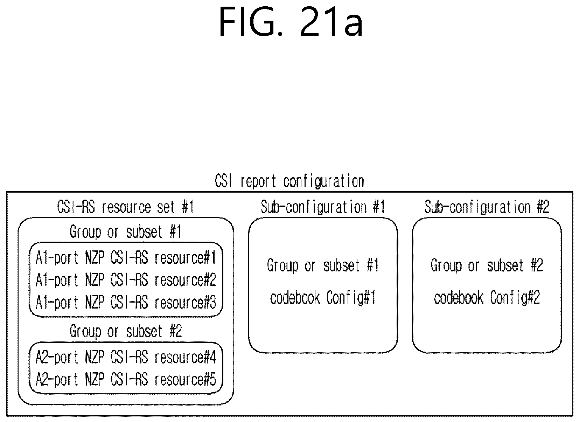

* Alt#3-1: When a different parameter (e.g., codebookConfig) within each sub-configuration may be configured with the number of APs, a group/subset index having the same number of APs as the number of APs configured in the parameter may be related to the sub-configuration index without individual configuration. For example, as shown in FIG. 21a, five CSI-RS resources may be configured within one resource set, three of the five may be configured with the number of A1 (e.g., 32) APs, and the remaining two may be configured with the number of A2 (e.g., 16) APs. The three resources configured with the number of A1 APs may be related to group/subset index #1 through grouping and resource configuration or resource set configuration. The two resources configured with the number of A2 APs may be related to group/subset index #2 through grouping and resource configuration or resource set configuration.

For example, in the configuration for each sub-configuration, the group/subset index to be related may be configured through a separate parameter. Alternatively, without a separate parameter, group/subset index #1 may be automatically related to sub-configuration #1, and group/subset index #2 may be automatically related to sub-configuration #2. Alternatively, without a separate parameter, when the codebookConfig parameter configured in sub-configuration #1 is related to the number of A1 APs, group/subset index #1 may be automatically related to sub-configuration #1, and when the codebookConfig parameter configured in sub-configuration #2 is related to the number of A2 APs, group/subset index #2 may be automatically related to sub-configuration #2. Here, the relationship between the codebookConfig parameter and the number of APs may be configured in various ways. For example, the relationship may be indicated through n1-n2 or n1-n2-codebookSubsetRestriction among the codebookConfig parameters. If the parameter value is configured as four-four, the AP number may be indicated as 32 (= $4 \times 4 \times 2$).

- According to another embodiment, the indexes of the group/subset for each resource may not be signaled separately and may be determined implicitly. For example, indexing may be performed such that group/subset index #1 is allocated to at least one resource related to the largest or smallest number of APs among the resources within the resource set, and the next group/subset index(es) are allocated to at least one resource related to the next largest number of APs. As another example, indexing may be performed such that group/subset index #1 is allocated to at least one resource configured with the same number of APs as that corresponding to the largest or smallest resource index, and the next at least one group/subset index is allocated to at least one resource configured with the same number of APs as that corresponding to the next largest or smallest resource index among the resource indexes to which the group/subset has not been allocated. After indexing is performed according to the implicit method described above, the resources corresponding to each sub-configuration may be mapped according to one of Alt#1-1/2-1/3-1 described above.

- Alternatively, the CSI-RS resource index values related within each sub-configuration may be directly configured.

- In the method described above, a constraint may be imposed that the number of APs for the CSI-RS resources belonging to the same group/subset must be identical. Alternatively, a constraint may be imposed that the number of APs for the CSI-RS resources belonging to the same sub-configuration must be identical.

The present disclosure proposes a scheme for configuring different power offset values for a plurality of CSI-RS resources within one CSI-RS resource set in Framework #2. The proposed technique may also be applied when the power offset values are configured differently among the CSI-RS resources, and may also be applied when other parameters or on/off settings per spatial/antenna element are configured/applied differently. Therefore, according to the embodiments described below, once the CSI-RS resources corresponding to each sub-configuration are determined, when a CSI report including the corresponding sub-configuration is configured/indicated, CSI may be generated by using the CSI-RS resources belonging to the corresponding sub-configuration.

First, the CSI-RS resources belonging to the CSI-RS resource set are grouped, and for each CSI-RS resource, a group/subset index may be configured through the CSI-RS resource configuration or CSI-RS resource set configuration.

* Alt#1-2: When configuring each sub-configuration in the configuration for CSI reporting (e.g., CSI-ReportConfig), which group/subset index is related may be configured separately.

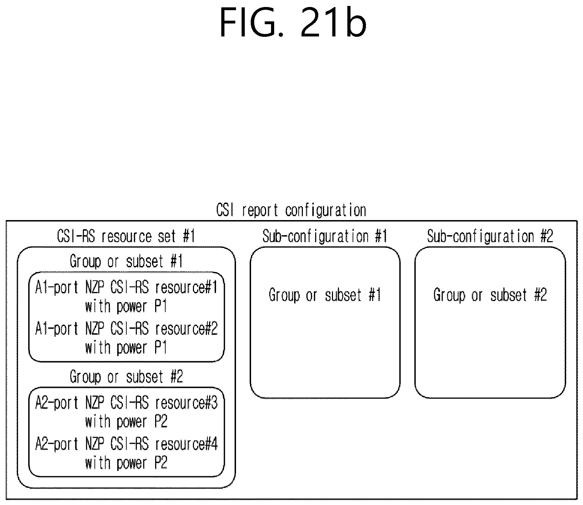

* Alt#2-2: The sub-configuration index and the group/subset index may be automatically related without individual configuration. For example, the same indexes may be related to each other, or the sub-configuration indexes may be related sequentially starting from the highest or lowest group/subset index. For example, as shown in FIG. 21b, four CSI-RS resources may be configured within one resource set, two of the four may be configured with a P1 power offset value, and the remaining two may be configured with a P2 power offset value. The two resources configured with the P1 power offset value may be configured as group/subset index #1 through grouping and resource configuration or resource set configuration, and the two resources configured with the P2 power offset value may be configured as group/subset index #2 through grouping and resource configuration or resource set configuration. The group/subset to be related within each sub-configuration may be configured through a separate parameter. Alternatively, without a separate parameter, group/subset index #1 may be automatically related to sub-configuration #1, and group/subset index #2 may be automatically related to sub-configuration #2.

- According to another embodiment, the group/subset index for each resource may be determined implicitly without separate signaling. For example, indexing may be performed according to a rule in which group/subset index #1 is allocated to at least one resource related to the largest or smallest power offset value among the resources within the resource set, and the next group/subset index(es) are allocated to at least one resource related to the next largest power offset value. As another example, indexing may be performed according to a rule in which group/subset index #1 is allocated to at least one resource configured with the same power offset value as that corresponding to the highest or lowest resource index, and the next at least one group/subset index is allocated to at least one resource configured with the same power offset value as that corresponding to the next highest or lowest resource index among the resource indexes to which the group/subset has not been allocated. After indexing is performed in such an implicit manner, the resources corresponding to each sub-configuration may be mapped according to one of Alt#1-2/2-2 described above.

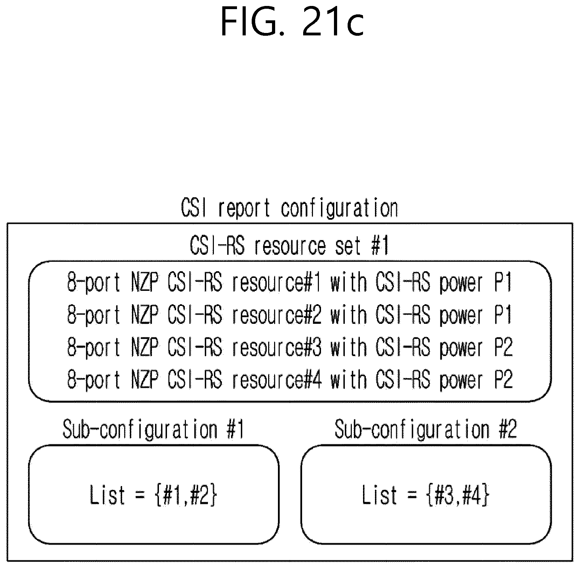

- Alternatively, the CSI-RS resource index values related within each sub-configuration may be directly configured. Specifically, as shown in FIG. 21c, a list of at least one CSI-RS resource index may be configured within each sub-configuration. Specifically, when the resource set includes four CSI-RS resources, the list {#1, #2} may be configured for sub-configuration #1, and the list {#3, #4} may be configured for sub-configuration #2. Through such configuration, sub-configuration #1 may be related to CSI-RS resource index #1 and CSI-RS resource index #2, and sub-configuration #2 may be related to CSI-RS resource index #3 and CSI-RS resource index #4.

If there is a sub-configuration for which the list is not configured, at least one CSI-RS resource related to the corresponding sub-configuration may be determined according to a predetermined rule. For example, all CSI-RS resources within the resource set may be related to the corresponding sub-configuration. As another example, CSI-RS resources that are not related to any sub-configuration may be related to the corresponding sub-configuration. For example, as shown in FIG. 21c, when the list {#1, #2} is configured for sub-configuration #1 and no list is configured for sub-configuration #2, CSI-RS resource #3 and CSI-RS resource #4, which are not related to any sub-configuration, may be automatically related to sub-configuration #2. As another example, when the number of CSI-RS resources within the resource set is the same as the number of sub-configurations, a one-to-one mapping between each sub-configuration and each CSI-RS resource may be performed without configuring a separate list. For example, the first resource may be related to sub-configuration #1, and the second resource may be related to sub-configuration #2.

The present disclosure proposes a scheme in CSI framework #3 for configuring some or all CSI-RS resources within one CSI-RS resource set with the number of a plurality of APs. Once the CSI-RS resources corresponding to each sub-configuration and the corresponding the number of APs are determined through the proposed technique, when a CSI report including the corresponding sub-configuration is configured/indicated, CSI may be generated by using the CSI-RS resources included in the corresponding sub-configuration and the corresponding the number of APs.

Each sub-configuration in the configuration for CSI reporting (e.g., CSI-ReportConfig) may be related according to a method such as Alt#A-1/B-1/C-1 described below.

* Alt#A-1) Information on whether the number of APs configured for each CSI-RS resource is for the whole or for a subset, and, if for a subset, information on which AP indexes constitute the subset (hereinafter referred to as 'port subset indication'), may be included. For example, for a CSI-ReportConfig configuration linked to a resource set composed of 32-port CSI-RS resources, sub-configuration #1 may be related to the whole 32 ports, and sub-configuration #2 may be related to only 16 ports composed of even indexes. Such a port subset indication may utilize signaling methods (e.g., bitmap) described in [Embodiment #2] below.

* Alt#B-1) Without a separate port subset indication, if another parameter (e.g., codebookConfig) within each sub-configuration may be configured with the number of APs, the number of APs configured in the parameter may be related, and in this case, the AP indexes constituting the number of APs may be predefined.

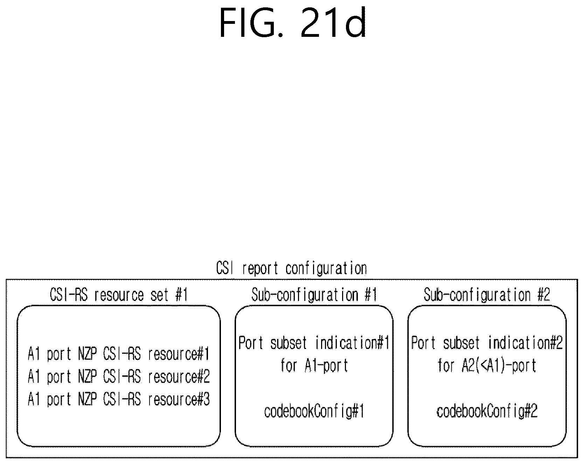

* Alt#C-1) As a hybrid method of Alt#A-1 and Alt#B-1, the number of APs may be implicitly configured through the method of Alt#B-1, and the AP indexes configuring the corresponding APs may be separately configured within each sub-configuration. For example, K entries for a method of configuring 16 ports among 32-port resources may be preconfigured. That is, entry #1 may be configured of 16 ports indexed with odd numbers, entry #2 may be configured of 16 ports indexed with even numbers, entry #3 may be configured of the upper 16 ports, and entry #4 may be configured of the lower 16 ports, and so on. Which entry among them is used to configure the ports may be configured through a separate parameter within the sub-configuration. As shown in FIG. 21d below, within one resource set, only CSI-RS resources having the number of A1 APs may be configured, and through the port subset indication, all the number of A1 APs may be related in sub-configuration #1, and a number of A2 APs, which is smaller than A1, may be related in sub-configuration #2.

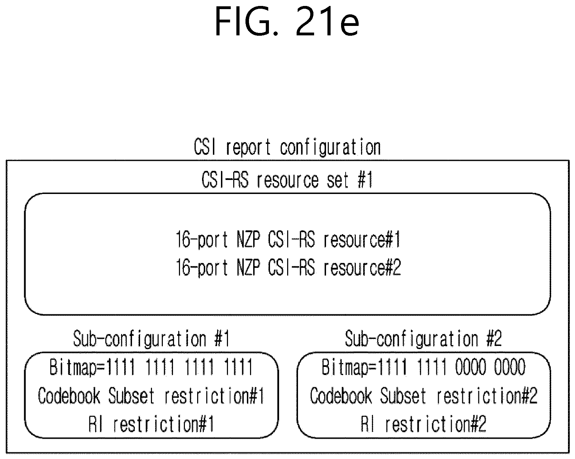

As shown in FIG. 21e, the port subset indication configuration may be configured as a bitmap, and each bit constituting the bitmap may correspond to one AP. If there is a sub-configuration for which the bitmap is not configured, the port subset related to the corresponding sub-configuration may be determined according to a predefined rule. For example, when a default value is predefined or configured through higher layer signaling, the corresponding default value may be applied. As another example, all APs configured in the CSI-RS resource configuration may be related to the corresponding sub-configuration.

In another method, for a resource set composed of A1-port CSI-RS resources, CSI-RS resources related to the different number of APs other than A1 may be configured, and a method similar to the CSI framework #2 may be applied. For example, for a resource set composed of A1-port CSI-RS resources, CSI-RS resources related to the number of A2 APs may be configured, the group/subset between CSI-RS resources having different numbers of APs may be configured through a separate parameter or by an implicit method, and the Alt#1-1/2-1/3-1 method may be applied to configure the sub-configurations. Here, the CSI-RS resources may be virtually configured.

The present disclosure proposes a specific configuration method in CSI framework #3 in which some or all CSI-RS resources within one CSI-RS resource set are configured with a plurality of power offsets. Here, the power offset may mean a power offset between a CSI-RS and a PDSCH. Once the CSI-RS resources corresponding to each sub-configuration and the corresponding power offset values are determined through the method described below, when a CSI report including the corresponding sub-configuration is configured/indicated, the CSI may be configured by using the CSI-RS resources belonging to the corresponding sub-configuration and the corresponding power offset values.

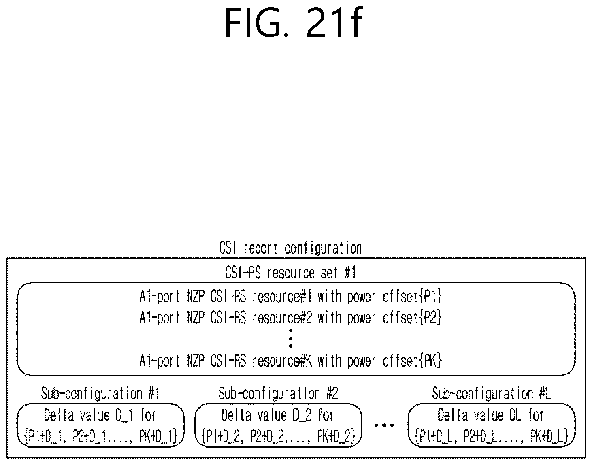

In the CSI-RS resource configuration, only one power offset value is configured as before, and within each sub-configuration, a delta value for the power offset may be additionally configured. That is, as shown in FIG. 21f below, when there is a resource set including a total of K CSI-RS resources, a delta value D_1 may be configured in sub-configuration #1. In this case, for each CSI-RS resource configuration, a value obtained by adding the delta value D_1 to the power offset configured for the corresponding CSI-RS resource may be applied to each CSI-RS resource. If a delta value is not configured within a certain sub-configuration, the power offset value configured in the existing CSI-RS resource configuration may be reused. In this case, the delta value may be regarded as being configured to 0.

In another method, unlike the conventional case, a plurality of power offset values may be configured in the CSI-RS resource configuration, and for each power offset value within the CSI-RS resource, a group/subset index may be configured. For example, the index may be configured according to a method such as AltA-2/B-2 described below.

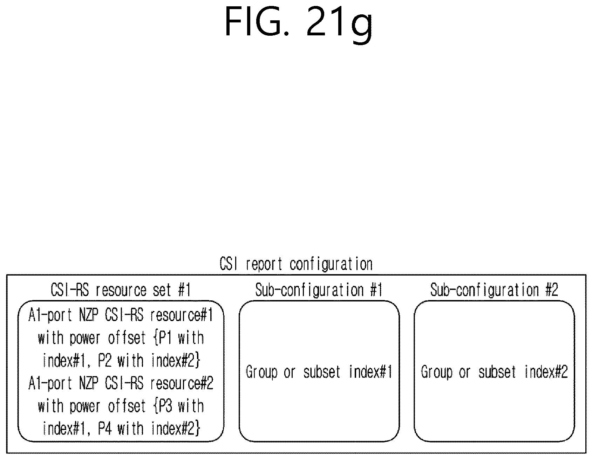

- AltA-2: In the configuration for CSI reporting (e.g., CSI-ReportConfig), which group/subset index is related to each sub-configuration may be configured separately.
- Alt#B-2: Without separate configuration, the sub-configuration index and the group/subset index may be automatically related. For example, the same indexes may be related to each other, or the sub-configuration indexes may be related sequentially starting from the highest or lowest group/subset index. For example, as shown in FIG. 21g, two power offset values may be configured for each CSI-RS resource within one resource set, and an index value corresponding to each power offset may be configured. The group/subset to be related within each sub-configuration may be configured through a separate parameter. As another example, without a separate parameter, group/subset index #1 may be automatically related to sub-configuration #1, and group/subset index #2 may be automatically related to sub-configuration #2.

As shown in FIG. 21g, a plurality of power offsets may be configured in the CSI-RS resource configuration, and within each sub-configuration, which power offset is related may be configured by an index value. For example, in sub-configuration #1, all resources within the resource set may be related, but power offsets P1 and P3 configured with index #1 may be applied, and in sub-configuration #2, all resources within the resource set may be related, but power offsets P2 and P4 configured with index #2 may be applied.

If there is a sub-configuration for which an index related to the power offset value is not configured, the power offset value related to the corresponding sub-configuration may be determined according to a predefined rule. For example, a specific power offset value may be determined by the rule, such as the power offset value corresponding to the first index, the power offset value corresponding to the last index, or the power offset value corresponding to the nth index for the nth sub-configuration. As another example, if no index is configured for the nth sub-configuration, the power offset value corresponding to the index (e.g., kth index) related to the (n-1)th sub-configuration and its immediately following index (e.g., (k+1)th index) may be related to the nth sub-configuration.

- According to another embodiment, the group/subset for each power offset may not be signaled separately and may be determined implicitly. For example, indexing may be performed according to a rule in which group/subset index #1 is allocated to the largest or smallest power offset value among the power offset values related to the resource, and the next group/subset index(es) are allocated to the next largest power offset value(s). As another example, indexing may be performed according to a rule in which group/subset index #1 is allocated to the power offset value configured first in the configuration order among the plurality of power offset values within the CSI-RS resource, and the next group/subset index(es) are allocated to the next configured power offset value(s). After indexing is performed in such an implicit manner, the resources corresponding to each sub-configuration may be mapped according to one of the methods of Alt#A-2/B-2 described above.

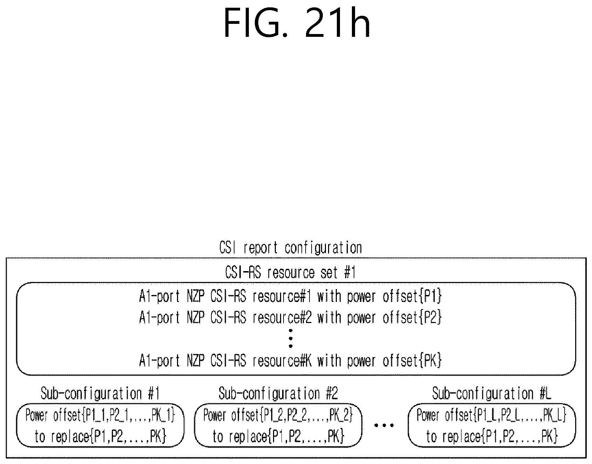

- Alternatively, within each sub-configuration, each CSI-RS resource index to be related and at least one related power offset value may be directly configured. For example, as shown in FIG. 21h, when there is a resource set including K CSI-RS resources, separate K power offset values may be configured within each sub-configuration, and the configured power offset values may override the power offset values configured in the CSI-RS resource configuration. If no power offset value is configured in a specific sub-configuration, the power offset value configured in the CSI-RS resource configuration may be maintained.

As described above, L sub-configurations greater than 1 may be configured in the configuration for CSI reporting (e.g., CSI-ReportConfig), and each sub-configuration may correspond to one of a spatial domain adaptation pattern or a power domain adaptation pattern. In the various embodiments described above, cases have been explained in which the sub-configurations correspond to only one pattern within one CSI-ReportConfig, but the present disclosure proposes a case where multiple patterns are mixed within one CSI-ReportConfig. By configuring the sub-configurations through a combination of multiple patterns within one CSI-ReportConfig and controlling the UE to feedback CSI reporting corresponding to the plurality of sub-configurations, the base station may apply efficient spatial or power domain adaptation based on the feedback information.

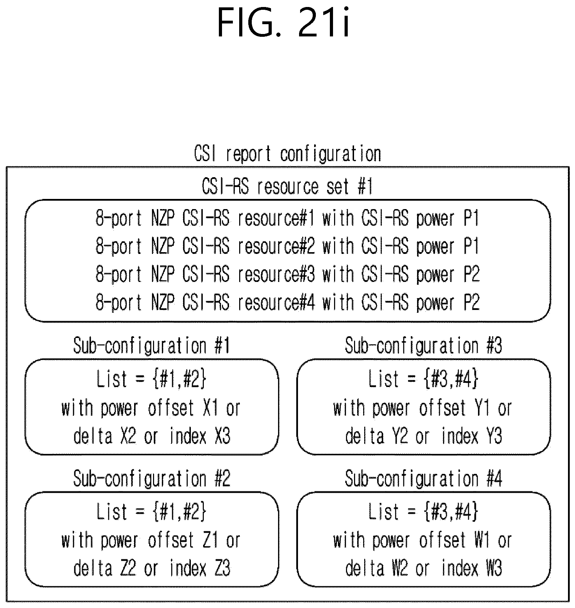

As in FIG. 21c of CSI framework #2, within one sub-configuration, CSI-RS resources having the same or similar power or antenna/spatial element on/off state may be related through a list parameter, and a plurality of sub-configurations may be included in one CSI-ReportConfig. In addition, as shown in FIG. 21i, at least some of the plurality of sub-configurations may share the same list while being configured with different power offset values. Here, the power offset means the power difference between the CSI-RS and the PDSCH.

The lists related to the plurality of sub-configurations included in one CSI-ReportConfig may be identical (e.g., in the example of FIG. 21i, the list is identical between sub-configuration #1 and sub-configuration #2) or disjoint (e.g., in the example of FIG. 21i, the list is disjoint between sub-configuration #1 and sub-configuration #3). In this case, between sub-configurations related to different CSI-RS resource ID lists (e.g., between sub-configuration #1 and sub-configuration #3 in the example of FIG. 21i), the lists are disjoint, and the power offset value configuration (e.g., a power offset value corresponding to each resource, a delta value, or an index value) may be the same or different.

Between sub-configurations sharing the same CSI-RS resource ID list (e.g., between sub-configuration #1 and sub-configuration #2 in the example of FIG. 21i), the power offset value configuration (e.g., a power offset value corresponding to each resource, a delta value, or an index value) may be configured differently. That is, one CSI-RS resource is related to the plurality of sub-configurations, and the plurality of sub-configurations are configured to different power offset values and may share a list.

If there is a parameter (e.g., list or CodebookConfig) that is not configured in a specific sub-configuration, the related parameter may be inherited from another sub-configuration having an association relationship. For example, the other sub-configuration may be the sub-configuration with the largest or smallest index, or the sub-configuration having the maximum index among the sub-configurations that have a smaller index than the specific sub-configuration and include the corresponding parameter configuration. As one example, in FIG. 21i, when no list is configured in sub-configuration #2, the list configuration may be inherited from sub-configuration #1, which has a lower index than sub-configuration #2 and has the list configured, so that the same list (e.g., {#1, #2}) as sub-configuration #1 may be applied to sub-configuration #2.

FIG. 21i illustrates an example in which spatial domain adaptation or power domain adaptation is applied separately, and depending on the presence of parameters, only one of spatial domain adaptation or power domain adaptation may be applied. For example, when no sub-configuration has a list parameter, this may mean power domain adaptation. As another example, when only separate lists are configured for each sub-configuration without any power-related parameters (e.g., in FIG. 21i, when only sub-configuration #1 and sub-configuration #3 are configured and no power offset-related parameter is configured), this may mean spatial domain adaptation.

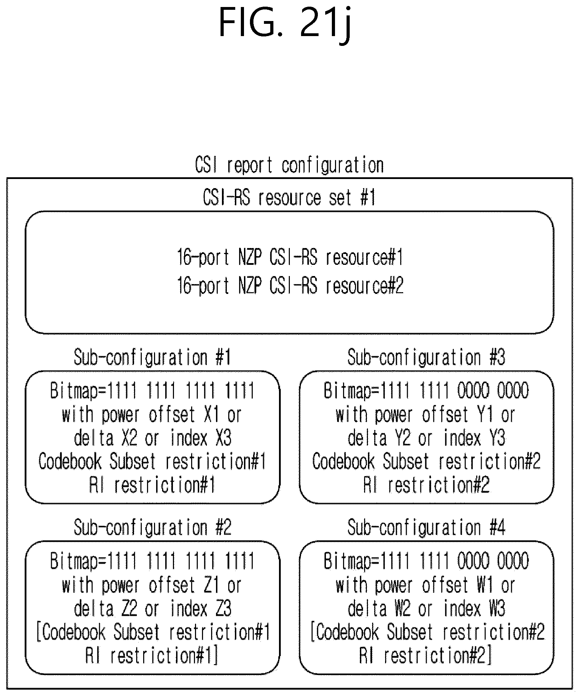

As in FIG. 21e of CSI framework #3, within one sub-configuration, a specific AP on/off pattern may be related through a bitmap parameter, and a plurality of sub-configurations may be included in one CSI-ReportConfig. Additionally, as shown in FIG. 21j, a method of configuring different power offsets while sharing the same bitmap may be used. Here, the power offset means the power difference between the CSI-RS and the PDSCH. In this case, similar to FIG. 21e, in the example of FIG. 21j, all CSI-RS resources may be related to all sub-configurations.

Between sub-configurations related to different bitmap information (e.g., between sub-configuration #1 and sub-configuration #3 in the example of FIG. 21j), the power offset value configuration (e.g., a power offset value corresponding to each resource, a delta value, or an index value) may be the same or different.

Between sub-configurations sharing the same bitmap (e.g., between sub-configuration #1 and sub-configuration #2 in the example of FIG. 21j), it may be preferable that the power offset values (e.g., a power offset value corresponding to each resource, a delta value, or an index value) be configured differently.

If there is a parameter (e.g., bitmap information or CodebookConfig information) that is not configured in a specific sub-configuration, the related parameter may be inherited from another sub-configuration having an association relationship (e.g., the sub-configuration with the largest or smallest index, or the sub-configuration having the maximum index among the smaller sub-configuration indexes in which the parameter is configured). For example, in FIG. 21j, when no bitmap is configured in sub-configuration #2, the bitmap configuration information may be inherited from sub-configuration #1, which has a lower index than sub-configuration #2 and includes the bitmap configuration, so that the same bitmap (e.g., all 1's) may be applied to sub-configuration #2.

FIG. 21j illustrates an example of separately operating (joint operation) spatial domain adaptation or power domain adaptation, and depending on the presence of parameters, only one of spatial domain adaptation or power domain adaptation may be applied. For example, when no sub-configuration has a bitmap parameter, this may simply mean power domain adaptation. As another example, when only bitmap information is configured for each sub-configuration without any power-related parameters (e.g., in FIG. 21j, when only sub-configuration #1 and sub-configuration #3 are configured and no power offset-related parameter is configured), this may simply mean spatial domain adaptation.

Considering the complexity of configuring one sub-configuration as in the embodiments described above, a scheme of borrowing the configuration of a sub-configuration between CSI-ReportConfigs may be used. For example, sub-configuration #1 of CSI-ReportConfig #1 and sub-configuration #1 of CSI-ReportConfig #2 may be related, and for sub-configuration #1 of CSI-ReportConfig #2, without separate configuration parameters, the configuration of sub-configuration #1 of CSI-ReportConfig #1 may be inherited as is.

As in CSI frameworks #1/#2/#3, when a plurality of identical or different numbers of APs are related within one CSI report, CodebookConfig information suitable for each number of APs needs to be configured. Here, the CodebookConfig information suitable for N numbers of APs may include a rank indicator (RI) restriction of N or less, or a codebook subset restriction corresponding to a codebook valid only for N numbers of APs or less. If CSI-RS resources for three numbers of APs (e.g., N1, N2, N3) are related within one CSI report, the CodebookConfig information may be configured according to Opt 1 and Opt 2 as follows.

* Opt 1) CodebookConfig information suitable for each number of APs N1/N2/N3 may be configured within the corresponding CSI report configuration.
* Opt 2) Only CodebookConfig information suitable for one representative number of APs among N1/N2/N3 may be configured within the corresponding CSI report configuration. Here, the representative number of APs may be separately configured, or may be configured as the number of APs related to the largest or smallest CSI-RS resource or CSI-RS resource set index, the number of APs related to the largest or smallest CSI-ResourceConfigId, or the number of APs related to the largest or smallest sub-configuration index among the activated N or the configured L.

When following Opt 2, a codebook configuration scheme corresponding to a number of APs other than the representative number of APs may be required. For example, the codebook corresponding to the number of APs may be assumed to be a specific single preconfigured codebook or a codebook corresponding to an identity matrix. Alternatively, the UE may null the codebook information corresponding to APs that do not apply among the codebook information corresponding to the representative number of APs, and then measure CSI such as a PMI. Alternatively, when the UE can recognize, through a port subset indication, that at least one port index is on or not muting, the codebook may be configured by using only the codebook subset restriction information corresponding to the port index. In addition, when a plurality of numbers of APs are related within one CSI report, the codebook for CSI reporting may be configured as a common type, or may be limited to a specific type of CSI codebook (e.g., Type 1 CSI codebook) in consideration of UE complexity.

When CodebookConfig information is individually configured for each sub-configuration, the Opt 1 method may be applied, and when CodebookConfig information is not individually configured for the sub-configurations or is configured only for some specific sub-configurations, the Opt 2 method may be applied. Specifically, when the Opt 2 method is applied, if the CodebookConfig information is not individually configured for the sub-configurations and is configured within the CSI report configuration by using a legacy parameter, the CodebookConfig information may be used to configure the CSI for each sub-configuration, and the CodebookConfig information may be used to configure the CSI for the sub-configurations for which the CodebookConfig information is not individually configured. In addition, when the Codebook-Config information is configured only for some or specific sub-configurations, the CodebookConfig information related to the specific sub-configuration for which the CodebookConfig information is configured may be used to configure the CSI for the sub-configurations for which the CodebookConfig information is not configured. Here, the specific sub-configuration may be the sub-configuration having the highest or lowest index, or may include a sub-configuration having the same spatial domain adaptation pattern or power domain adaptation pattern as the corresponding sub-configuration.

Alternatively, for a sub-configuration related to a specific number of APs (e.g., a sub-configuration in which the number of APs is configured as 1), the CodebookConfig information may not be configured.

In this case, when CSI-RS resources for three numbers of APs (e.g., N1, N2, N3) are related within one CSI report, the CSI report configuration and CSI reporting may be processed as follows.

- In the case of CSI framework #1, the Case 1-1/1-2 method may be used. Case 1-1) The CMR is related to CSI-RS resource set #1 and CSI-RS resource set #2, the CSI-RS resources belonging to set #1 are configured with the number of N1 APs, the CSI-RS resources belonging to set #2 are configured with the number of N2 APs, and the actual report may include CSI for N1, N2, and/or N3 (= N1 + N2) APs. Case 1-2) The CMR is related to CSI-RS resource set #1, CSI-RS resource set #2, and CSI-RS resource set #3, the CSI-RS resources belonging to set #1 are configured with the number of N1 APs, the CSI-RS resources belonging to set #2 are configured with the number of N2 APs, the CSI-RS resources belonging to set #3 are configured with the number of N3 APs, and the actual report may include CSI for N1, N2, and/or N3 APs.
- In the case of CSI framework #2, the Case 2-1/2-2 method may be used. Case 2-1) For CSI-RS resource set #1 configured as the CMR, CSI-RS resource #1 belonging to set #1 is configured with the number of N1 APs, CSI-RS resource #2 belonging to the same set is configured with the number of N2 APs, and the actual report may include CSI for N1, N2, and/or N3 (= N1 + N2) APs. Case 2-2) For CSI-RS resource set #1 configured as the CMR, CSI-RS resource #1 belonging to set #1 is configured with the number of N1 APs, CSI-RS resource #2 belonging to the same set is configured with the number of N2 APs, CSI-RS resource #3 is configured with the number of N3 APs, and the actual report may include CSI for N1, N2, and/or N3 APs.
- In the case of CSI framework #3, the Case 3-1/3-2 method may be used. Case 3-1) For CSI-RS resource set #1 configured as the CMR, CSI-RS resource #1 belonging to set #1 is configured with up to N1 APs, CSI reporting using at least N2 APs among them is configured, and the actual report may include CSI for N1, N2, and/or N3 (= N1 + N2 or = N1 - N2) APs. Case 3-2) For CSI-RS resource set #1 configured as the CMR, CSI-RS resource #1 belonging to set #1 is configured with up to N1 APs, CSI reporting using at least N2 APs and at least N3 APs among them is configured, and the actual report may include CSI for N1, N2, and/or N3 APs.

In one embodiment, one CSI report configuration may be related to one number of APs and/or a power offset value, and the number of APs and/or the power offset value may be configured differently for each CSI report configuration. That is, different CSI report configurations may be related to different numbers of APs and/or power offset values. However, in this case, as the number of CSI report configurations increases, the number of CSI report configurations may quickly reach the UE's capability for the maximum value (= $max_{CSI}$) of the number of CSI report configurations. Accordingly, activation/deactivation may be controlled per CSI report configuration or per group of CSI report configurations so that the number of CSI report configurations activated at a specific time is operated to be less than or equal to $max_{CSI}$. The base station may configure/indicate activation/deactivation for each CSI report configuration index, such as a CSI-ReportConfigId. For example, when it is configured/indicated that specific CSI report configuration indexes are activated, the UE may recognize that the remaining CSI report configuration indexes are deactivated. Alternatively, when it is configured/indicated that specific CSI report configuration indexes are deactivated, the UE may recognize that the remaining CSI report configuration indexes are activated. Alternatively, the base station may group a plurality of CSI report configurations and configure/indicate activation/deactivation information per group. For example, the base station may configure group #1 with CSI report configuration indexes #a/b/c and group #2 with CSI report configuration indexes #d/e/f, and after that, when the UE is configured/indicated that at least one CSI report configuration corresponding to a specific group index is activated, it may recognize that at least one CSI report configuration corresponding to the remaining group indexes is deactivated. Alternatively, when it is configured/indicated that at least one CSI report configuration corresponding to a specific group index is deactivated, the UE may recognize that at least one CSI report configuration corresponding to the group index is activated.

Under the CSI framework described, the CSI reporting method may be defined according to at least one of the following options. When a plurality of options are defined, one of the options may be used based on UE capability reporting and base station configuration.

- Option #1: CSIs considering a plurality of the number of APs and/or a plurality of power offset values configured in one CSI report may all be included in one CSI report. Alternatively, through base station configuration/indication, CSIs considering a plurality of the number of APs and/or power offset values may be included in one CSI report. Here, the number of APs and/or power offsets configured/indicated by the base station may be a subset of the number of APs and/or power offset values configured in the corresponding CSI report.
- Option #2: Even when a plurality of the number of APs and/or a plurality of power offset values are configured in one CSI report, CSIs considering a single number of APs and/or a single power offset may be included in one CSI report through base station configuration/indication.

- Option #3: Even when a plurality of the number of APs and/or a plurality of power offset values are configured in one CSI report, CSIs considering some of the number of APs and/or some of the power offsets may be included in one CSI report based on UE determination/decision. Here, the UE may use criteria preconfigured by the base station or previously configured criteria.

As a generalized method for the above options, in a CSI report configuration in which measurement of a total of X CSIs is configured, the UE may measure Y CSIs, where Y is less than or equal to X, and may include Z CSIs among the Y CSIs in the CSI report. Here, one CSI may correspond to one number of APs and one power offset value. In the examples of CSI frameworks #1/#2/#3 described above, namely Case 1-1/1-2/2-1/2-2/3-1/3-2, the value of X may be 3. Which Y CSIs the UE actually measures may be separately configured/indicated by the base station. However, if there is no separate configuration/indication, X may be interpreted as being equal to Y. In this case, the base station may configure/indicate the value of Y to the UE through L1/L2 signaling such as RRC signaling, DCI, or MAC-CE.

A criterion may be required for selecting Z CSIs among the Y CSIs measured by the UE. For example, the UE may select the best Z CSIs based on a specific CSI item (e.g., RI/LI/CRI/PMI/CQI). Here, the value of Z may be predefined or configured/indicated by the base station. The UE may select the best Z CSIs whose value of a specific CSI item (e.g., RI/LI/CRI/PMI/CQI) is greater than or equal to a threshold and include them in the CSI report. Here, the threshold may be predefined or configured/indicated by the base station. If the operation of selecting some CSIs based on the UE's own criteria is not configured/defined, Y and Z may be interpreted as being the same.

Furthermore, the UE may report information on which Z CSIs are selected among the Y CSIs. The information related to the Z CSIs may be transmitted, according to a CSI framework such as CSI framework #1/2/3, through information on a CSI-ResourceConfigId, a CSI-RS resource set index, a CSI-RS resource index, or the number of APs or power offset value. For example, the CSI-ResourceConfigId may be used in the case of CSI framework #1, the CSI-RS resource set index may be used in the case of CSI framework #1, the CSI-RS resource index may be used in the case of CSI framework #2, or the information on the number of APs or the power offset value may be used in the case of CSI framework #3. Meanwhile, in consideration that the payload size of CSI part 2 may change due to the above information, the information may be included in CSI part 1. In addition, all or a part (e.g., RI and/or CQI) of the Z CSIs may be reported as a differential value with respect to a specific CSI, that is, a reference CSI, thereby reducing the overhead of the entire CSI. Here, the reference CSI may be a CSI corresponding to the largest or smallest CSI-ResourceConfigId, CSI-RS resource set index, CSI-RS resource index, the number of APs, or the power offset value. In addition, the reference CSI may be determined by configuration/indication from the base station.

In measuring interference based on an IMR, it may be necessary to consider that the value changes depending on an on/off state or a power control of a spatial element of a neighbor cell. When the on/off state or the power value of the spatial element of the neighbor cells is different, averaging of interference values measured by IMRs may not be performed. For example, when the UE recognizes that, in an IMR on slot #n, a neighbor cell has turned on K1 spatial elements through on/off control of spatial elements, and that, in an IMR on slot #m, the neighbor cell has turned on K2 spatial elements through on/off control of spatial elements, the UE may not perform averaging between an interference value measured in the IMR on slot #n and an interference value measured in the IMR on slot #m. Here, an NES state, such as the on/off state or the power value of the spatial element of the neighbor cells, may be received through an inter-base station interface, and a serving cell may inform the UE of the NES state for the neighbor cells. The UE may determine whether to perform averaging on the measured interference values based on the NES state of the neighbor cells corresponding to each IMR.

Alternatively, when the base station configures NES-capable or configures an NES mode/state, for interference measurement, the UE may expect that a parameter for a time restriction for interference measurement (e.g., time-RestrictionForInterferenceMeasurements) is configured, or may perform CSI reporting on the assumption that the parameter is always configured.

An IMR may be classified into a CSI-IM-based and an NZP CSI-RS-based. A CSI-IM-based IMR may be configured to have a one-to-one mapping with an NZP CSI-RS configured as a CMR. That is, when a CMR and a CSI-IM-based IMR are configured within a CSI-ReportConfig, if the resource set associated with the CMR includes X NZP CSI-RS resources, the resource set related to the IMR includes X CSI-IM resources, and each resource is mapped one-to-one in a resource-wise manner based on a resource index. Accordingly, the UE measures CSI using the first NZP CSI-RS resource in the CMR and the first CSI-IM resource in the IMR. An NZP CSI-RS-based IMR is allowed only for aperiodic CSI reporting and may be allowed only when a single NZP CSI-RS resource is configured in the resource set for the CMR.

The present disclosure proposes an IMR configuration method based on CSI-IM. In the case of 2-4B based on CSI framework #2 of FIG. 21c or with a joint operation of spatial or power domain adaptation applied, sub-configurations are basically distinguished for each resource, or even if one resource is included in a plurality of sub-configurations, only the power offset (e.g., power offset between CSI-RS and PDSCH) is changed, so the same method as the conventional one may be applied. On the other hand, as in FIG. 21e or FIG. 21j based on CSI framework #3, when sub-configurations are configured by distinguishing all or a part of port subsets for one CSI-RS resource, it may be necessary to configure IMR differently for one CSI-RS resource. For example, as in FIG. 21e based on CSI framework #3, two NZP CSI-RS resources may be included in resources for CMR, sub-configuration #1 may be related to the two NZP CSI-RS resources, all 16 APs may be turned on, and sub-configuration #2 may be related to the two NZP CSI-RS resources, with only 8 APs turned on, on the assumption that such a configuration is made. When IMR based on CSI-IM is configured, in the conventional case, it was sufficient to configure only two IMRs, but even for the same NZP CSI-RS resource, it may be desirable to configure the corresponding IMR differently depending on whether the number of APs is 16 or 8. Therefore, when the number of NZP CSI-RS resources for CMR is N and the number of configured sub-configurations is L, a total of N×L CSI-IM resources may need to be configured. In this case, the mapping relationship between CSI-IM resources and NZP CSI-RS resources may be configured according to Alt-1 or Alt-2 below.

> \* Alt-1) Mapping is completed for NZP CSI-RS resources belonging to one sub-configuration, and then mapping is performed for the next sub-configuration.
> \* Alt-2) Mapping is completed for all sub-configurations for one NZP CSI-RS resource, and then mapping is performed for the next NZP CSI-RS resource.

For example, when four CSI-IM resources are configured in FIG. 21e, according to Alt-1, CSI-IM resource indexes #1/2 may be related to NZP CSI-RS resource indexes #1/2 within sub-configuration #1, and CSI-IM resource indexes #3/4 may be related to NZP CSI-RS resource indexes #1/2 within sub-configuration #2. In addition, according to Alt-2, CSI-IM resource indexes #1/2 may be related to NZP CSI-RS resource index #1 within sub-configuration #1 and to NZP CSI-RS resource index #1 within sub-configuration #2, and CSI-IM resource indexes #3/4 may be related to NZP CSI-RS resource index #2 within sub-configuration #1 and to NZP CSI-RS resource index #2 within sub-configuration #2. When spatial domain adaptation and power domain adaptation are combined as in FIG. 21j, as described above, the number of CSI-IM resources corresponding to the product of the number of NZP CSI-RS resources for CMR and the number of configured sub-configurations may need to be configured, and the mapping relationship of Alt-1 or Alt-2 may be defined.

According to another embodiment, a mapping relationship excluding sub-configurations in which power domain adaptation is configured may be defined. That is, since sub-configurations #1/#2 of FIG. 21j share the same port subset indicator (e.g., the same bitmap), the same CSI-IM resource may be shared. Specifically, even if a total of four sub-configurations are configured as in FIG. 21j, since there are only two different port subset indicators, CSI-IM resources for only four IMRs in total may be configured based on two NZP CSI-RS resources for CMR. In this case, when the above Alt-1 or Alt-2 is applied, according to Alt-1, CSI-IM resource indexes #1/2 may be commonly related to NZP CSI-RS resource indexes #1/2 within sub-configurations #1/#2, and CSI-IM resource indexes #3/4 may be commonly related to NZP CSI-RS resource indexes #1/2 within sub-configurations #3/#4. In addition, according to Alt-2, CSI-IM resource indexes #1/2 may be related to NZP CSI-RS resource index #1 within sub-configurations #1/#2 and to NZP CSI-RS resource index #1 within sub-configurations #3/#4, and CSI-IM resource indexes #3/4 may be related to NZP CSI-RS resource index #2 within sub-configurations #1/#2 and to NZP CSI-RS resource index #2 within sub-configurations #3/#4.

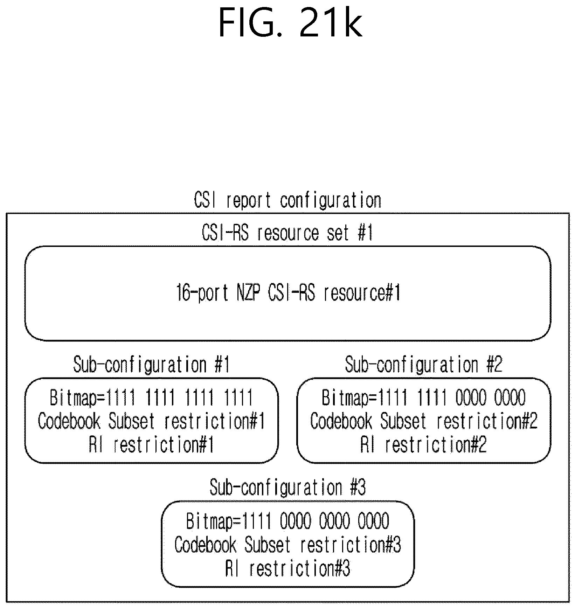

Next, the present disclosure proposes an IMR configuration method based on NZP CSI-RS. For convenience of explanation, it is assumed that NZP CSI-RS-based IMR configuration is allowed only when a single NZP CSI-RS for CMR or IMR is configured. In other words, in relation to CSI reporting, when one NZP CSI-RS is configured, NZP CSI-RS-based IMR configuration may be allowed. However, even when a plurality of NZP CSI-RSs for CMR or IMR are configured, the proposals described below may be extended and applied. For example, as in FIG. 21k below, when only one 16-port NZP CSI-RS resource for CMR is configured, a plurality (e.g., three) of sub-configurations having different port subset indicators may be configured. Alternatively, when only one 16-port NZP CSI-RS resource for CMR is configured, different power offset values (e.g., power offset between CSI-RS and PDSCH) may be related to each sub-configuration. Alternatively, when only one 16-port NZP CSI-RS resource for CMR is configured, a plurality of sub-configurations may be configured with various combinations of port subset indicators and/or power offsets (e.g., power offset between CSI-RS and PDSCH), for example, as in FIG. 21j. In this case, one of the following methods may be applied, and different methods may be applied depending on the sub-configuration composition.

- OptA: When a plurality of sub-configurations are configured, by allowing NZP CSI-RS based on IMR, the interference value may be measured/calculated based on a single NZP CSI-RS in calculating CSI corresponding to each sub-configuration. In particular, this method may be applied when the port subset indicator is the same among the plurality of sub-configurations and the power offset information is different.
- OptB: When a plurality of sub-configurations are configured, there may be a constraint that NZP CSI-RS-based IMR is not allowed and only CSI-IM-based IMR can be configured. In particular, this method may be applied when the port subset indicator is different among the plurality of sub-configurations. Alternatively, this method may be applied when at least one sub-configuration is configured with a port subset indicator. That is, when the UE is configured with a CSI-ReportConfig including a list of sub-configurations provided by csi-ReportSubConfigList, if each sub-configuration is configured with a power offset value and not configured with a port subset indicator, the UE may be configured with only an NZP CSI-RS for interference measurement.

- OptC: Even when a plurality of sub-configurations are configured, the UE may measure CSI through NZP CSI-RS-based IMR only when, for the CSI-ReportConfig, a single sub-configuration or a specific sub-configuration (e.g., a sub-configuration related to the full number of APs, or a sub-configuration having the largest or smallest index) is used for CSI reporting through DCI triggering. In addition, when CSI reporting corresponding to at least one sub-configuration other than the sub-configuration is performed, the UE may ignore the NZP CSI-RS-based IMR configuration and measure CSI using CSI-IM-based IMR.
- OptD: For each sub-configuration, the port subset indicator, i.e., bitmap information, of the NZP CSI-RS-based IMR may be separately configured. For example, when an 8-port NZP CSI-RS is configured for IMR, the base station may configure, for each sub-configuration or for some sub-configurations, an additional 8-bit bitmap to configure to the UE which at least one AP of the NZP CSI-RS is to be used for measuring/calculating interference. A sub-configuration for which the 8-bit bitmap information is not configured may be treated as if all eight ports are on or as if the 8-bit bitmap is set to all '1's. Alternatively, common bitmap information between the NZP CSI-RS for CMR and the NZP CSI-RS for IMR may be shared. In particular, when the number of ports or the maximum number of ports between the two CSI-RS resources is the same, the on/off of ports of the NZP CSI-RS for CMR and the NZP CSI-RS for IMR may be signaled through one common bitmap information configured within a specific sub-configuration.
- OptE: When the number of NZP CSI-RS resources for CMR is N and the number of configured sub-configurations is L, a total of N×L NZP CSI-RS resources for IMR may be configured. In this case, the mapping relationship between CSI-IM resources and NZP CSI-RS resources may follow OptE-1 or OptE-2 below.
- OptE-1: A method of performing mapping for NZP CSI-RS resources for CMR belonging to one sub-configuration and then performing mapping for the next sub-configuration.
- OptE-2: A method of performing mapping for all sub-configurations for one NZP CSI-RS resource for CMR and then performing mapping for the next NZP CSI-RS resource for CMR.

For example, when four NZP CSI-RSs for IMR are configured in FIG. 21e, according to OptE-1, NZP CSI-RS indexes #1/2 for IMR may be related to NZP CSI-RS resource indexes #1/2 for CMR within sub-configuration #1, and NZP CSI-RS indexes #3/4 for IMR may be related to NZP CSI-RS resource indexes #1/2 for CMR within sub-configuration #2. In addition, according to OptE-2, NZP CSI-RS indexes #1/2 for IMR may be related to NZP CSI-RS resource index #1 for CMR within sub-configuration #1 and to NZP CSI-RS resource index #1 for CMR within sub-configuration #2, and NZP CSI-RS indexes #3/4 for IMR may be related to NZP CSI-RS resource index #2 for CMR within sub-configuration #1 and to NZP CSI-RS resource index #2 for CMR within sub-configuration #2.

For example, when spatial domain adaptation and power domain adaptation are combined and configured as in FIG. 21j, similar to the proposals described above, NZP CSI-RSs for IMR in a number corresponding to the product of the number of NZP CSI-RS resources for CMR and the number of configured sub-configurations (e.g., in the example of FIG. 21j, a total of eight CSI-IM resources) may be configured, and the mapping relationship of OptE-1 or OptE-2 may be applied. In another method, a mapping relationship excluding sub-configurations in which power domain adaptation is configured may be defined. That is, since sub-configurations #1/#2 of FIG. 21j share the same port subset indicator, i.e., the same bitmap information, the NZP CSI-RS for same IMR may be shared. Specifically, even if a total of four sub-configurations are configured as in FIG. 21j, since there are only two port subset indicators distinguished by value, considering the two NZP CSI-RS resources for CMR, a total of four NZP CSI-RSs for IMR may be configured. In this case, when the above OptE-1 or OptE-2 is applied, according to OptE-1, NZP CSI-RS resource indexes #1/2 for IMR may be commonly related to NZP CSI-RS resource indexes #1/2 for CMR within sub-configurations #1/#2, and NZP CSI-RS resource indexes #3/4 for IMR may be commonly related to NZP CSI-RS resource indexes #1/2 for CMR within sub-configurations #3/#4. In addition, according to OptE-2, NZP CSI-RS resource indexes #1/2 for IMR may be related to NZP CSI-RS resource index #1 for CMR within sub-configurations #1/#2 and to NZP CSI-RS resource index #1 for CMR within sub-configurations #3/#4, and NZP CSI-RS resource indexes #3/4 for IMR may be related to NZP CSI-RS resource index #2 for CMR within sub-configurations #1/#2 and to NZP CSI-RS resource index #2 for CMR within sub-configurations #3/#4.

When the number of APs and/or the transmission power of an NZP CSI-RS or CSI-RS configured for CSI measurement or RRM measurement is changed, a change to the corresponding CSI or RRM measurement method may be considered. Specifically, when the UE performs CSI or RRM measurement based on an NZP CSI-RS configured for channel measurement and/or interference measurement, the UE may not use values measured before the number of APs and/or the transmission power (e.g., the CSI-RS power value configured through the powerControlOffsetSS parameter) is changed, and may re-perform measurement or re-perform averaging for CSI/RRM measurement after the number of APs and/or the transmission power value is changed. In particular, when no time-domain measurement restriction is configured, measurement or averaging may be re-performed. In other words, for CSI-RS occasions in which the number of APs and/or the transmission power has been changed, averaging for CSI/RRM measurement may not be performed.

That is, measurement values from CSI-RS occasions in which the changed number of APs and/or transmission power is applied may be excluded from averaging for CSI/RRM measurement. Alternatively, in performing averaging, an appropriate weighting may be applied according to the changed CSI-RS transmission power value, and CSI/RRM measurement may be performed including the CSI-RSs whose transmission power value has been changed. For example, when a CSI-RS boosted by 3 dB is included in averaging, a weighting factor of 1/2 may be applied to the corresponding CSI-RS. Alternatively, information related to a time stamp, such as the time at which the UE performed the measurement or the time at which averaging for the measurement was started, may be included in the measurement report.

In the CSI/RRM measurement method described above, a change in the number of APs and/or the transmission power of a CSI-RS or NZP CSI-RS may be determined according to the sub-configuration index in the CSI report configuration related to the corresponding CSI-RS or NZP CSI-RS. Here, the sub-configuration index may mean an activated index. Specifically, when L sub-configurations are configured within the corresponding CSI report configuration and the number of APs and/or the transmission power value is configured differently for each sub-configuration, it may be determined whether the number of APs and/or the transmission power value of the CSI-RS or NZP CSI-RS related to the relevant sub-configuration has changed according to which sub-configurations are configured/indicated/activated for reporting. Here, the number of APs and/or the transmission power value for each sub-configuration may be configured through the configuration method described above according to the CSI framework #1/#2/#3. For example, sub-configuration #1 may be configured with the number of A1 APs or a transmission power value P1, sub-configuration #2 may be configured with the number of A2 APs or a transmission power value P2, and sub-configuration #3 may be configured with the number of A3 APs or a transmission power value P3. In this case, when CSI reporting for all of sub-configurations #1/#2/#3 is configured/indicated/activated, and then, through additional signaling (e.g., group-common L1/L2 signaling, UE-specific L1/L2 signaling, UL grant for aperiodic CSI request, DCI for activating semi-persistent CSI reporting on PUSCH, MAC-CE for activating semi-persistent CSI reporting on PUCCH, etc.), CSI reporting is configured/indicated/activated only for sub-configuration #2, the UE may determine that the number of APs or the transmission power value of the CSI-RS or NZP CSI-RS configured in the corresponding CSI report configuration has changed. For example, when the sub-configuration index (e.g., the smallest sub-configuration index) for which CSI reporting is configured/indicated/activated within the CSI report configuration, or the combination of sub-configuration indexes for which CSI reporting is configured/indicated/activated, is changed, the UE may regard the number of APs or the transmission power value of the CSI-RS or NZP CSI-RS configured in the corresponding CSI report configuration as having been changed. Even if L sub-configuration indexes are configured, the corresponding measurement method may be applied only to a specific CSI report configuration. Whether the corresponding measurement method is applied may be separately configured for each CSI report configuration, or may be determined according to a predefined rule. Here, whether to apply the corresponding measurement method may be predetermined in advance by applying the method to a CSI reporting configuration related to a change in the number of APs, applying the method to a CSI reporting configuration related to a change in a CSI-RS power value, or not applying the method to a CSI reporting configuration related to a change in a power offset between a CSI-RS and a PDSCH.

Alternatively, when a plurality of sub-configuration indexes are configured or activated or triggered through a MAC CE or DCI, and for CSI report configuration where the number of APs and/or the CSI-RS resource transmission power value is configured differently for each sub-configuration, the UE may always expect that a parameter related to the time restriction for measurement (e.g., timeRestrictionForChannelMeasurements and/or timeRestrictionForInterferenceMeasurements) is configured, or may perform CSI reporting on the assumption that the corresponding parameter is always configured.

[Embodiment #2] method for indicating on/off of spatial elements and/or on/off of power offset values, and CSI reporting method based on the indication

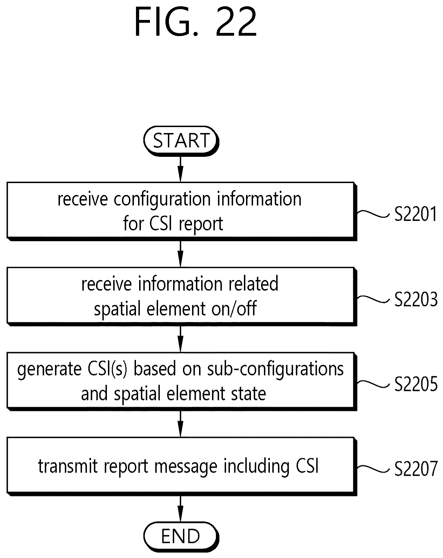

FIG. 22 illustrates an example of a procedure for reporting CSI based on an indication for on/off of spatial elements according to an embodiment of the present disclosure. FIG. 22 exemplifies a method performed by a UE.

Referring to FIG. 22, in step S2201, the UE receives configuration information for CSI reporting. The configuration information may include information related to CSI-RS resources or resource sets, the number of APs, and power offsets related to CSI reporting. In addition, the configuration information may include a plurality of sub-configurations, and the sub-configurations may be related to subset of different number of APs or power offset values.

In step S2203, the UE receives information related to the on/off state of spatial elements. The spatial elements are APs, and the received information indicates the on/off state of each AP. Specifically, the received information may include a bitmap including bits corresponding to the APs configured in the CSI-RS resource configured for the UE. Accordingly, the UE may check the on/off state of each AP configured in the CSI-RS resource based on the values of the bits included in the bitmap.

In step S2205, the UE generates at least one CSI based on the sub-configurations and the state of the spatial elements. That is, the UE may receive at least one CSI-RS through the CSI-RS resources related to the configuration information for CSI reporting, may measure a channel or interference using the received at least one CSI-RS, and then the UE may generate at least one CSI including at least one item indicated by the configuration information. In this case, at least one CSI for at least some of the sub-configurations selected based on the state of the spatial elements is generated. For example, CSI for a sub-configuration related to a CSI-RS resource configured with an AP in the off state may not be generated.

In step S2207, the UE transmits a report message including at least one CSI. In other words, the UE may generate a report message including at least one CSI and transmit the report message to the base station through a resource indicated by the configuration information.

As described with reference to FIG. 22, on/off of spatial elements, for example, APs, may be signaled. The procedure illustrated in FIG. 22 may be performed for on/off of a power offset instead of the spatial elements. Alternatively, the procedure illustrated in FIG. 22 may be performed for on/off of both the spatial elements and the power offset. Hereinafter, the present disclosure describes more specific operations for the procedure illustrated in FIG. 22.

According to the present embodiment, the energy of the base station may be saved by controlling on/off for each of N1 spatial elements or power offsets. Specifically, at least one of the following indication methods may be used through DCI and/or MAC CE.

-    On/off for each spatial element (e.g., AP) or for each spatial element group (e.g., AP group) may be indicated through a bitmap. For example, on/off for each spatial element or spatial element group may be controlled through an N1-bit bitmap. The mapping relationship between the bit location of the N1-bit bitmap and each AP of the N2-AP CSI-RS resource configured for the UE may be preconfigured. For example, when a mapping relationship is preconfigured such that the k1-th bit of the N1-bit bitmap is related to the k2-th APs among the 16 APs configured in CSI-RS resource index #1, the UE may recognize that the on/off state of the k2-th APs among the 16 APs configured in CSI-RS resource index #1 changes according to the k1-th bit information. In another method, for example, a mapping relationship between a specific bit section of the N1-bit bitmap and the 16 APs configured in CSI-RS resource index #1 may be preconfigured. Here, the specific bit section of the N1-bit bitmap may be from the k1-th bit to the k2-th bit position, or may be x1 bits starting from the k1-th bit. If {k2-k1+1} or x1 is 16, a one-to-one mapping relationship may be established between the N1-bit bitmap and the 16 APs, and the mapping order may be predefined/configured. For example, when a two-dimensional antenna structure is configured by the n1-n2 parameters, the mapping may be determined in an n1-first, n2-second relationship or an n2-first, n1-second relationship. If {k2-k1+1} or x1 is 4, a one-to-four (1-to-4) mapping relationship may be established between the N1-bit bitmap and the 16 APs, and the mapping order may be predefined/configured. Here, when a two-dimensional antenna structure is configured by the n1-n2 parameters, the mapping may be determined in an n1-first, n2-second relationship or an n2-first, n1-second relationship. When the UE recognizes, through AP on/off information, that all or some APs of CSI-RS resources belonging to a specific CSI report configuration are turned off, the UE may not perform the corresponding CSI reporting, or even if performed, an update of the CSI may not be required. Alternatively, when the UE recognizes, through AP on/off information, that all APs of all or some CSI-RS resources belonging to a specific CSI report configuration are turned on, the UE may perform the corresponding CSI reporting. Alternatively, when the UE recognizes, through AP on/off information, that all APs corresponding to at least one CSI-RS resource among the CSI-RS resources belonging to a specific CSI report configuration are turned on, the UE may perform the corresponding CSI reporting including the CSI corresponding to the at least one CSI-RS resource or at least some of them.

-    On/off for each power offset or for each power offset group may be indicated through a bitmap. As an example, on/off for each power offset or each power offset group may be controlled through an N1-bit bitmap. The mapping relationship between the bit location of the N1-bit bitmap and the power offset may be preconfigured. For example, when a mapping relationship is preconfigured such that the k1-th bit of the N1-bit bitmap is related to a power offset of -3dB, the UE may recognize that whether or not to allow CSI feedback corresponding to a -3dB power offset varies depending on the k1-th bit information. When the UE recognizes, through such power offset on/off information, that all or some of the power offset values configured in the CSI-RS resource belonging to a specific CSI report configuration are turned off, the UE may not perform the corresponding CSI reporting, or even if performed, an update of the CSI may not be required. Alternatively, when the UE recognizes, through power offset value on/off information, that all power offset values configured in all or some CSI-RS resources belonging to a specific CSI report configuration are turned on, the UE may perform the corresponding CSI reporting. Alternatively, when the UE recognizes, through power offset value on/off information, that some power offset values configured in all or some CSI-RS resources belonging to a specific CSI report configuration are turned on, the UE may perform the corresponding CSI reporting including the CSI corresponding to the allowed power offset values.

In addition to the signaling described above, a timer/duration and/or a time-domain pattern indicator indicating how long the indication is to be applied may be configured/indicated through DCI and/or MAC CE, or through pre-configuration/definition. For example, starting from a reference time point such as HARQ-ACK corresponding to DCI reception or a MAC CE, the indication may be applied for T2 slots after T1 slots, during which fewer than N1 APs are transmitted, and thereafter all N1 APs are transmitted. In another example, the indication may be applied for T2 slots during which fewer than N1 APs are transmitted, and for T3 slots during which all N1 APs are transmitted, with the T2/T3 slot pattern being indicated to repeat. For example, in even-indexed slots, all N1 APs may be transmitted, and in odd-indexed slots, at least one AP fewer than N1 APs may be transmitted.

When, as described above, the mapping relationship between the bit location of the N1-bit bitmap and each AP of the N2-AP CSI-RS resource configured for the UE is preconfigured and the corresponding CSI-RS is a ZP-CSI-RS, the rate-matching pattern of the PDSCH may be dynamically changed through AP on/off information. For example, when a 32-AP ZP-CSI-RS resource #1 is indicated as a RE-level rate-matching pattern through DCI for scheduling the PDSCH, the UE may determine, in receiving the PDSCH, that REs overlapping with the corresponding ZP-CSI-RS resource are not available for PDSCH reception. In this case, when it is configured/indicated through the N1-bit bitmap that some of the 32 APs are turned off, the UE may determine, in receiving the PDSCH, that only the REs corresponding to the APs that are not turned off or that are turned on are unavailable for PDSCH reception.

[Embodiment #31 method for efficiently performing beam management by relating CSI-RS resources or CSI-RS resource sets having different APs, or by relating a plurality of power offsets, for one CSI report configuration (e.g., CSI-ReportConfig)

Beam-related parameters may be various configured as information for managing beams. Below, a specific example of performing measurement based on beam-related parameter values related to measurement type, AP, and transmission power will be described.

In the present disclosure, the proposed beam management may be understood as an operation of measuring L1-RSRP and/or L1-SINR through a CSI-RS resource. Specifically, for beam management, a case is considered in which the reportQuantity parameter in the configuration for CSI reporting (e.g., CSI-ReportConfig) is set to 'cri-RSRP' or 'cri-SINR'. In addition, in the configuration of the related CSI-RS resource, the repetition parameter may be set to on or off.

The related CSI-RS resource may be configured with one AP or two APs, and the CSI report configuration and CSI reporting scheme proposed in [Embodiment #1] may be applied in consideration of AP on/off or spatial element on/off of the base station, and the spatial element on/off scheme proposed in [Embodiment #2] may be applied.

As an example of [Embodiment#1], if the CSI-RS resource(s) configured for beam management are configured with two APs, the configured L1-RSRP or L1-SINR value may be measured for each AP. In this case, when reporting the L1-RSRP or L1-SINR value measured for the CSI-RS resource, the L1-RSRP or L1-SINR value for each AP may be reported, and the L1-RSRP or L1-SINR value corresponding to a specific AP index value may be reported. Alternatively, when two APs are configured, all L1-RSRP or L1-SINR values corresponding to each AP index value may be reported. The AP index may be selected in various ways. For example, the UE may select one AP index value, or the base station may configure/indicate one AP index. In this case, the UE may include the AP index value in the CSI report.

The UE that receives signaling from the base station indicating that a specific AP of a CSI-RS resource configured for beam management is turned off or that a transmission power value of the CSI-RS resource is changed, or recognizes that a specific AP is turned off or that the transmission power value of the CSI-RS resource is changed, may, in reporting an L1-RSRP value and/or an L1-SINR value based on the CSI-RS resource, apply a specific offset value or separately report a value measured based on the CSI-RS resource. For example, the UE may respectively report a value measured based on a 2-AP CSI-RS and a value measured based on a 1-AP CSI-RS. Here, the offset value may be predefined (for example, defined as +3 dB) or may be configured/indicated by the base station. In addition, the signaling procedure between the UE and the base station may follow the AP on/off signaling method described above in [Embodiment #2]. In this case, in the present method, a change in the number of APs and/or transmission power of the CSI-RS or NZP CSI-RS may be determined according to a sub-configuration index or an activated sub-configuration index in a CSI report configuration related to the CSI-RS or NZP CSI-RS, and may be performed in the same manner as the method described above in [Embodiment #1].

When X CSIs related to beam management are configured in a single CSI report configuration, the CSI payload size may increase. To address this, it is possible to adjust the payload size for each CSI (e.g., reducing the payload size per CSI compared to a single CSI) according to the CSIs to be reported in the single CSI report configuration, thereby adjusting the overhead corresponding to the overall CSI report to a similar level. For example, as a single CSI, when it is configured to report N CRIs + N RSRPs or N SINRs, the value of N (for example, 1, 2, 3, or 4) may be preconfigured by higher layer signaling. If two CSI-RS resource sets are configured in a specific CSI report configuration and it is configured/indicated to report CRI and RSRP values or SINR values for each CSI-RS resource set, the UE may report floor(N/2) CRIs and floor(N/2) RSRPs or floor(N/2) SINRs for CSI-RS resource set #1, and {N-floor(N/2)} CRIs and {N-floor(N/2)} RSRPs or {N-floor(N/2)} SINRs for CSI-RS resource set #2, so that the total CSI payload size may be maintained at a constant level even if the number of CSIs changes. Here, according to another embodiment, the floor operation may be replaced with a ceiling operation or a round operation. As another example, when the value of N is configured to 4 and the UE transmits four CSIs through a single CSI report, it is possible to maintain the payload size at a similar level to that of a single CSI report by reporting, for each CSI, one CRI and one RSRP or one SINR. In another method, the base station may directly configure the value of N separately for each number of CSIs included in a single CSI report. For example, when one CSI is included in a single CSI report, the value of N may be configured to 4, and when the number of CSIs included in the CSI report is two, the value of N may be configured to 2, and the UE may select the value of N according to the actual number of CSIs included in the CSI report and perform beam management-related reporting. For example, the UE may report 4 CRIs + 4 RSRPs or 4 SINRs when there is 1 CSI, and may report, for each CSI, 2 CRIs + 2 RSRPs or 2 SINRs when there are 2 CSIs.

For energy saving of the base station, a method of turning off some antennas or panels may be considered. Some antennas or panels may be controlled in an on/off manner or may be controlled to be off only for a certain period of time. Considering such an operation, some beams, APs, or antenna elements of the base station may be deactivated according to antenna/panel turn-off. In this case, before actually performing the antenna/panel turn-off, the base station may configure/indicate to the UE measurement/reporting for each of a plurality of turn-off patterns. Whether to perform measurement/reporting while changing a reception beam of the UE that performs measurement related to beam management may depend on the UE implementation. However, when the beam shape of the base station changes significantly while performing antenna/panel turn-off, it may be effective for the UE to perform measurement while changing the reception beam. The UE may have difficulty in determining, according to the CSI report configuration, how much the beam shape of the base station changes for each turn-off pattern. Therefore, when configuring the CSI report configuration, it may be necessary to configure whether the UE performing measurement according to the configuration for each sub-configuration needs to change the reception beam. For example, in the CSI report configuration, the necessity of changing the reception beam may be configured through a separate parameter. In this case, when the UE receives signaling indicating that a reception beam change is necessary, the UE may, when performing measurement for beam management, change the reception beam each time for different sub-configurations and perform the measurement. On the other hand, when the UE receives signaling indicating that a reception beam change is not necessary, the UE may maintain the reception beam even when performing measurement according to different sub-configurations. In addition, the procedure related to whether to change the reception beam is not limited to a specific procedure and may vary depending on the UE implementation.

In another method, the necessity of changing the reception beam may be configured for each sub-configuration in the CSI report configuration through a separate parameter. When the UE receives signaling indicating that a reception beam change is necessary for a specific sub-configuration, the UE may apply a new reception beam to perform the measurement when performing the measurement corresponding to the sub-configuration. Such measurement may be performed for beam management. On the other hand, when the UE receives signaling indicating that a reception beam change is not necessary for a specific sub-configuration, the UE may not perform the reception beam change. The procedure related to whether to change the reception beam is not limited to a specific procedure and may vary depending on the UE implementation.

[Table 14]

**5.1.6.1.2 CSI-RS for L1-RSRP and L1-SINR computation**

If a UE is configured with a *NZP-CSI-RS-ResourceSet* configured with the higher layer parameter *repetition* set to 'on', t he UE may assume that the CSI-RS resources, described in Clause 5.2.2.3.1, within the *NZP-CSI-RS-ResourceSe*t are transmitted with the same downlink spatial domain transmission filter, where the CSI-RS resources in the *NZP-CSI-RS-ResourceSet* are transmitted in different OFDM symbols. If *repetition* is set to 'off, the UE shall n ot assume that the CSI-RS resources within the *NZP-CSI-RS-ResourceSet* are transmitted with the same downlin k spatial domain transmission filter.

If the UE is configured with a *CSI-ReportConfig* with *reportQuantity* set to 'cri-RSRP', 'cri-SINR' or 'none' and if the *CSI-ResourceConfig* for channel measurement (higher layer parameter *resourcesForChannelMeasurement)* contains a *NZP-CSI-RS-ResourceSet* that is configured with the higher layer parameter *repetition* and without the higher layer parameter *trs-Info,* the UE can only be configured with the same number (1 or 2) of ports with the higher layer parameter *nrofPorts* for all CSI-RS resources within the set. If the UE is configured with the CSI-RS resource in the same OFDM symbol(s) as an SS/PBCH block, the UE may assume that the CSI-RS and the SS/PBCH block are quasi co-located with 'typeD' if'typeD' is applicable. Furthermore, the UE shall not expect to be configured with the CSI-RS in PRBs that overlap with those of the SS/PBCH block, and the UE shall expect that the same subcarrier spacing is used for both the CSI-RS and the SS/PBCH block.

As shown in [Table 14], which is an excerpt from the TS 38.214 specification, a repetition parameter may be configured for a CSI-RS resource set configured for beam management. Here, the CSI-RS resource set may be configured for L1-RSRP or L1-SINR calculation. If the repetition parameter is configured to on, in receiving the CSI-RS resources belonging to the CSI-RS resource set, the UE assumes that the base station applies the same downlink spatial domain transmission filter. On the other hand, if the repetition parameter is configured to off, in receiving the CSI-RS resources belonging to the CSI-RS resource set, the UE assumes that the base station applies a different downlink spatial domain transmission filter for each CSI-RS resource. Therefore, when the repetition parameter is configured to on, the UE changes its reception beam or spatial domain reception filter to search for an optimal reception beam when receiving the CSI-RS resources. When the repetition parameter is configured to off, the UE may report to the base station which CSI-RS resource corresponding to the reception beam is optimal while fixing or changing the reception beam or spatial domain reception filter.

The UE may perform sufficient measurement even when using only a smaller number of CSI-RSs compared to a situation where all antenna elements, APs, panels, or TRPs are turned on. For example, in a CSI-RS resource set configured for beam management, six CSI-RS resources may be configured, and it may be preconfigured that the CSI-RSs are transmitted in a specific slot through symbol #0/2/4/6/8/10, respectively. In this case, the repetition parameter may be configured to on or off. Depending on which of the L sub-configurations is activated, the UE may perform beam management operation using all six CSI-RS resources, or may perform beam management operation using only some of the six CSI-RS resources. For example, when all L sub-configurations are activated, all six CSI-RS resources may be used, and when a smaller number N of sub-configurations than L is activated, only a smaller number of CSI-RS resources may be used. The number of CSI-RS resources to be used depending on whether at least one sub-configuration or a combination of sub-configurations is activated may be preconfigured or defined by a rule.

[Embodiment #4] method of reporting CSI in a TDM manner when CSI-RS resources or CSI-RS resource sets configured with different APs are related to each other, or a plurality of power offsets are related to each other, for a single CSI report configuration (e.g., CSI-ReportConfig)

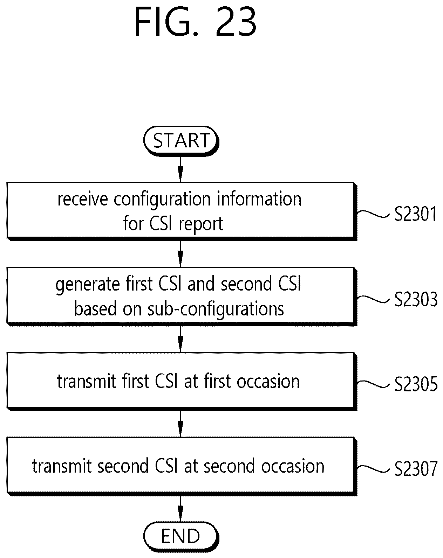

FIG. 23 illustrates an example procedure for transmitting CSI reporting in a TDM manner according to an embodiment of the present disclosure. FIG. 23 exemplifies a method performed by the UE.

Referring to FIG. 23, in step S2301, the UE receives configuration information for CSI reporting. The configuration information may include information related to CSI-RS resources or resource sets related to CSI reporting, the number of APs, and power offsets. In addition, the configuration information may include a plurality of sub-configurations, and the sub-configurations may be related subsets of different number of APs or power offset values.

In step S2303, the UE generates a first CSI and a second CSI based on the sub-configurations included in the CSI report configuration. That is, the UE may receive at least one CSI-RS through CSI-RS resources related to the configuration information for CSI reporting, and may measure a channel or interference using the received at least one CSI-RS. Then, the UE may generate at least one CSI including at least one item indicated by the configuration information. In this case, as CSIs for each sub-configuration, a plurality of CSIs including the first CSI and the second CSI may be generated.

In step S2305, the UE transmits the first CSI in a first occasion. In other words, the UE may generate and transmit a report message including the first CSI. According to one embodiment, the CSIs may be transmitted in a TDM manner, and the first CSI is transmitted in the first occasion among a plurality of occasions distinguished in the time domain. In this case, the first occasion may be indicated by the configuration information.

In step S2307, the UE transmits the second CSI in a second occasion. In other words, the UE may generate and transmit a report message including the second CSI. According to one embodiment, the CSIs may be transmitted in a TDM manner, and the second CSI is transmitted in the second occasion among the plurality of occasions distinguished in the time domain. In this case, the second occasion may be indicated by the configuration information.

When performing CSI reporting according to Option #1/3 of [Embodiment #1], since CSIs corresponding to the number of a plurality of APs and/or power offset values are included in a single CSI reporting information, the amount of CSI may significantly increase. In consideration of such UE complexity, the UE may transmit the CSIs corresponding to a single CSI report configuration in a distributed manner using TDM. For example, when a CSI for the number of APs 16 and a CSI for the number of APs 4 are included in a single CSI report configuration, the UE may transmit a CSI report including the CSI for the number of APs 16 in slot #n or symbol #n, and may transmit a CSI report including the CSI for the number of APs 4 in slot #n+k or symbol #n+k. Here, n may be an index determined in existing periodic, semi-persistent, or aperiodic CSI reporting, and k may be predefined with a specific value or configured/indicated by the base station.

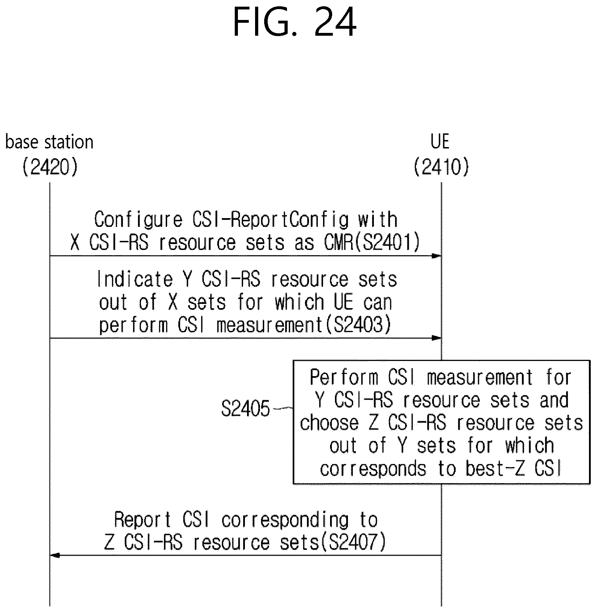

FIG. 24 illustrates an example of a CSI feedback procedure according to an embodiment of the present disclosure. FIG. 24 exemplifies signal exchange between the UE 2410 and the base station 2420.

Referring to FIG. 24, in step S2401, the base station 2420 transmits configuration information for CSI reporting with X CSI-RS resource sets to the UE 2410. That is, the base station 2420 configures measurement for all X CSIs through the CSI report configuration. One CSI may be a CSI corresponding to one number of APs and one power offset value.

In step S2403, the base station 2420 indicates Y CSI-RS resource sets for CSI measurement to the UE 2410. That is, the base station 2420 may separately configure/indicate which Y CSI-RS resource sets among the X CSI-RS resource sets are to be measured. For this purpose, L1/L2 signaling such as RRC signaling, DCI, or MAC-CE may be used.

In step S2405, the UE 2410 performs CSI measurement for the Y CSI-RS resource sets. Then, the UE 2410 selects Z CSI-RS resource sets. Here, the Z CSI-RS resource sets correspond to the best CSIs selected based on a specific CSI item (e.g., RI/LI/CRI/PMI/CQI, etc.). Subsequently, in step S2407, the UE 2410 transmits the CSIs corresponding to the Z CSI-RS resource sets to the base station 2420.

The present disclosure proposes an efficient CSI report configuration and CSI reporting method when the number of a plurality of APs are related to one CSI report configuration or a plurality of power offset values are related to one CSI report configuration in preparation for the base station turning antennas on and off or adjusting power values. By using the method or device proposed in the present disclosure, the base station may dynamically perform a procedure of turning off some antennas or reducing power values, thereby reducing the power consumption of the base station.

The proposed methods described above may be implemented independently, but may also be implemented in a form combining (or merging) some of the proposed methods. Information on whether the proposed methods are applied (or information on rules for the proposed methods) may be defined by a rule that the base station informs the UE through a predefined signal (e.g., a physical layer signal or a higher layer signal).

The present disclosure may be embodied in other specific forms without departing from the technical idea and essential features described herein. Therefore, the above detailed description should not be interpreted in a limiting sense in all aspects and should be considered as illustrative. The scope of the present disclosure should be determined by a reasonable interpretation of the appended claims, and all modifications within the equivalent scope of the present disclosure are included in the scope of the present disclosure. In addition, claims having no explicit reference relationship in the claims may be combined to constitute an embodiment, or may be included as new claims through amendment after filing.

## INDUSTRIAL APPLICABILITY

The embodiments of the present disclosure may be applied to various wireless access systems. Examples of various wireless access systems include 3GPP (3rd Generation Partnership Project) systems or 3GPP2 systems.

The embodiments of the present disclosure may be applied not only to the above various wireless access systems but also to all technical fields to which the above various wireless access systems are applied. Furthermore, the proposed method may be applied to mmWave and THz communication systems using an ultra-high frequency band.

Additionally, the embodiments of the present disclosure may be applied to various applications such as autonomous vehicles and drones.

## Claims

1. A method performed by a user equipment (UE) in a wireless communication system, the method comprising:

   receiving configuration information for a channel state information (CSI) report including a list of a plurality of sub-configurations; and
   transmitting, to a base station, CSI including measurement result based on at least one CSI-reference signal (RS) related to the CSI report,
   wherein the sub-configurations are distinguished by at least one of a different power offset or a different port subset, and
   wherein the at least one CSI-RS includes a none zero power (NZP) CSI-RS configured for interference measurement, when a port subset indicator is not configured in the sub-configurations.

2. The method of claim 1, wherein the at least one CSI-RS includes the NZP CSI-RS configured for the interference measurement, when a power offset is configured without the port subset indicator in the sub-configurations.

3. The method of claim 1, further comprising:
   receiving information for selecting interference measurement resources used for averaging to determine interference.

4. The method of claim 3, wherein the information includes information related to an on/off state or a power value of a spatial element of at least one adjacent cell.

5. The method of claim 1, wherein the sub-configurations are distinguished by different additional offset adjustment values for a power offset configured in CSI-RS resource related to the configuration information.

**6.** The method of claim 5, wherein the sub-configurations includes first sub-configuration configured as an offset adjustment value and second sub-configuration without configuration of an offset adjustment value, and wherein the second sub-configuration is interpreted as being configured to an offset adjustment value of 0.

**7.** The method of claim 1, wherein the NZP CSI-RS configured for the interference measurement is allowed when on NZP CSI-RS is configured in relation to the CSI report.

**8.** The method of claim 1, wherein the interference measurement is performed by NZP CSI-RS-based interference measurement, when only one of the sub-configurations is applied to the CSI report.

**9.** The method of claim 8, wherein the interference measurement is performed by CSI- interference measurement (IM)-based interference measurement, when at least one sub-configuration other than the one among the sub-configurations is applied to the CSI report.

**10.** The method of claim 7, wherein the one of the sub-configurations is triggered by downlink control information (DCI).

**11.** The method of claim 1, further comprising:
for at least one of the sub-configurations, receiving information indicating a portion of APs configured in the at least one CSI-RS, as at least one AP used for measuring interference.

**12.** A user equipment (UE) in a wireless communication system, comprising:

a transceiver; and
a processor connected to the transceiver,
wherein the processor is configured to:

receive configuration information for a channel state information (CSI) report including a list of a plurality of sub-configurations; and
transmit, to a base station, CSI including a measurement result based on at least one CSI-reference signal (RS) related to the CSI report,
wherein the sub-configurations are distinguished by at least one of a different power offset or a different port subset, and
wherein the at least one CSI-RS includes none zero power (NZP) CSI-RS configured for interference measurement, when a port subset indicator is not configured in the sub-configurations.

**13.** A communication device comprising:

at least one processor; and
at least one computer memory connected to the at least one processor and storing instructions that direct operations when executed by the at least one processor, the operations comprising:

receiving configuration information for a channel state information (CSI) report including a list of a plurality of sub-configurations; and
transmitting, to a base station, CSI including a measurement result based on at least one CSI-reference signal (RS) related to the CSI report,
wherein the sub-configurations are distinguished by at least one of a different power offset or a different port subset, and
wherein the at least one CSI-RS includes none zero power (NZP) CSI-RS configured for interference measurement, when a port subset indicator is not configured in the sub-configurations.

**14.** A non-transitory computer-readable medium storing at least one instruction, the at least one instruction being executable by a processor, the at least one instruction causing a device, the processor, to:

receive configuration information for a channel state information (CSI) report including a list of a plurality of sub-configurations; and
transmit, to a base station, CSI including a measurement result based on at least one CSI-reference signal (RS) related to the CSI report,
wherein the sub-configurations are distinguished by at least one of a different power offset or a different port subset, and

wherein the at least one CSI-RS includes none zero power (NZP) CSI-RS configured for interference measurement, when a port subset indicator is not configured in the sub-configurations.

# FIG. 1

# FIG. 2

200

208

202                                    206

**First Device**

| Processor(s) | Transceiver(s) |

| Memory(s) |

204

# FIG. 3

# FIG. 4

One Subframe

$14 \cdot 2^{\mu}$ OEDM Symbol

$k = N_{RB}^{\mu} N_{SC}^{RB} - 1$

$N_{RB}^{\mu} N_{SC}^{RB} - 1$ Subcarrier

$N_{SC}^{RB}$ Subcarrier

Resource Block

Resource Element
- In a resource grid, $(k, \bar{l})$
- In a resource block, $(k, l)$

$k = 0$

$l = 0$        $l = 14 \cdot 2^{\mu} - 1$

# FIG. 5

# FIG. 6

FIG. 7

# FIG. 8

# FIG. 9

# FIG. 10

UE                                              base station

CSI-Resourceconfig IE
(CSI-SSB-ResourceSetList)(S410)

SSB resource(S420)

beam report
(best SSBRI and L1-RSRP) (S430)

# FIG. 11

(a)

(b)

# FIG. 12

UE                                                                    base station

NZP CSI-RS resource set IE(S610)

receive CSI resource(s) configured
as Repetition 'ON',
through same Tx beam (S620)

determine Rx beam — S630

skip CSI report (No report)(S640)

# FIG. 13

UE                                                                    base station

NZP CSI-RS resource set IE(S710)

receive CSI resource(s) configured
as Repetition 'OFF',
through different Tx beam (S720)

determine best beam — S730

repot CSI (CRI/L1-RSRP)(S740)

# FIG. 14

# FIG. 15

(a)

(b)

# FIG. 16

UE                                          base station

SRS Config. IE
(usage BM, SRS-Spatial
Relation Info)(S1010)

| determine Tx beam
for SRS resource | ~S1020

transmit SRS through
determined Tx beam (S1030)

feedback(S1040)

# FIG. 17

```
        ┌─────────────┐
        │    START    │
        └──────┬──────┘
               │
               ▼
   ┌───────────────────────────┐
   │  IDENTIFY NES SOLUTION(S)  │
   └───────────────┬───────────┘
                   │
                   ▼
   ┌───────────────────────────┐
   │  PERFORM SIGNALING FOR NES │
   └───────────────┬───────────┘
                   │
                   ▼
   ┌───────────────────────────┐
   │ PERFORM OPERATIONS FOR NES │
   └───────────────┬───────────┘
                   │
                   ▼
        ┌─────────────┐
        │     END     │
        └─────────────┘
```

# FIG. 18

# FIG. 19a

on/off adaptation

# FIG. 19b

on/off adaptation

# FIG. 19c

on/off adaptation

# FIG. 20

```
                    ( START )
                        │
                        ▼
    ┌─────────────────────────────────────┐
    │      receive configuration information   │
    │              for CSI report              │ ∽ S2001
    └─────────────────────────────────────┘
                        │
                        ▼
    ┌─────────────────────────────────────┐
    │  generate CSI(s) based on sub-configurations │ ∽ S2003
    └─────────────────────────────────────┘
                        │
                        ▼
    ┌─────────────────────────────────────┐
    │     transmit report message including CSI   │ ∽ S2005
    └─────────────────────────────────────┘
                        │
                        ▼
                    ( END )
```

# FIG. 21a

CSI report configuration

| CSI-RS resource set #1 | Sub-configuration #1 | Sub-configuration #2 |
|---|---|---|
| **Group or subset #1**<br>A1-port NZP CSI-RS resource#1<br>A1-port NZP CSI-RS resource#2<br>A1-port NZP CSI-RS resource#3<br>**Group or subset #2**<br>A2-port NZP CSI-RS resource#4<br>A2-port NZP CSI-RS resource#5 | Group or subset #1<br><br>codebook Config#1 | Group or subset #2<br><br>codebook Config#2 |

# FIG. 21b

CSI report configuration

| CSI-RS resource set #1 | Sub-configuration #1 | Sub-configuration #2 |
|---|---|---|
| **Group or subset #1**<br><br>A1-port NZP CSI-RS resource#1 with power P1<br>A1-port NZP CSI-RS resource#2 with power P1<br><br>**Group or subset #2**<br><br>A2-port NZP CSI-RS resource#3 with power P2<br>A2-port NZP CSI-RS resource#4 with power P2 | Group or subset #1 | Group or subset #2 |

# FIG. 21c

CSI report configuration

CSI-RS resource set #1

8-port NZP CSI-RS resource#1 with CSI-RS power P1
8-port NZP CSI-RS resource#2 with CSI-RS power P1
8-port NZP CSI-RS resource#3 with CSI-RS power P2
8-port NZP CSI-RS resource#4 with CSI-RS power P2

Sub-configuration #1

List = {#1,#2}

Sub-configuration #2

List = {#3,#4}

# FIG. 21d

CSI report configuration

| CSI-RS resource set #1 | Sub-configuration #1 | Sub-configuration #2 |
|---|---|---|
| A1 port NZP CSI-RS resource#1<br>A1 port NZP CSI-RS resource#2<br>A1 port NZP CSI-RS resource#3 | Port subset indication#1<br>for A1-port<br><br>codebookConfig#1 | Port subset indication#2<br>for A2(<A1)-port<br><br>codebookConfig#2 |

# FIG. 21e

CSI report configuration

CSI-RS resource set #1

16-port NZP CSI-RS resource#1
16-port NZP CSI-RS resource#2

Sub-configuration #1

Bitmap=1111 1111 1111 1111
Codebook Subset restriction#1
RI restriction#1

Sub-configuration #2

Bitmap=1111 1111 0000 0000
Codebook Subset restriction#2
RI restriction#2

# FIG. 21f

CSI report configuration

CSI-RS resource set #1

A1-port NZP CSI-RS resource#1 with power offset{P1}
A1-port NZP CSI-RS resource#2 with power offset{P2}
⋮
A1-port NZP CSI-RS resource#K with power offset{PK}

Sub-configuration #1     Sub-configuration #2     Sub-configuration #L

Delta value D_1 for
{P1+D_1, P2+D_1,..., PK+D_1}

Delta value D_2 for
{P1+D_2, P2+D_2,..., PK+D_2}

...

Delta value DL for
{P1+D_L, P2+D_L,..., PK+D_L}

# FIG. 21g

CSI report configuration

| CSI-RS resource set #1 | Sub-configuration #1 | Sub-configuration #2 |
|---|---|---|
| A1-port NZP CSI-RS resource#1 with power offset {P1 with index#1, P2 with index#2} A1-port NZP CSI-RS resource#2 with power offset {P3 with index#1, P4 with index#2} | Group or subset index#1 | Group or subset index#2 |

# FIG. 21h

CSI report configuration

CSI-RS resource set #1

A1-port NZP CSI-RS resource#1 with power offset{P1}
A1-port NZP CSI-RS resource#2 with power offset{P2}
⋮
A1-port NZP CSI-RS resource#K with power offset{PK}

Sub-configuration #1
Power offset{P1_1,P2_1,...,PK_1}
to replace{P1,P2,...,PK}

Sub-configuration #2
Power offset{P1_2,P2_2,...,PK_2}
to replace{P1,P2,...,PK}

···

Sub-configuration #L
Power offset{P1_L,P2_L,...,PK_L}
to replace{P1,P2,...,PK}

# FIG. 21i

CSI report configuration

CSI-RS resource set #1

8-port NZP CSI-RS resource#1 with CSI-RS power P1
8-port NZP CSI-RS resource#2 with CSI-RS power P1
8-port NZP CSI-RS resource#3 with CSI-RS power P2
8-port NZP CSI-RS resource#4 with CSI-RS power P2

Sub-configuration #1

List = {#1,#2}
with power offset X1 or
delta X2 or index X3

Sub-configuration #3

List = {#3,#4}
with power offset Y1 or
delta Y2 or index Y3

Sub-configuration #2

List = {#1,#2}
with power offset Z1 or
delta Z2 or index Z3

Sub-configuration #4

List = {#3,#4}
with power offset W1 or
delta W2 or index W3

# FIG. 21j

CSI report configuration

CSI-RS resource set #1

16-port NZP CSI-RS resource#1
16-port NZP CSI-RS resource#2

Sub-configuration #1

Bitmap=1111 1111 1111 1111
with power offset X1 or
delta X2 or index X3
Codebook Subset restriction#1
RI restriction#1

Sub-configuration #3

Bitmap=1111 1111 0000 0000
with power offset Y1 or
delta Y2 or index Y3
Codebook Subset restriction#2
RI restriction#2

Sub-configuration #2

Bitmap=1111 1111 1111 1111
with power offset Z1 or
delta Z2 or index Z3
[Codebook Subset restriction#1
RI restriction#1]

Sub-configuration #4

Bitmap=1111 1111 0000 0000
with power offset W1 or
delta W2 or index W3
[Codebook Subset restriction#2
RI restriction#2]

# FIG. 21k

CSI report configuration

CSI-RS resource set #1

16-port NZP CSI-RS resource#1

Sub-configuration #1

Bitmap=1111 1111 1111 1111
Codebook Subset restriction#1
RI restriction#1

Sub-configuration #2

Bitmap=1111 1111 0000 0000
Codebook Subset restriction#2
RI restriction#2

Sub-configuration #3

Bitmap=1111 0000 0000 0000
Codebook Subset restriction#3
RI restriction#3

# FIG. 22

START

receive configuration information
for CSI report — S2201

receive information related
spatial element on/off — S2203

generate CSI(s) based on sub-configurations
and spatial element state — S2205

transmit report message including CSI — S2207

END

# FIG. 23

START

receive configuration information
for CSI report — S2301

generate first CSI and second CSI
based on sub-configurations — S2303

transmit first CSI at first occasion — S2305

transmit second CSI at second occasion — S2307

END

# FIG. 24

base station
(2420)

UE
(2410)

Configure CSI-ReportConfig with
X CSI-RS resource sets as CMR(S2401)

Indicate Y CSI-RS resource sets
out of X sets for which UE can
perform CSI measurement(S2403)

S2405 — Perform CSI measurement for
Y CSI-RS resource sets and
choose Z CSI-RS resource sets
out of Y sets for which
corresponds to best-Z CSI

Report CSI corresponding to
Z CSI-RS resource sets(S2407)

## INTERNATIONAL SEARCH REPORT

| International application No. |
| --- |
| **PCT/KR2024/002081** |

**A. CLASSIFICATION OF SUBJECT MATTER**

**H04B 7/06**(2006.01)i; **H04W 52/02**(2009.01)i; **H04B 7/08**(2006.01)i; **H04W 72/04**(2009.01)i; **H04B 17/345**(2015.01)i; **H04W 24/08**(2009.01)i; **H04W 52/36**(2009.01)i; **H04W 72/23**(2023.01)i

According to International Patent Classification (IPC) or to both national classification and IPC

**B. FIELDS SEARCHED**

Minimum documentation searched (classification system followed by classification symbols)

H04B 7/06(2006.01); H04L 1/00(2006.01); H04L 5/00(2006.01); H04W 52/14(2009.01); H04W 52/38(2009.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 서브-설정(sub-configuration), CSI 보고(CSI report), CSI-RS, 전력 오프셋(power offset), 포트 서브셋(port subset), NZP CSI-RS

**C. DOCUMENTS CONSIDERED TO BE RELEVANT**

| Category* | Citation of document, with indication, where appropriate, of the relevant passages | Relevant to claim No. |
| --- | --- | --- |
| A | WO 2017-161252 A1 (QUALCOMM INCORPORATED) 21 September 2017 (2017-09-21)<br>See paragraphs [0130]-[0165]; claims 1 and 7; and figures 13-19. | 1-14 |
| A | US 2020-0178240 A1 (ZHANG, Yu et al.) 04 June 2020 (2020-06-04)<br>See paragraphs [0070]-[0074]; claims 1 and 5-6; and figure 5. | 1-14 |
| A | KR 10-2264065 B1 (LG ELECTRONICS INC.) 11 June 2021 (2021-06-11)<br>See paragraphs [0291]-[0299]; and figure 8. | 1-14 |
| A | WO 2022-075745 A1 (LG ELECTRONICS INC.) 14 April 2022 (2022-04-14)<br>See paragraphs [0177]-[0186]; and figures 11-12. | 1-14 |
| A | WO 2023-014123 A1 (LG ELECTRONICS INC.) 09 February 2023 (2023-02-09)<br>See paragraphs [0364]-[0417]; and figures 13-15. | 1-14 |

☐ Further documents are listed in the continuation of Box C.    ☑ See patent family annex.

| | |
| --- | --- |
| \*   Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **27 May 2024** | **27 May 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/002081**

| Patent document cited in search report | | | Publication date (day/month/year) | Patent family member(s) | | | Publication date (day/month/year) |
|---|---|---|---|---|---|---|---|
| WO | 2017-161252 | A1 | 21 September 2017 | AU | 2017-234820 | A1 | 23 August 2018 |
| | | | | AU | 2017-234820 | B2 | 23 September 2021 |
| | | | | BR | 112018068539 | A2 | 29 January 2019 |
| | | | | CA | 3014782 | A1 | 21 September 2017 |
| | | | | CA | 3014782 | C | 23 May 2023 |
| | | | | CN | 108781095 | A | 09 November 2018 |
| | | | | CN | 108781095 | B | 27 July 2021 |
| | | | | EP | 3430732 | A1 | 23 January 2019 |
| | | | | JP | 2019-510416 | A | 11 April 2019 |
| | | | | JP | 6995769 | B2 | 17 January 2022 |
| | | | | US | 10812231 | B2 | 20 October 2020 |
| | | | | US | 2017-0272220 | A1 | 21 September 2017 |
| US | 2020-0178240 | A1 | 04 June 2020 | CN | 110741580 | A | 31 January 2020 |
| | | | | CN | 117062238 | A | 14 November 2023 |
| | | | | EP | 3639428 | A1 | 22 April 2020 |
| | | | | US | 11356989 | B2 | 07 June 2022 |
| | | | | WO | 2018-227538 | A1 | 20 December 2018 |
| | | | | WO | 2018-228523 | A1 | 20 December 2018 |
| | | | | WO | 2018-228523 | A9 | 18 February 2021 |
| KR | 10-2264065 | B1 | 11 June 2021 | CN | 110476391 | A | 19 November 2019 |
| | | | | CN | 110476391 | B | 28 December 2021 |
| | | | | EP | 3605926 | A1 | 05 February 2020 |
| | | | | EP | 3605926 | B1 | 09 March 2022 |
| | | | | KR | 10-2019-0117726 | A | 16 October 2019 |
| | | | | US | 11146369 | B2 | 12 October 2021 |
| | | | | US | 2020-0044802 | A1 | 06 February 2020 |
| | | | | WO | 2018-182256 | A1 | 04 October 2018 |
| WO | 2022-075745 | A1 | 14 April 2022 | EP | 4228340 | A1 | 16 August 2023 |
| | | | | KR | 10-2023-0079070 | A | 05 June 2023 |
| WO | 2023-014123 | A1 | 09 February 2023 | KR | 10-2024-0019250 | A | 14 February 2024 |

Form PCT/ISA/210 (patent family annex) (July 2022)